# EUROPÄISCHE PATENTANMELDUNG

(11) **EP 4 821 773 A2**
(43) Veröffentlichungstag der Anmeldung: **14.10.2026**
(21) Anmeldenummer: 26202179.3
(22) Anmeldetag: 04.05.2023
(51) Int. Cl.: B60T 13/68

(54) **FAHRDYNAMIKSYSTEM, FAHRZEUG SOWIE VERFAHREN ZUM BETREIBEN EINES FAHRDYNAMIKSYSTEMS**

(30) Priorität: 05.05.2022 DE 102022111061
(62) Dokumentnummer(n) der früheren Anmeldung(en) nach Art. 76 EPÜ: 23725589.8 / 4 519 113
(71) Anmelder: IPGATE AG, 8808 Pfäffikon SZ (CH)
(72) Erfinder: Leiber, Thomas, 22203 Rogoznica (HR)
(74) Vertreter: DTS Patent- und Rechtsanwälte PartmbB

(57) **Zusammenfassung**

Die Erfindung betrifft ein Fahrdynamiksystem für ein Fahrzeug, umfassend zumindest eine Radbremse (RB1, RB2. RB3, RB4) zum dissipativen Abbremsen eines Rades des Fahrzeugs; zumindest ein Bremsaggregat (EMB, EHB), das der zumindest einen Radbremse (RB1, RB2, RB3, RB4) zugeordnet und dazu eingerichtet ist, mittels der zumindest einen Radbremse (RB1, RB2, RB3, RB4) ein dissipatives Bremsmoment zu erzeugen; zumindest einen elektrischen Traktionsmotor (TM1, TM2, TM3, TM4), der dazu ansteuerbar ist, ein regeneratives Bremsmoment für zumindest ein Rad oder eine Achse des Fahrzeugs zu erzeugen; und eine zentrale Steuereinheit (M-ECUDomäne), die dazu eingerichtet ist, das zumindest eine Bremsaggregat (EMB, EHB) und den zumindest einen elektrischen Traktionsmotor (TM1, TM2, TM3, TM4) für eine Bremsfunktion in Kombination miteinander so anzusteuern, dass ein kombiniertes Bremsmoment mittels des zumindest einen Bremsaggregats (EMB, EHB) und des zumindest einen elektrischen Traktionsmotors (TM1, TM2, TM3, TM4) erzeugbar ist. Dabei betrifft die Bremsfunktion einen Regelfall, bei dem gleichzeitig ein Basisbremsmoment und ein geregeltes zusätzliches Bremsmoment gesteuert und/oder geregelt wird; wobei optional das Basisbremsmoment durch das zumindest eine Bremsaggregat (EMB, EHB) erzeugt wird und das geregelte zusätzliche Bremsmoment durch den zumindest einen elektrischen Traktionsmotor (TM1, TM2, TM3, TM4) erzeugt wird; oder das Basisbremsmoment durch den zumindest einen elektrischen Traktionsmotor (TM1, TM2, TM3, TM4) und das geregelte zusätzliche Bremsmoment durch das zumindest eine Bremsaggregat (EMB, EHB) erzeugt wird; oder das zumindest eine Bremsaggregat (EMB, EHB) und der zumindest eine elektrische Traktionsmotor (TM1, TM2, TM3, TM4) jeweils gemeinsam das Basisbremsmoment und das geregelte zusätzliche Bremsmoment erzeugen.

## Beschreibung

Die vorliegende Erfindung betrifft ein Fahrdynamiksystem (FDS) mit einem oder mehreren elektrischen Traktionsmotor(en) sowie einem leistungsstarken Zentralrechner, wobei über den Zentralrechner elektrische Traktionsmotor(en) und Bremsmodule (EMB, EHB) synchronisiert angesteuert werden, derart, dass bei Traktionsmotor(en) und Bremsmodul(en) (EMB, EHB) gemeinsam im der Basisbremse und Regelbetriebsfunktion angesteuert werden. Sie betrifft ferner ein Fahrzeug mit einem Fahrdynamiksystem sowie ein Verfahren zum Betreiben des Fahrdynamiksystems.

Vorzugsweise sind Bremse und elektrische Traktionsmotoren zusammengeführt als Radmodule oder E-Fahrzeugachsmodule, wobei über ein weiteres Rad- oder Achsmodulsteuergerät synchronisiert Radbremse und elektrischer Traktionsmotor angesteuert werden.

Die Automobilindustrie befindet sich in einem disruptiven Veränderungsprozess. Neben der zunehmenden Marktdurchdringung von Elektrofahrzeugen werden verschiedene Stufen des automatisierten Fahrens durchlaufen, dies sind zunächst: Stufe 3 - Hoch Automatisiertes Fahren (HAD), Stufe 4 - Voll Automatisiertes Fahren (FAD) und Stufe 5 - Autonomes Fahren (AD), wobei bei jeder Stufe die Anforderungen an die verwendeten Systeme zur Regelung der Fahrdynamik steigen.

Ab Stufe 4 (FAD) werden für ausreichende Systemverfügbarkeit mindestens 2-fach, besser 3-fache Redundanzen erwartet, z. B. bei den Pedalsensoren mit der Regel "2 aus 3". Weiter wird für das automatisierte Fahren ab Stufe 3, insbesondere ab Stufe 4 eine redundante radindividueller Bremsmomentregelung gefordert. In Stufe 5 (AD) fallen das Lenkrad sowie Brems- und Gaspedal ggf. komplett weg und das Fahrzeug wird ausschließlich über einen Zentralrechner gesteuert. Da der Fahrer beim Ausfall von Systemen nicht mehr über ein Bremspedal bzw. durch ein Lenkrad eingreifen kann, wird eine fehlersichere 2-Fach- bzw. 3-Fach-Redundanz mit Degrading aller Kernfunktionen der Bremse (Bremskraftverstärkung, ABS, Fahrzeugstabilisierung) und Lenkung gefordert.

Zudem wird die Domänenstruktur eingeführt mit Steuergeräten/Domänen für die Fahrwerkskontrolle, welche die Bremse, Elektroantrieb, Lenkung und optional auch die Dämpfung umfasst. Durch die zentrale Steuerung übernimmt der Fahrzeughersteller die Verantwortung über die oben genannten Aggregate und kann in Folge auch Synergien optimal ausschöpfen. Er muss aber gleichzeitig die erforderlichen Redundanzen sicherstellen, weil aufgrund des Haftungsübergangs vom Fahrer des Fahrzeuges auf den Hersteller des Fahrzeuges neue Anforderungen erfüllt werden müssen. Zudem sollen Fahrzeuge des autonomen Fahrens der Stufe 3-5 nicht an den Seitenstreifen der Fahrbahn abgestellt werden; zumindest ist ein Limp-Home-Mode mehr als gewünscht, eher sogar eine Fortsetzung des Betriebes bei Teilausfall, da autonom fahrende Fahrzeuge eine hohe Nutzungsdauer anstreben.

Als Reibbremssystem sind elektrohydraulische Bremssysteme (kurz: EHB) oder elektromechanische Bremse (kurz: EMB) sowie Fundamentbremse mit Bremsbacken und Bremsscheiben verfügbar. Die EMB hat gegenüber der EHB den Nachteil der höheren Kosten, da für jedes Rad eine EMB erforderlich ist; sie hat jedoch den Vorteil, dass die EMB viel einfacher zentral gesteuert werden kann, da eine zentrales Fahrdynamikregelungssystem FDS mit ABS und ESP-Funktion ohne Abhängigkeiten von Bremsenherstellern entwickelt werden kann und die Integration in die Domäne und Applikation einer elektromechanischen Bremse deutlich einfacher ist als eine elektrohydraulische Bremse. Dies gilt insbesondere im Vergleich zu Standard-ABS-Systemen mit offenen Bremskreisen, wo sehr aufwändige und adaptiv lernende Druckschätzmodelle erforderlich sind. Die zunehmende Verbreitung der EMB ist daher nicht primär stückkostenmotiviert, sondern getrieben durch einen niedrigeren Applikationsaufwand und einfachere Integration.

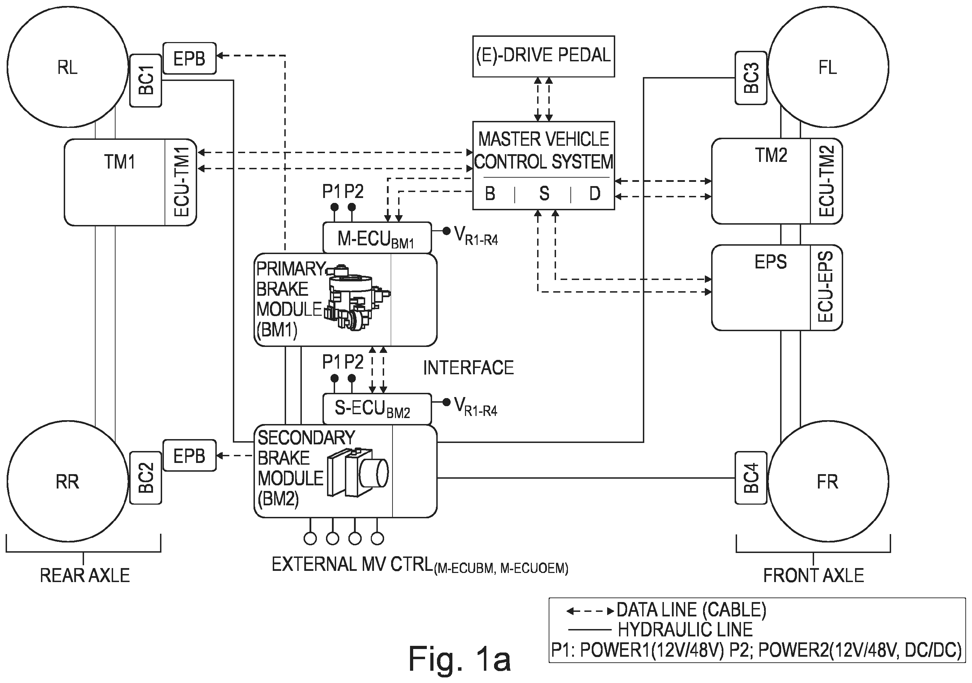

Eine typische Fahrzeugarchitektur mit E-Antrieben für SAE Stufe 3-4 ist in Fig. 1a dargestellt (Figur 1a wurde hier entnommen: https://www.lsp-ias.com/ourworld/chassis-control). Hier wird beispielsweise gemäß WO 2019/214833 A1 ein elektrisches Reibbremssystem mit einem Bremskraftverstärker und einer ESP-Einheit eingesetzt.

Ferner ist aus der WO 2019/002475 A1 bekannt, dass die Bremse als Drucksteller, zentral gesteuert über einen Zentralrechner, nämlich eine Domäne, gesteuert werden kann, so dass die Bremsmomente im Zentralrechner bestimmt werden und die elektrohydraulische Bremse lediglich als Drucksteller zur Ausführung eines Sollbremsmomentes oder eines Solldruckes dient.

Ferner ist aus der WO 2020/165255 A1 eine elektrohydraulische Bremsanlage bekannt, bei welcher bei Ausfall oder Teilausfall der Druckversorgungseinrichtung, die Bremsung über einen elektrischen Traktionsmotor und/oder eine elektrische Parkbremse durchgeführt oder unterstützt wird.

Ferner ist aus WO 2019/215278 A2 die sog. Combi-Bremse bekannt, wo an der Vorderachse eine elektrohydraulische Bremse (EHB) und an der Hinterachse eine elektromechanische Bremse (EMB) oder eine hydraulisch unterstützte elektromechanische Bremse (H-EMB) eingesetzt wird.

In der WO 2020/128081 wird ein E-Achsmodul verfolgt, wo eine Drucksteller die hydraulischen Verbraucher, insbesondere die hydraulische Radbremse mit Druck versorgt.

In der WO 2018/215397 A1 wird die Idee der zentralen Steuerung von Elektromotor und elektrohydraulischer Bremse verfolgt, wobei der Schwerpunkt auf eine minimale Zeit zum Erreichen des Blockierdrucks (time-to-lock; kurz: TTL) gelegt wird. Zudem wird eine Funktion des Bremsens ausschließlich über den elektrischen Traktionsmotor abhängig von der Fahrsituation durch Nutzung eines Fahrzeugmodells eingeführt.

In der WO 2021/037658A1 wird eine weitere Idee der zentralen Steuerung von elektrischem Traktionsmotor und elektrohydraulischer Bremse realisiert, nämlich die zentrale Steuerung der elektrischen Bremskraftverteilung bei gleichzeitiger Rekuperation über den Elektromotor.

Eine gesamtheitliche Optimierung der Fahrdynamikregelung sowie Kostenreduzierung durch Nutzung von Synergien von EMB oder EHB kombiniert mit elektrischen Traktionsmotoren wurde im Stand der Technik allenfalls rudimentär untersucht, da *Brake-by-Wire*-Bremse und Abbremsung über elektrische Traktionsmotoren als separate Einheiten betrachtet werden und das Abbremsen durch elektrische Traktionsmotoren aus Sicherheits- und Haftungsgründen auf eine Verzögerung von ca. 0,3 g beschränkt wurde, insbesondere um sicherheitskritische Fahrsituationen zu vermeiden. Ferner sind Batterien technisch limitiert in der Aufnahme von Energie, insbesondere bei vollem Batterieladezustand (SOC), wenn über den elektrischen Traktionsmotor regenerative Energie erzeugt wird, die eine Energiesenke benötigt. Das Synergiepotential einer gemeinsamen Nutzung zwischen Antriebsmotoren und Bremse ist sehr hoch, weil die elektrischen Antriebsmotoren durch die Hochvolttechnik (insbesondere 400 V oder 800 V) in der Entwicklung der E-Fahrzeuge immer leistungsstärker und dynamischer werden und damit das Potential haben, maßgeblich zur Verkürzung eines Bremswegs beitragen zu können. Insbesondere der kombinierte Einsatz von elektrischen Traktionsmotoren bei hochdynamischen Bremsregelungsvorgängen, insbesondere der ABS-Regelung bietet ein sehr großes Potential für neuartige innovative Ansätze.

Zudem wurden das Potential zum Downsizing- und das Kostensenkungspotential sowie Funktionsverbesserung durch eine zentrale Steuerung mit gleichzeitiger Nutzung verschiedener Aggregate beim Beschleunigen und Bremsen noch nicht untersucht.

Ferner ist der Applikationsaufwand einer Bremse aktuell durch sehr umfangreiche Applikationsarbeiten gekennzeichnet, wobei bei Bremssystemen gemäß Stand der Technik (EP 2 536 607 B1, EP 3 036 136 B1) mit ABS-Regelung mit Vordruckregelung über einen Plunger und Druckaufbau über Einlassventilen und Druckabbau mit Zeitsteuerung über Auslassventile komplexe Druckmodelle erforderlich sind, die für jedes Fahrzeug angepasst werden müssen. Für eine Applikation eines Fahrzeuges für alle Fahrsituationen und Reibwertbedingungen sind daher zahlreiche Applikationsingenieure über mehrere Jahre beschäftigt.

Aufgabe der Erfindung ist es ein Fahrdynamiksystem (FDS) mit einer zentralen Domänensteuerung über eine Fahrdynamikdomäne oder einen Zentralrechner sowie mit Radmodulen oder Fahrzeugachsmodulen mit mehreren Bremsaggregaten (elektrischer Traktionsmotor, elektrohydraulische Drucksteller (EHB) und/oder elektromechanische Bremsaktuatoren (EMB)) bereitzustellen, wobei die Synergien zwischen den einzelnen Bremsmodulen zur Umsetzung einer Bremsaufgabe maximal ausgeschöpft werden. Dabei sollen die Gesamtkosten, das Gewicht sowie die thermische Belastung der Komponenten des Bremssystems minimiert werden. Zugleich sollen der Bremsweg minimiert und die Fahrstabilität sichergestellt werden.

So sollen die Rad- oder Achsmodule vorzugsweise derart angesteuert werden, dass das jeweilige Rad oder die Fahrzeugachse lediglich Sollbremsmomente ausführt und die Verteilung der Bremsmomente auf die Räder oder Achsen in einem Zentralrechner berechnet werden, wo auch die Kernfunktionen Anti-Blockiersystem ABS, Antischlupfregelung ASR, elektrisches Stabilitätsprogramm/Electronic Stability Control ESP/ESC, elektrische Bremskraftverteilung EBV und das rekuperative Bremsenmanagement umgesetzt werden. Die Aufgabe der Steuerelektronik des Rad- oder Achsmoduls wiederum ist es, die Bremssollmomente auf die verschiedenen Bremsaggregate der Räder oder der Fahrzeugachse aufzuteilen.

Ferner soll für ein Fahrzeug mit einem entsprechenden Fahrdynamiksystem (FDS) ein Verfahren zur Steuerung des Fahrzeugs im hochdynamischen Bremsbetrieb (Notbremsfunktion AEB, sowie insbesondere anschließendem ABS-Regelbetrieb) bereitgestellt werden, das in Hinblick auf den Bremsweg optimiert ist und durch das die Regelbarkeit in kritischen Fahrsituationen (ABS-Betrieb auf Schnee oder Eis) optimiert werden. Zudem sollen die Bremsmodule derart gestaltet werden, dass eine schnelle Applikation möglich wird und insbesondere die Applikation automatisiert erfolgen kann.

Ferner sind die Bremsmodule vorteilhafterweise derart zu konzipieren, dass eine Unterbrechung im Regelbetrieb durch Nachfördern von Hydraulikvolumen, wie von EP 2 580 095 B1 gelehrt und in zwei integrierten Bremssystemen im Markt (DE 10 2018 212 905 A1, DE 10 2019 204 016 A1) umgesetzt, oder durch Totzeiten bei einem Multiplexregelverfahren entweder vermieden oder verhindert wird oder durch Regeleingriffe über elektrische Traktionsmotoren ausgeglichen wird.

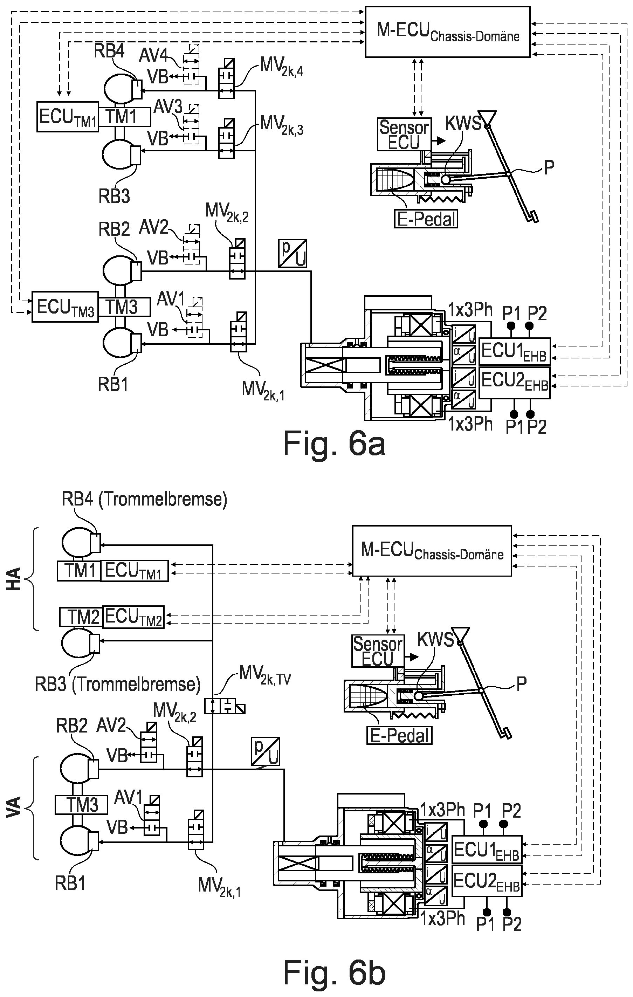

Ferner sind die Bremsmodule vorteilhafterweise derart zu konzipieren, dass zwischen der Druckversorgungseinheit und dem hydraulischen Verbraucher, insbesondere einer Radbremse oder mehreren Radbremen einer Achse eine diagostizierbare Ventileinrichtung vorgesehen ist, insbesondere ein zuziehfestes Radventil (in der nachfolgenden Figur 6a als MV_{2k,1}, MK_{2k,2}, MV_{2k,3}, MV_{2k,4} bezeichnet) und/oder Kreistrennventil (in der nachfolgenden Figur 6b als MV_{2k,TV} bezeichnet), das für einen bidirektionalen Volumenstrom, das heißt sowohl beim Druckaufbau als auch beim Druckabbau, ausgelegt ist, welches es ermöglicht, bei Leckagen eines Verbrauchers durch Schließen der Ventileinrichtung den entsprechenden Verbraucher abzutrennen und mit einem Verbraucher weniger das System weiter zu betreiben.

Im Stand der Technik (EP 3 036 136 B1), ist beispielsweise ein Rückschlagventil (in EP 3 036 136 B1, Figur 1 als Einlassventil 88 und Rückschlagventil 92 bezeichnet) in einer Parallelschaltung zum Radeinlassventil vorgesehen, das erforderlich ist, um in jeder Situation, insbesondere bei einem Ausfall der ECU oder der Energieversorgung, den Druck in der Radbremse noch sicher abbauen zu können.

Die neue Gestaltung mit einer zuziehfesten Ventileinrichtung hat demgegenüber den entscheidenden Vorteil, dass der Ausfall eines Radkreises eindeutig diagnostiziert werden kann, weil keine Unsicherheit besteht, ob die Leckage durch das Schaltventil oder durch das Rückschlagventil verursacht wird. Wird die Leckage des Ventils oder der Ausfall der hydraulischen Leitung zur Radbremse oder mehreren Radbremsen diagnostiziert, zum Beispiel durch ein Verfahren, wie in WO 2018/011021 A1 beschrieben, kann der Hydraulikkreis durch Schließen des Ventils sicher abgetrennt werden und das Bremssystem mit nur einem Verbraucher weniger weiter betrieben werden. Dies hat einen entscheidenden Vorteil gegenüber Bremssystemen mit typischerweise zwei Bremskreisen und vier Radbremsen (im Stand der Technik als Schwarz-Weiss-Bremskreis (II) oder diagonaler Bremskreis (X) bezeichnet), wo im Fehlerfall direkt zwei Radbremsen deaktiviert werden müssen. Der Vorteil der neuartigen Ventileinrichtung ist erheblich: Im Fehlerfall ist nämlich die erreichbare Verzögerung mit drei anstatt zwei Radkreisen signifikant höher und es wird zudem ermöglicht, dass Giermomenteingriffe für ESP und Lenkungseingriffe mit drei Radkreisen ohne große Performanceeinbußen aufrechterhalten werden können. Steht zudem ein elektrischer Antriebsmotor zum Antrieb und Bremsen des ausgefallenen Rades zur Verfügung und wird dieser in die Regelung eingebunden, so ist sogar ein Bremsmomentregelung mit vier Radbremsen im Fehlerfall noch realisierbar.

Ferner soll das Bremssystem so gestaltet sein, dass eine einfache Applikation der Kernfunktionen über die zentrale Steuerung, insbesondere bedingt durch die hohe Rechenleistung des Zentral- oder Domänenrechners automatisiert in der Applikation der Funktionen in der Entwicklung möglich ist und insbesondere auch im Fahrzeugbetrieb über Lernalgorithmen oder Artificial Intelligence (AI) sowohl vor der Erstinbetriebnahme des Fahrzeuges appliziert, als auch anschließend im Betrieb für den Normalbetrieb ohne Fehler als auch den angepassten Betrieb bei Auftreten eines Fehlers angepasst werden kann.

Beim AI-Ansatz kann ein leistungsstarker Zentralrechner mit ausreichender Leistungsfähigkeit die Aufgabe des Applikationsingenieurs übernehmen, was mit Microcontrollern gemäß Stand der Technik, wie sie bei bekannten Regel- und Steuereinheiten von Bremssystemen vorgesehen sind, aufgrund der sehr begrenzten Leistung und begrenzter Speicher nicht möglich ist. So nimmt der Zentralrechner im Fahrzeugbetrieb Messdaten auf, wertet diese aus und appliziert diverse Funktionen, insbesondere die sicherheitskritischen Funktionen ABS, ESP und AEB, im Fahrzeugbetrieb oder beim Fahrzeugstillstand, wenn das Fahrzeug nicht bewegt wird und somit die Anpassung nicht zeitkritisch ist.

Daher erfolgt die Anpassung insbesondere nach einem Fahrzeugbetrieb, wenn das Fahrzeug abgestellt wird. Hier hat die bevorzugte Ausführung als geschlossenes hydraulisches System, insbesondere mit Druckaufbau und Druckabbau über bidirektional wirkende Ventile mittels einer Druckversorgungseinheit, den großen Vorteil, dass die nichtlinearen Zusammenhänge durch geeignete Sensoren über Kennfelder (z.B. Druck-Volumen-Kennlinie, Zusammenhang zwischen Motorstrom und Bremsdruck, Zusammenhang zwischen Bremsdruck und/oder Verzögerung bei Erwärmung der Radbremse) abgebildet werden können. Ferner können diese Kennfelder im Betrieb mittels der Erfassung von Umwelteinflüssen, zum Beispiel von Luft im System oder einer Erwärmung der Radbremse, adaptiert werden.

Werden die nichtlinearen Zusammenhänge in mathematischen Funktionen oder Kennfelder abgebildet, kann ein automatische Applikation auch eines elektrohydraulischen Bremssystems erfolgen.

Wird der AI-Ansatz konsequent bei einem hydraulischen Bremssystem (EHB) umgesetzt, so verschwindet der Vorteil der einfach regelbaren oder steuerbaren elektromechanischen Bremse (EMB) und die Vorteile der geringeren Herstellungskosten des hydraulischen Bremssystems werden wirksam, weil die Nachteile in den Applikationskosten weitestgehend verschwinden.

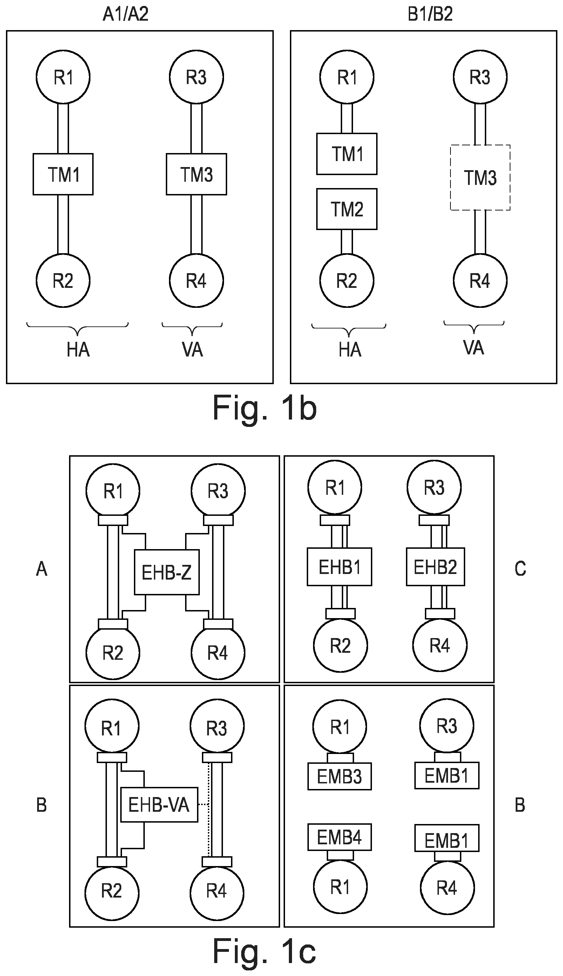

Des Weiteren sollen unterschiedliche Lösungsansätze abhängig von der elektrischen Antriebsarchitektur und der Stufe des automatisierten Fahrens untersucht werden. Daher werden Lösungen dargelegt für die folgenden verschiedenen Architekturen der Anordnung von elektrischen Traktionsmotoren, die in Fig. 1b gezeigt sind:
a) Ein elektrischer Traktionsmotor TM1, TM2 an Hinterachse HA oder Vorderachse VA;
b) Ein elektrischer Traktionsmotor TM1 an Hinterachse HA und ein elektrischer Traktionsmotor TM3 an Vorderachse VA;
c) Zwei elektrische Traktionsmotoren TM1, TM2 an Hinterachse HA für radindividuelle Drehmomentregelung beider Räder R1, R2; sowie
d) Zwei elektrische Traktionsmotoren TM1, TM2 an Hinterachse HA sowie ein elektrischer Traktionsmotor TM3 an Vorderachse VA.

Die Varianten a) bis d) lassen sich beliebig kombinieren, wobei die wirkungsvollsten Lösungen b) und c) im Vordergrund der weiteren erfindungsgemäßen Ausgestaltungen stehen.

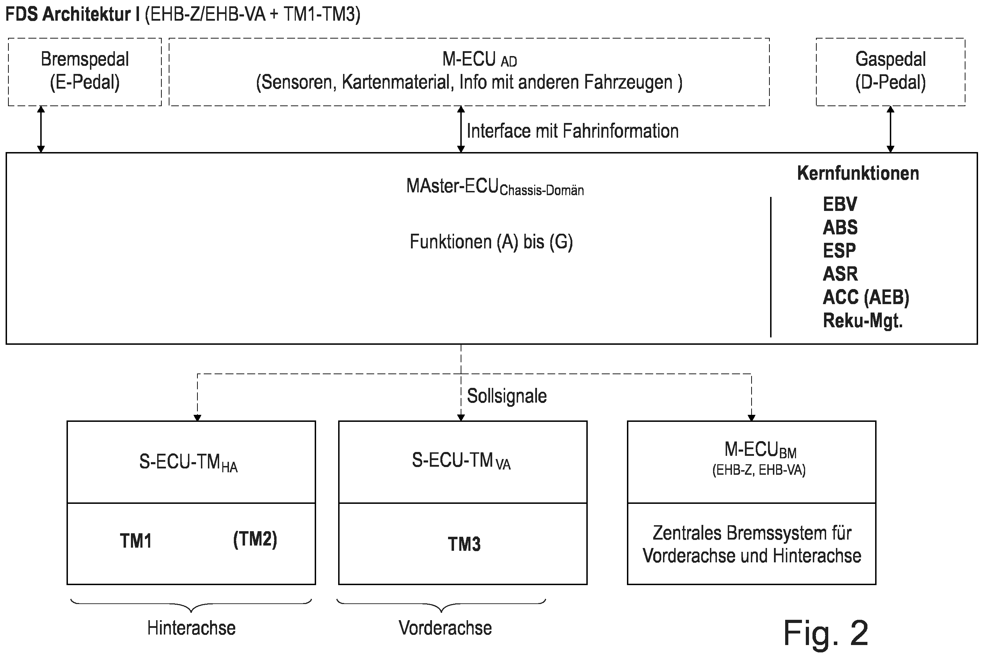

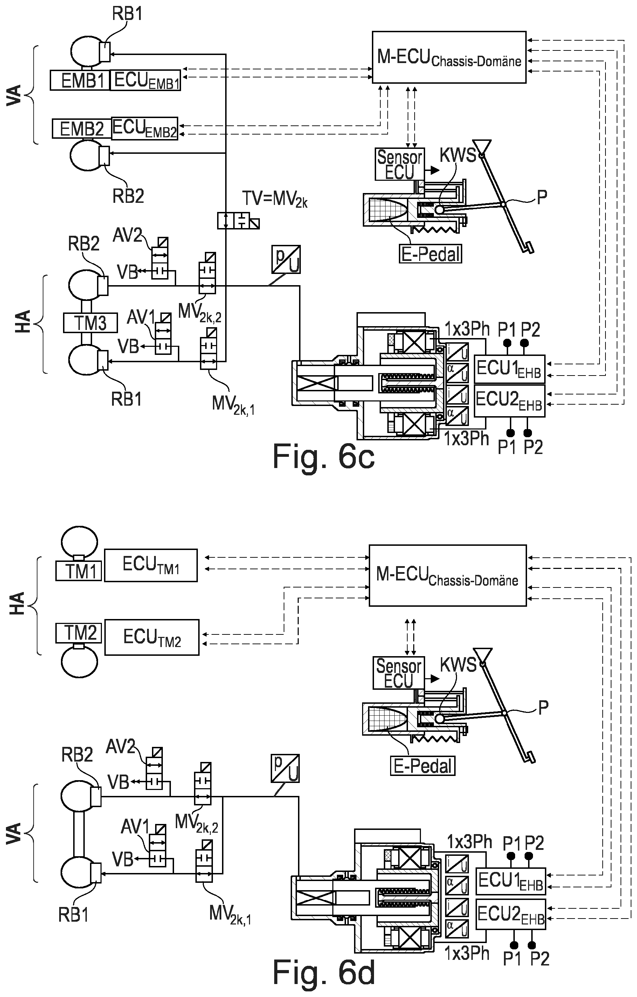

Zusätzlich zu den E-Antriebsmodulen sollen die folgenden Konfigurationen der Bremsaggregate untersucht werden, die in Fig. 2c gezeigt sind:
a) Zentrale elektrohydraulische Bremse (EHB-Z) mit radindividuellen Bremsmomentregelmöglichkeiten für vier Radbremsen (R1, R2, R3, R4) über Magnetventile;
b) Achsmodule mit elektrohydraulischer Bremse (EHB-VA) mit radindividuellen Bremsmomentregelmöglichkeiten für zwei Räder (R1, R2) einer Vorderachse (VA) kombiniert optional mit einer hydraulischen Leitung zu zwei Radbremsen (R3, R4) einer Hinterachse (HA) (vergleiche etwa die unten näher erläuterten Figuren 6b und 6c);
c) Achsmodule mit elektrohydraulischer Bremse (EHB1, EHB2) für jeweils zwei Räder (R1, R2; R3, R4) einer Achse (VA, HA) mit radindividueller Bremsmomentregelung über Magnetventile; sowie
d) Radmodule mit elektromechanischer Bremse (EMB1- EMB4) für jedes Rad (R1, R2, R3, R4) eines Fahrzeugs.

Zudem sollen unterschiedliche Anforderungen der SAE-Stufen 2-5 des automatisierten Fahrens in der Ausgestaltung der Ausführungsformen berücksichtigt werden. Die Lösungsansätze unterscheiden sich, abhängig davon, ob für SAE Stufe 2 nur eine Fail-Safe-Lösung und für SAE Stufe 3-5 eine Fail-Operational-Lösung erforderlich ist.
- Zunächst gelten für eine Bremsanlage folgende Prioritäten:

| | |
|---|---|
| Priorität 1 | Fahrzeugverzögerung: In jedem Fehlermodus muss eine angemessene Verzögerung erreicht werden. Grundsätzlich gilt: Je höher die Manövriergeschwindigkeit des autonomen Fahrzeugs, desto höher sollte die Verzögerung im gestörten Modus sein. |
| Priorität 2 | Fahrzeugstabilität: Bei einem Bremsmanöver im ersten Ausfallmodus muss das Blockieren der Hinterräder vermieden werden. |
| Priorität 3 | Fahrzeuglenkbarkeit: Bei einem Bremsmanöver in einem der ersten Fehlermodi muss das Blockieren der Vorderräder vermieden werden. |
| Priorität 4 | Die Bremskraftverteilung ist bei einer Festeinstellung (ohne EBV-Funktion) nach ECE 13-Richtlinie so zu wählen, dass bis 0,85 g die Vorderachse vor der Hinterachse blockiert. |
| | Eine Fahrzeugverzögerung bis 5,8 m/s² muss bei Ausfall der EBV-Funktion blockierfrei erreichbar sein, sonst Aufleuchten der Warnlampe, die einen Ausfall der EBV-Funktion signalisiert. |

Aus den oben erläuterten Prioritäten, den zeitlichen Verzögerungen beim Eingriff durch den Fahrer bei Zeitdauer und Geschwindigkeit des autonomen Fahrbetriebes (SAE Stufe 3-4) sowie resultierend aus der Haftungsübernahme der Automobilhersteller, werden die nachfolgenden Hauptanforderungen definiert.

| | Basisbremse | Regelfunktion(en) |
|---|---|---|
| SAE Stufe 2 | - Abbremsung nach ECE-13-H (0,244 m/s² (EU)), 0,3 m/s² in China, durch Fahrer über Bremspedal | Kein redundantes ABS/ESP gefordert |
| | - Abbremsung 0,51 m/s² über Bremspedal mit 500N bei Ausfall der Druckversorgung (typische Auslegung 1-Box-Bremssysteme mit 19mm² Hauptbremszylinder | |
| SAE Stufe 2+ | - Redundante Basisbremse, sichere Abbremsung bis 0,58 m/s² durch Fahrer über Bremspedal | Fahrstabilitätsfunktion bis 0,58 m/s2 ABS-Stotterbremse (etwa beim iBooster) bei Ausfall der EBV-Funktion |
| SAE-Stufe 3 | - Redundante Basisbremse bis zu 1g Verzögerung, | Fahrstabilität bis 1 m/s2 mit Kompromissen beim Bremsweg |
| | - red. AEB-Funktion mit Degrading in Dynamik (500ms) | - Redundante EBV-Funktion |
| | | - Redundante ABS-Funktion mit Degrading (2-Kanal ABS an Vorderachse und Hinterachse oder 2-Kanal an Rädern der Vorderachse) |
| | | - Teilredundante Lenkung |
| SAE-Stufe 4 | - Redundante Basisbremse bis 1g, | Fahrstabilität bis 1 m/s² ohne Kompromisse beim Bremsweg |
| | - AEB-Funktion mit voller Dynamik (150ms) | - Redundante EBV-Funktion |
| | | - Redundante ABS-Funktion (3-4 Kanal) |
| | | - Redundante ESP-Funktion |
| | | - Vollredundante Lenkung |
| SAE-Stufe 5 | - Prinzip 2 aus 3 | |
| | - Vorzugsweise 3-fach Redundanz mit Degrading bei der 3. Redundanzstufe (beispielsweise Lenkungseingriffe über EHB oder Bremseingriffe über elektrische Traktionsmotoren | |

Die Aufgabe der Erfindung wird durch ein Fahrdynamiksystem FDS, ein Fahrzeug mit dem Fahrdynamiksystem sowie ein Verfahren zum Betreiben des Fahrdynamiksystems gemäß den unabhängigen Ansprüchen gelöst. Vorteilhafte Ausgestaltungen und Weiterbildungen der Erfindung sind in den Unteransprüchen angegeben.

Das Fahrdynamiksystem für ein Fahrzeug umfasst insbesondere zumindest eine Radbremse zum dissipativen Abbremsen eines Rades des Fahrzeugs sowie zumindest ein Bremsaggregat, das der zumindest einen Radbremse zugeordnet und dazu eingerichtet ist, mittels der zumindest einen Radbremse ein dissipatives Bremsmoment zu erzeugen. Es umfasst ferner zumindest einen elektrischen Traktionsmotor, der dazu ansteuerbar ist, ein regeneratives Bremsmoment für zumindest ein Rad oder eine Achse des Fahrzeugs zu erzeugen. Es umfasst zudem eine zentrale Steuereinheit, die dazu eingerichtet ist, das zumindest eine Bremsaggregat und den zumindest einen elektrischen Traktionsmotor eine Bremsfunktion in Kombination miteinander so anzusteuern, dass ein kombiniertes Bremsmoment mittels des zumindest einen Bremsaggregats und des zumindest einen elektrischen erzeugbar ist. Dabei betrifft die Bremsfunktion einen Regelfall, bei dem gleichzeitig ein Basisbremsmoment und ein geregeltes zusätzliches Bremsmoment gesteuert und/oder geregelt wird. Dabei wird optional das Basisbremsmoment durch das zumindest eine Bremsaggregat erzeugt und das geregelte zusätzliche Bremsmoment wird durch den zumindest einen elektrischen Traktionsmotor erzeugt; oder das Basisbremsmoment wird durch den zumindest einen elektrischen Traktionsmotor und das geregelte zusätzliche Bremsmoment durch das zumindest eine Bremsaggregat erzeugt; oder das zumindest eine Bremsaggregat und der zumindest eine elektrische Traktionsmotor erzeugen jeweils gemeinsam das Basisbremsmoment und das geregelte zusätzliche Bremsmoment.

Bei einer Ausbildung der Erfindung ist die Bremsfunktion ausgewählt aus zumindest einer, vorzugsweise mehreren der folgenden Funktionen:
- automatische Notbremse (*Automated Emergency Brake*, AEB), insbesondere mit einer EBV-Regelung, insbesondere mit einer EBV-Regelung an einer Hinterachse und einer Vorderachse des Fahrzeugs, wobei ein Gesamtbremsmoment auf die Hinterachse und die Vorderachse verteilt wird;
- Antiblockiersystem (ABS), insbesondere mit einer Basisbremsmomentunterstützung über den zumindest einen Traktionsmotor (TM1, TM2, TM3, TM4);
- elektronisches Stabilitätsprogramm (ESP);
- elektronische Bremskraftverteilung (EBV);
- Antischlupfregelung (ASR);
- Abstandsregelung (*Automated Cruise Control*, ACC);
- Rekuperations-Management, insbesondere für achs- oder radindividuelle Rekuperation;
- Basisbremse mit Thermomanagement;
- Giermomentreglung bei Ausfall einer Radbremse; und/oder
- Giermomenteingriffsteuerung für Lenkungsunterstützung.

Insbesondere weist die zentrale Steuereinheit beziehungsweise einen Zentralrechner auf, wobei vorzugsweise der Zentralrechner redundante Microcontroller µC1, µC2, µC3 und/oder einen großen Speicher, insbesondere in einer Größenordnung von Gigabyte, aufweist.

Bei einer weiteren Ausbildung des Fahrdynamiksystems umfasst das Bremsaggregat einen elektromotorischen Antrieb und ist als elektrohydraulisches Bremsaggregat oder als elektromechanisches Bremsaggregat ausgebildet.

Bei einer Weiterbildung ist das Bremsaggregat als elektrohydraulische Bremsaggregat mit einer elektromotorisch betriebenen Druckversorgungseinheit ausgebildet, wobei zwischen der Druckversorgungseinheit und zumindest einer Radbremse oder mehreren Radbremen einer Achse eine Ventileinrichtung vorgesehen ist, wobei die Ventileinrichtung ein zuziehfestes Radventil und/oder ein Kreistrennventil umfasst, wobei bei einer Leckage zumindest einer Radbremse die Ventileinrichtung dazu eingerichtet ist, die betroffene Radbremse durch Schließen der Ventileinrichtung abzutrennen, und die zentrale Steuereinheit dazu eingerichtet ist, das zumindest eine Bremsaggregat und/oder den zumindest einen elektrischen Traktionsmotor so anzusteuern, dass eine Bremsmomentregelung an den weiteren Rädern des Fahrzeugs, insbesondere an zumindest drei Rädern, erfolgt. Dabei sind insbesondere mittels der Ventileinrichtung die Radbremsen einer Achse des Fahrzeugs abtrennbar, insbesondere die Radbremsen der Vorderachse.

Bei einer Weiterbildung ist die zentrale Steuereinheit mit zumindest einem Bremsaggregat-Steuergerät des Bremsaggregats gekoppelt.

Bei einer weiteren Ausbildung ist die zentrale Steuereinheit dazu eingerichtet, bei der Bremsfunktion Sollsignale an ein Motor-Steuergerät des zumindest einen Traktionsmotors und an ein Bremsaggregat-Steuergerät des zumindest einen Bremsaggregats zu übertragen.

Bei einer Ausbildung ist die zentrale Steuereinheit ferner dazu eingerichtet, bei einer Geschwindigkeit des Fahrzeugs von über 80 km/h für eine Bremsung im Normalbetrieb den zumindest einen elektrischen Traktionsmotor zum regenerativen Abbremsen des Fahrzeugs anzusteuern, wobei bei dem regenerativen Abbremsen gleichzeitig eine elektronische Bremskraftverteilung (EBV-Funktion) an einer Vorderachse und einer Hinterachse des Fahrzeugs realisiert wird. Dabei wirken insbesondere 20-40% eines Gesamtbremsmoments an der Hinterachse und 60-80% des Gesamtdrehmoments an der Vorderachse des Fahrzeugs.

Bei einer Weiterbildung ist der Radbremse eines Rades des Fahrzeugs ein eigenes Bremsaggregat zugeordnet, wobei insbesondere das Bremsaggregat elektromechanisch ausgebildet ist. Dabei sind insbesondere für jedes der zwei Räder das der Radbremse zugeordnete Bremsaggregat und ein elektrischer Traktionsmotor in ein Radmodul integriert.

Bei einer Ausbildung ist den Radbremsen zweier Räder einer Achse des Fahrzeugs ein gemeinsames Bremsaggregat zugeordnet. Dabei ist insbesondere das Bremsaggregat elektrohydraulisch ausgebildet, wobei insbesondere den zwei Rädern einer Hinterachse ein erstes Bremsaggregat und den zwei Rädern einer Vorderachse ein zweites Bremsaggregat zugeordnet ist.

Dabei ist den Radbremsen von vier Rädern des Fahrzeugs ein zentrales Bremsaggregat zugeordnet, wobei insbesondere das zentrale Bremsaggregat elektrohydraulisch ausgebildet ist.

Bei einer Ausbildung ist den Radbremsen zweier Räder einer ersten Achse, insbesondere einer Vorderachse, des Fahrzeugs ein gemeinsames Bremsaggregat zugeordnet. Dabei ist insbesondere das Bremsaggregat elektrohydraulisch ausgebildet. Insbesondere sind bei den Radbremsen der ersten Achse radindividuelle dissipative Bremsmomente einstellbar, insbesondere mittels Magnetventilen in hydraulischen Leitungen zwischen dem Bremsaggregat und den Radbremsen. Insbesondere ist das Bremsaggregat ferner über eine hydraulische Leitung mit den Radbremsen zweier Räder einer zweiten Achse, insbesondere einer Hinterachse, verbindbar. Dabei sind insbesondere bei den Radbremsen der zweiten Achse gemeinsame, nicht radindividuelle dissipative Bremsmomente einstellbar.

Bei einer Ausbildung ist einem ersten Paar von zwei Rädern einer ersten Achse, insbesondere einer Hinterachse des Fahrzeugs, ein erster elektrischer Traktionsmotor zugeordnet und einem zweiten Paar von Rädern einer zweiten Achse, insbesondere einer Vorderachse des Fahrzeugs, ist ein zweiter elektrischer Traktionsmotor zugeordnet.

Bei einer Ausbildung ist einem ersten und einem zweiten Rad einer ersten Achse, insbesondere einer Hinterachse des Fahrzeugs, jeweils ein eigener elektrischer Traktionsmotor zugeordnet.

Bei einer Weiterbildung ist dem ersten und dem zweiten Rad ferner ein jeweils eigenes Bremsaggregat zugeordnet, wobei insbesondere die jeweils eigenen Bremsaggregate (elektromechanisch ausgebildet sind. Dabei sind insbesondere für das erste und zweite Rad der jeweils zugeordnete elektrische Traktionsmotor und das jeweils zugeordnete Bremsaggregat in jeweils ein dem ersten oder zweiten Rad zugeordnetes Radmodul integriert.

Bei einer weiteren Ausbildung ist ferner einem dritten und einem vierten Rad einer zweiten Achse, insbesondere einer Vorderachse des Fahrzeugs, ein dritter elektrischer Traktionsmotor gemeinsam zugeordnet. Dabei ist insbesondere dem dritten und vierten Rad ein gemeinsames Bremsaggregat zugeordnet. Dabei ist insbesondere das gemeinsame Bremsaggregat elektrohydraulisch ausgebildet. Dabei sind insbesondere der dritte elektrische Traktionsmotor und das gemeinsame Bremsaggregat in ein der zweiten Achse zugeordnetes Achsmodul integriert; oder es ist insbesondere ein zentrales Bremsmodul vorgesehen, das insbesondere elektrohydraulisch ausgebildet ist, wobei mittels des zentralen Bremsmoduls für das erste und zweite Rad radindividuelle Bremsmomente erzeugbar sind und für das dritte und vierte Rad ein gemeinsames Bremsmoment erzeugbar ist.

Bei einer Ausbildung ist die zentrale Steuereinheit dazu eingerichtet, das Basisbremsmoment und das geregelte zusätzliche Bremsmoment in Abhängigkeit von der Fahrzeugverzögerung und/oder in Abhängigkeit von einem Reibwert der Fahrbahn auf das zumindest eine Bremsaggregat und den zumindest einen elektrischen Traktionsmotor zu verteilen. Dabei erzeugt insbesondere bei kleinerer Verzögerung und/oder kleinerem Reibwert, beispielsweise bei einer ABS-Regelung auf Schnee oder Eis oder bei einer Verzögerung in einem ABS-Bremsbetrieb, ein elektromotorisches Bremsaggregat und/oder der zumindest eine elektrische Traktionsmotor das geregelte zusätzliche Bremsmoment. Dabei erzeugt insbesondere bei größerer Verzögerung und/oder größerem Reibwert, beispielsweise bei einer Bremsung auf Asphalt, ein elektrohydraulisches Bremsaggregat das geregelte zusätzliche Bremsmoment. Dabei erzeugt insbesondere bei mittlerer Verzögerung und/oder mittlerem Reibwert das Bremsaggregat oder der Traktionsmotor das Basisbremsmoment als konstantes Bremsmoment erzeugt und ein weiteres Bremsaggregat oder der Traktionsmotor das geregelte zusätzliche Bremsmoment.

Bei einer Weiterbildung ist die zentrale Steuereinheit dazu eingerichtet, bei einer automatische Notbremsung eine EBV-Regelung auszuführen, wobei die Bremsmomentgradienten des zumindest einen Bremsaggregats und des zumindest einen elektrischen Traktionsmotors so berücksichtigt werden, dass an der Vorderachse und an der Hinterachse des Fahrzeugs jeweils das maximale Bremsmoment, insbesondere das maximale Bremsmoment bevor die Räder blockieren, gleichzeitig erreicht wird.

Bei einer Weiterbildung wird beim regenerativen Abbremsen, insbesondere bei einem vollem Ladezustand einer Batterie des Fahrzeugs, zumindest eine der folgenden Strategien verwendet:
- Rückspeisen der regenerierten Energie in die Batterie bis zur Grenze der Leistungsaufnahme;
- feldorientierte Regelung (Id/Iq-Stromregelung) des elektrischen Traktionsmotors derart, dass die Energie im Motor intern vernichtet wird;
- Vernichten der durch den elektrischen Traktionsmotor im generatorischen Betrieb gewonnenen Energie, Bereitstellen der gewonnenen Energie für einen elektrischen Verbraucher des Fahrzeugs und/oder Erwärmen eines Fluidreservoirs zur Nutzung mit einer Wärmepumpe für eine Kühlung oder Heizung; und/oder
- Verwenden eines vorzugsweise elektrischen Zwischenspeichers, der für Impulsleistung ausgelegt ist, beispielsweise eines Super-Cap oder eines Schwungmassenspeichers.

Bei einer Weiterbildung wird der zumindest eine elektrische Traktionsmotor mit einem Inverter zum Schalten von Wicklungen des zumindest einen elektrischen Traktionsmotors in Reihenschaltung oder Parallelschaltung von jeweils drei Strängen der Erregerspulen des bürstenlosen Elektromotors betrieben. Dabei wird insbesondere mittels des Inverters ein 4-Quadrantenbetrieb ermöglicht, nämlich mit einem Quadrant 1 mit positiver Drehzahl und positivem Drehmoment des Elektromotors, einem Quadrant 2 mit positiver Drehzahl und negativem Drehmoment des Elektromotors; einem Quadrant 3 mit negativer Drehzahl und positivem Drehmoment des Elektromotors, sowie einem Quadrant 4 mit negativer Drehzahl und negativem Drehmoment des Elektromotors.

Bei einer Ausbildung ist die zentrale Steuereinheit dazu eingerichtet, die Bremssteuerung anhand eines Kennfeldes durchzuführen, wobei insbesondere das Kennfeld eine Druck-Volumen-Kennlinie, einen Zusammenhang zwischen Motorstrom und Bremsdruck und/oder einen Zusammenhang zwischen Bremsdruck und/oder Verzögerung bei Erwärmung der Radbremse abbildet.

Bei einer weiteren Ausbildung ist die zentrale Steuereinheit dazu eingerichtet, im Fahrzeugbetrieb, insbesondere in einem Zustand nach Fahrzeugerstinbetriebnahme, etwa in einem Fahrbetrieb oder bei Stillstand vor oder nach einem Fahrbetrieb, Sensordaten zu erfassen und anhand der erfassten Sensordaten mittels eines Verfahrens der künstlichen Intelligenz, insbesondere Maschinenlernen oder neuronale Netze, die Steuerung der Bremsfunktion anzupassen. Dabei ist insbesondere das Verfahren der künstlichen Intelligenz mittels eines Rechners der zentralen Steuereinheit ausführbar. Insbesondere wird das Anpassen in einem sicheren Zustand der Fahrzeugs ausgeführt, insbesondere in einem abgestellten Zustand des Fahrzeugs. Dabei wird insbesondere anhand der erfassten Sensordaten ein Kennfeld bestimmt, das beispielsweise eine Druck-Volumen-Kennlinie, einen Zusammenhang zwischen Motorstrom und Bremsdruck und/oder einen Zusammenhang zwischen Bremsdruck und/oder Verzögerung bei Erwärmung der Radbremse abbildet. Dabei ist insbesondere das Kennfeld anhand der Sensordaten und des Verfahrens der künstlichen Intelligenz adaptierbar, wenn eine Abweichung von dem aktuellen Kennfeld erkannt wird, etwa wegen Umwelteinflüssen, Luft im System oder wegen einer Erwärmung der Radbremse.

Ein weiteres Fahrdynamiksystem für ein Fahrzeug umfasst zumindest einen elektrischen Traktionsmotor, der dazu ansteuerbar ist, ein regeneratives Bremsmoment für zumindest ein Rad oder eine Achse des Fahrzeugs zu erzeugen, und eine zentrale Steuereinheit, die dazu eingerichtet ist, den zumindest einen elektrischen Traktionsmotor für eine Bremsfunktion anzusteuern. Dabei ist die zentrale Steuereinheit dazu eingerichtet, die Bremsfunktion bei einer Bremsung auf einer Fahrbahn mit einem Niedrigreibwert, insbesondere bei Schnee, Eis und/oder nasser Fahrbahn, mit geringen bis moderaten Verzögerungen, insbesondere von weniger als 0,5 m/s2 auszuführen. Dabei ist insbesondere die zentrale Steuereinheit dazu eingerichtet, die Bremsfunktion mittels zumindest eines Traktionsmotors zumindest einer Achse des Fahrzeugs auszuführen, insbesondere mittels zweier Traktionsmotoren der Hinterachse des Fahrzeugs.

Das Fahrzeug gemäß der Erfindung umfasst ein Fahrdynamiksystem gemäß der vorliegenden Beschreibung beziehungsweise gemäß den anliegenden Ansprüchen.

Bei dem Verfahren zum Betreiben eines Fahrdynamiksystems mit zumindest einem Bremsaggregat zum Erzeugen eines dissipativen Bremsmoments und zumindest einem elektrischen Traktionsmotor zum Erzeugen eines regenerativen Bremsmoments für zumindest ein Rad oder eine Achse des Fahrzeugs, und eine zentrale Steuereinheit zum Ansteuern des zumindest einen Bremsaggregats und des zumindest einen elektrischen Traktionsmotors für eine Bremsfunktion, wird ein kombiniertes Bremsmoment mittels des zumindest einen Bremsaggregats und des zumindest einen elektrischen Traktionsmotors erzeugt. Dabei betrifft die Bremsfunktion einen Regelfall, bei dem gleichzeitig ein Basisbremsmoment und ein geregeltes zusätzliches Bremsmoment gesteuert und/oder geregelt wird. Dabei wird optional das zumindest eine Bremsaggregat dazu angesteuert, ein Basisbremsmoment zu erzeugen, und der zumindest eine elektrische Traktionsmotor wird dazu angesteuert, das geregelte zusätzliche Bremsmoment zu erzeugen; oder der zumindest eine elektrische Traktionsmotor wird dazu angesteuert, das Basisbremsmoment zu erzeugen, und das zumindest eine Bremsaggregat wird dazu angesteuert, das geregelte zusätzliche Bremsmoment zu erzeugen; oder das zumindest eine Bremsaggregat und der zumindest eine elektrische Traktionsmotor werden dazu angesteuert, jeweils gemeinsam das Basisbremsmoment und das geregelte zusätzliche Bremsmoment zu erzeugen.

Der zumindest eine elektrische Traktionsmotor zum Antrieb und Bremsen einer Achse oder eines Rades des Fahrzeugs weist insbesondere ein Slave-Steuergerät an einer oder mehreren Achsen oder Rädern eines Fahrzeuges auf.

Das zumindest eine Bremsaggregat beziehungsweise Bremssystem ist insbesondere für mehrere Radbremsen, mehrere elektrohydraulische Bremsmodule oder mehrere elektromechanische Bremsmodule ausgelegt.

Dabei kann beispielsweise für die Steuerung ein zentrales Fahrzeugmodell vorgesehen sein, mittels dessen die Bremsanforderungen an die Radmodule oder Achsmodule unter Berücksichtigung des Reibwertes der Fahrbahn, Fahrzeuggeschwindigkeit und Gewichtsverteilung beim Bremsvorgang berechnet werden können.

Ferner können Bremsregelmodelle und Kennfelder für synchronisierte Bremsmomentregelung für den zumindest einen Traktionsmotor und das Bremsaggregat, insbesondere EHB oder EMB, in dem Sinne vorgesehen sein, dass entweder der zumindest eine elektrische Traktionsmotor oder das Bremsaggregat, insbesondere EHB oder EMB, ein Grundbremsmoment bereitstellt, während die dynamische Bremsmomentregelung gemeinsam durch den zumindest einen elektrischen Traktionsmotor und das Bremsaggregat, insbesondere EHB oder EMB, durchgeführt wird, insbesondere durch ein dadurch erzeugtes geregeltes zusätzliches Bremsmoment.

Ferner können Sensordaten von Sensoren genutzt werden, wobei die Sensordaten für die implementierten Kernfunktionen von Bedeutung sind und im zentralen Steuergerät eingelesen werden. Beispielsweise können die Sensordaten von Radgeschwindigkeitssensoren für eine ABS-Funktion, Giermomentsensoren für eine ESP-Funktion, Beschleunigungssensoren und/oder Gewichtssensoren für eine EBV-Funktion und Abgleich des insbesondere von der Temperatur des Bremsscheibe(n) abhängigen funktionalen Zusammenhangs zwischen Bremsdruck/Bremsmoment und Verzögerung des Fahrzeuges und/oder Sensoren für elektrische Rekuperationsstrategien oder Notbremsfunktionen (AEB) vorgesehen sein.

Das zentrale Fahrdynamiksystem kann beispielsweise derart genutzt werden, dass der Einsatz es zumindest einen Bremsaggregats im Hinblick auf eine Maximierung der Rekuperation sowie der Brems- oder Bremsregelleistung bei unterschiedlichen Fahrsituationen optimiert wird. Dies erfolgt insbesondere in Abhängigkeit von einer Bremssituation, etwa einer Komfortbremsung oder Notbremsung, sowie einer Fahrbahnsituation, etwa bei einer Bremsung auf Asphalt, auf Schnee oder auf Eis, bei einem sogenannten µ-Sprung oder µ-Split, und der Verfügbarkeit der Bremsaggregate. Insbesondere können durch eine intelligente Regelung über das Fahrdynamiksystem die Kosten der Bremssättel reduziert werden, insbesondere durch Minimierung der thermischen Belastung der Reibbremse und eine Verkleinerung und/oder Auswahl des geeigneten Typs der verwendeten Reibbremse, beispielsweise einer Trommelbremse oder einer Scheibenbremse.

So kann bereits in einer ersten "**Architektur I"** über die zentrale Steuereinheit als Bremsaggregat jeweils ein hydraulische Bremssystem für Räder der Vorderachse und der Hinterachse (EHB-Z) oder ein hydraulisches Bremssystem nur für die Vorderachse (EHB-VA) zusammen mit dem zumindest einen elektrischen Traktionsmotoren angesteuert werden. Bei der Architektur I sind für das Bremsaggregat EHB-Z oder EHB-VA und den zumindest einen elektrischen Traktionsmotor der jeweilige Achse jeweils ein Steuergerät (M-ECU_{BM}, S-ECU_{TM,HA}, S-ECU_{TM,VA}) vorgesehen, welches eine Schnittstelle zur zentralen Steuereinheit aufweist. Die zentrale Steuereinheit M-ECU_{Domäne} gibt synchronisiert die Sollsignale an die oben genannten Steuergeräte (M-ECU_{BM}, S-ECU_{TM,HA}, S-ECU_{TM,VA}), wobei die Sollsignale insbesondere Sollbremsmomente sind oder diese umfassen.

Mit dieser Architektur kann ohne Änderung der installierten Bremsanlage, bereits ein großes Potential für ein SAE Level 2-Bremssystem mit Fail-Safe-Betrieb erschlossen werden. Eine solche Bremsanlage kann beispielsweise eine gängige 1-Box-Bremsanlage im Markt sein, wie etwa beschrieben in DE102018212905A1, DE102019204016A1 oder DE102019122169A1. Hierzu ist keine Änderung des mechanischen oder hydraulischen Aufbaus der Bremsanlage nötig, sondern lediglich eine Erweiterung über eine Schnittstelle, etwa eine radindividuelle Solldruckschnittstelle oder eine radindividuelle Sollmomentschnittstelle. Dies wird erreicht durch eine Integration in die zentrale Steuereinheit (Domäne) und eine intelligente Ansteuerung des Bremsaggregats und der installierten elektrischen Traktionsmotoren an einer oder beiden Fahrzeugachsen oder zwei Rädern einer Fahrzeugachse.

Vorteilhaft wird alternativ zu den gängigen, oben genannten Bremsanlagen das Bremsaggregat (EHB) weiter so optimiert, dass das Bremsaggregat (EHB) nur als radindividueller Drucksteller mit Radregelventilen ausgeführt ist. Jede der hydraulisch aktuierten Radbremsen bildet dabei einen getrennten Radkreis und sie kann vorzugsweise über Schließen der vorzugsweise zuziehfesten Radventile MV₂ₖ abgetrennt werden. Ferner kann als Bremsaggregat ein EHB-Drucksteller mit Regelventilen nur für die Vorderachse (EHB-1, EHB-VA) und/oder ein Drucksteller mit Regelventilen für die Hinterachse (EHB-2) und/oder ein Drucksteller (EHB-Z) vorgesehen sein, zusätzlich mit einem Bremskreis für beide Räder der Hinterachse. Bei den vorgenannten Lösungen EHB-1 und EHB-2 wird die "**Architektur II"** angewandt, die in späteren Abschnitten und Figuren erläutert wird.

Der Fahrerwunsch wird in einer Ausführung für SAE Level 4 nicht mehr konventionell mit einer Betätigungseinheit zur Fahrerwunscherfassung, sondern mit einer Kolben-Zylinder-Einheit mit vorzugsweise einem Kolben und einer hydraulischen Druckkammer sowie hydraulischer Verbindung zu den Bremskreisen oder über ein E-Pedal erfasst. Dabei werden die Fahrerwunschsignale redundant in die M-ECU_{Domäne} eingelesen_{.} Für SAE Level 5 ist kein Pedal mehr erforderlich. Der modulare Aufbau mit E-Pedal hat gegenüber dem Stand der Technik den entscheidenden Vorteil, dass modular SAE Level 4 und SAE Level 5 abgedeckt werden können und durch den Wegfall der hydraulischen Verbindung zwischen der Betätigungseinheit und einem Drucksteller eine besonders hohe Flexibilität der Unterbringung des Druckstellers im Fahrzeug ermöglicht wird. Zudem werden Geräuschquellen vermieden, da die hydraulischen Druckmodulationsgeräusche von der Spritzwand entfernt erzeugt werden und es daher keine Körperschallübertragung zum Fahrgastraum gibt. Solche Ausführungsformen einer elektrohydraulischen Bremsanlage werden in den Figuren 6a bis 6d näher beschrieben.

So werden die oben erläuterten unterschiedlichen Ausführungsformen des Bremsaggregats (EHB) und der **Architekturen I bis II** durch ein zentrales Fahrzeugmodell ermöglicht, mittels dessen die Funktion (a) bis (g) realisiert werden.

Bei einer ersten vorteilhaften Funktion **(a) Basisbremsfunktion** wird die Erwärmung der Reibbremse minimiert, indem überwiegend der zumindest eine Elektromotor zum Bremsen eingesetzt wird. Wird eine Bremsanalage mit einer Verblendungsstrategie gemäß dem Stand der Technik (vergleiche etwa Figur 1b) ausgelegt, so wird bei der Dimensionierung der maximale Druck beim AMS Fading-Test zugrunde gelegt (vergleiche "Bremsenhandbuch", 5. Auflage, Kap. 6.3.2, Abbildung 6.10). Das heißt, für den AMS Test werden 10 Folgebremsungen aus 100 km/h simuliert. Demnach erwärmen sich die Radbremsen der Vorderachse auf 600°C und die Radbremsen der Hinterachse auf etwa 500°C. Die Pedalkraft bei Standard-Vakuumbremskraftverstärkern steigt dann um etwa 80% an, das heißt, die Bremsanlage muss für den Fading-Fall auf einen 80% höheren Druck als den normalen Blockierdruck ausgelegt werden. Mit entsprechender Sicherheitsreserve werden Bremsanlagen daher typischerweise auf etwa 200 bis 220 bar Maximaldruck ausgelegt. Typische Blending-Strategien sehen kein regeneratives Bremsen bei höheren Geschwindigkeiten oberhalb von 60 km/h vor ("Bremsenhandbuch", Kap.19.3.2 Abbildung 19.12); das Potential der Bremsleistung von Elektromotoren wird daher nicht ausgenutzt. Diese Begrenzung des regenerativen Bremsens auf Geschwindigkeitsbereiche unterhalb von 60 km/h ist zum einen bedingt durch Grenzen der Volumenaufnahme beim Verblenden, etwa die Volumenaufnahme durch eine Speicherkammer der ESP-Einheit bei einem 2-Box-Bremssystem mit elektrischen Folgebremskraftverstärkern. Zum anderen sprechen Haftungsgründe des Bremsenherstellers und die Gesetzgebung gegen eine Ausweitung des regenerativen Bremsbetriebes. Ferner können diese Begrenzungen dadurch bedingt sein, dass die Aufnahmefähigkeit der Batterie für Energie begrenzt ist, insbesondere im vollgeladenen Zustand.

Bei einer zentralen FDS-Regelung kann das Potential des regenerativen Bremsens ausgeschöpft werden. Ferner kann die Erwärmung der Reibbremse und somit auch der Fading-Effekt signifikant reduziert werden, weil die Bremsenergie nicht mehr zu einer signifikanten Erwärmung der Reibbremse führt. Beispielsweise kann der zumindest eine elektrische Traktionsmotor mit einem Inverter betrieben werden, mit dem ein 4-Quadrantenbetrieb erfolgen kann (Quadrant 1: positive Drehzahl, positives Drehmoment; Quadrant 2: positive Motordrehzahl, negatives Motordrehmoment; Quadrant 3: negative Motordrehzahl, positives Motordrehmoment; Quadrant 4: negative Motordrehzahl, negatives Motordrehmoment). Dann kann ein elektrischer Traktionsmotor einer beispielhaften Antriebsleistung von 130 kW mit einem Drehmoment von 250 Nm an einer Hinterachse eines Mittelklassefahrzeugs (vgl. BMW i3-Fahrzeug mit max. Bremsmoment 2000 Nm an Hinterrad/ 3000 Nm am Vorderrad) im zweiten Quadranten mit dem annähernd gleichen Drehmoment und der gleichen Leistung auch gebremst werden. Das generatorische Bremsmoment der elektrischen Traktionsmotoren ist dabei etwas höher als das Antriebsbremsmoment des elektrischen Traktionsmotors, da Verluste im Motor und Getriebe ebenfalls bremsend wirken, während sie bei der Beschleunigung die Verluste das Antriebsdrehmoment mindern. So können mit einer derartigen Auslegung bei einer Geschwindigkeit von 100 km/h bereits ca. 60-70% der Bremsenergie an der Hinterachse durch regeneratives Bremsen erhalten werden. Wenn ein solcher Motor ebenso an der Vorderachse installiert werden ist, dann kann auch an der Vorderachse eine Verzögerung von ca. 50% erreicht werden. Beim Bremsen über elektrische Traktionsmotoren werden dabei eine oder mehrere Energiemanagementstrategien verfolgt, wobei durch effiziente Auswahl oder Kombination der Strategien dem Bremsen über den elektrischen Traktionsmotor *de facto* nur über die Drehmomentgrenzen im 4-Quadranten-Betrieb des Inverters Grenzen gesetzt sind.

Folgende vier grundlegende Strategien zum Energiemanagement stehen zur Verfügung:
(1)Rückspeisen in Batterie bis zur Grenze der Leistungsaufnahme: Dies ist u.a. abhängig von der Energieaufnahmefähigkeit der Batterie, insbesondere in Abhängigkeit vom aktuellen Ladezustand (SOC) der Batterie.
(2)Feldorientierte Regelung (Id/Iq-Stromregelung) des Elektromotors derart, dass die Energie im elektrischen Traktionsmotor intern vernichtet wird: Die interne Energievernichtung ist durch Widerstände der Erregerwicklungen des Stators der elektrischen Traktionsmotors und Wirbelstromverluste sowie die Kühlmöglichkeiten des Motors begrenzt. Da bei elektrischen Traktionsmotoren eine Wasser- oder Ölkühlung vorgesehen ist und zudem die Erwärmung in der Impulsbelastung im Bremsvorgang, welcher normalerweise bei Vollbremsung in 5-10 Sekunden abgeschlossen ist, durch die große thermische Masse des Elektromotors gedämpft wird, ist die Aufnahme der Energie im Impulsbetrieb durch den Elektromotor eher unkritisch und kann daher in der Regel voll ausgeschöpft werden.

Ferner kann ein Kühlkreislauf des elektrischen Traktionsmotor in ein Wasserreservoir geführt werden, das wiederum mittels einer Wärmepumpe für eine besonders effiziente Kühlung und Heizung des Innenraumes des Fahrzeuges genutzt wird. Damit kann die im Traktionsmotor "vernichtete" Energie genutzt werden, insbesondere mit einem Wärmepumpenwirkungsgrad von mehr als 300%.
(3) Als dritte Option kann die durch den elektrischen Traktionsmotor im generatorischen Betrieb erzeugte Energie über eine verschleißfreie Wirbelstrombremse, wie von Motorprüfständen bekannt, eingesetzt werden oder ein anderes Medium (beispielsweise Wasser) wird vergleichbar einem Wasserkocher erwärmt. Die erzeugte Wärme kann auch vorteilhafterweise über einen Wärmetauscher für eine besonders effiziente Kühlung oder Heizung des Fahrzeuges verwendet werden. Vorzugsweise wird die Energie einer oder mehrerer elektrischer Traktionsmotoren an eine Wärmesenke geführt
(4) Als vierte Option kann ein elektrischer Zwischenspeicher vorgesehen sein, der für eine Impulsleistung ausgelegt ist, zum Beispiel ein Super-Cap oder Schwungmassenspeicher. Super-Caps oder Schwungmassenspeicher sind für Impulsleistungen besonders gut geeignet und können im Gegensatz zur Batterie deutlich höhere Spitzenleistungen aufnehmen. Die im Super-Cap oder Schwungmassenspeicher kurzzeitig gespeicherte Energie kann beim Beschleunigen des Fahrzeuges nach dem Bremsvorgang eingesetzt oder anderweitig im Fahrzeug genutzt werden.

Durch das Rekuperations-Bremsmanagement mit Energiemanagement kann die Erwärmung der Reibbremse im AMS-Test um mehr als 50%, insbesondere sogar bis 70-80% reduziert werden. Dieser Effekt kann vorteilhaft dahingehend genutzt werden, dass die Reibbremse an der Vorderachse vereinfacht wird und an der Hinterachse vorteilhaft eine kostengünstige Trommelbremse mit zugleich niedrigem Gewicht eingesetzt wird. Alternative kann der Effekt genutzt werden, um die hydraulische Bremse auf deutlich niedrigere Maximalbremsdrücke auszulegen, beispielsweise 120-140 bar statt 200-220 bar, was sich vorteilhaft auf die Kosten des Bremssystems auswirkt, weil die Druckversorgung mit einem kleineren Elektromotor ausgestattet werden kann. Zudem kann das hydraulische Volumen der Druckversorgereinheit reduziert werden.

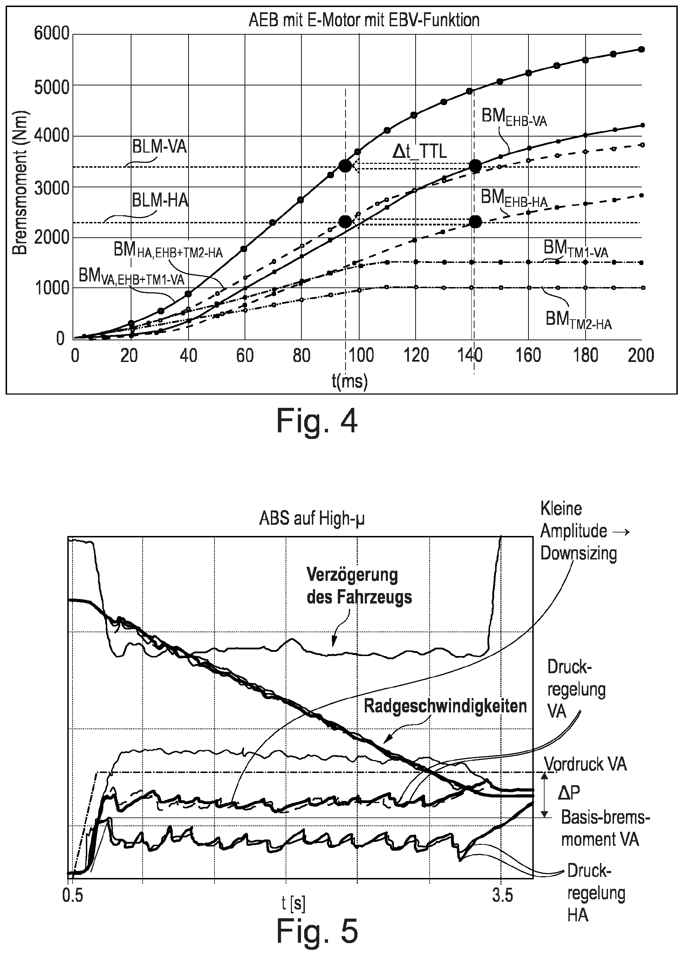

Weiterhin kann durch geeignete Gestaltung der Schnittstelle zwischen dem Fahrdynamiksystem und dem Bremssystem mit Zugang zur Regelung der elektronischen Bremskraftverteilung (EBV-Funktion) in einer **zweiten vorteilhaften Funktion (b)** die Dynamik der **automatischen Notbremse** (AEB) weiter erhöht werden, was signifikante Auswirkungen auf den Bremsweg, insbesondere bei hohen Fahrzeuggeschwindigkeiten, hat. Wird über den Elektromotor gebremst, muss das Fahrdynamiksystem zur Erfüllung der gesetzlichen Anforderungen und der Sicherheit des Fahrzeuges sicherstellenwerden, dass die Fahrstabilität (siehe oben - Priorität 2) und Lenkbarkeit (siehe obige Tabelle - Priorität 3) erhalten werden. Das heißt zum Beispiel, die Hinterachse darf nicht vor der Vorderachse blockieren und beim Blockieren der Räder, insbesondere der Vorderachse, muss das ABS aktiviert werden. Die Schnittstelle zwischen dem Fahrdynamiksystem und der Bremsanlage muss also derart gestaltet und vorzugsweise die EBV-Funktion derart gesteuert werden, dass das maximale Bremsmoment (Radblockiergrenze) an Vorderachse und Hinterachse nahezu gleichzeitig erreicht wird. Dadurch kann, wie unten mit Bezug zu Figur 4 erläutert, bereits bei einem elektrischen Traktionsmotor mit mittlerer Leistung von 130 kW an der Vorderachse und Hinterachse eines Mittelklassefahrzeuges die Zeit vom Beginn der Bremsung bis zur maximalen Verzögerung (TTL-Zeit) von 140 ms auf 90 ms reduziert werden. Bei Geschwindigkeiten von über 100 km/h kann dies zu einer Bremswegverkürzung von mehreren Metern führen. Ist die TTL-Zeitverkürzung nicht umsetzbar, etwa aufgrund der Fahrwerksbegrenzungen, kann alternativ die Bremswirkung durch den Elektromotor vorteilhaft ebenfalls genutzt werden, um die Bremsanalage kostengünstiger und kleiner auszuführen. Das heißt, die Druckversorgung des Bremsaggregats kann durch einen Motor mit geringerem Drehmoment und/oder durch leistungsschwächeren Motor, gegebenenfalls auch durch einen kostengünstigen Bürstenmotor angetrieben werden.

In einer **dritten vorteilhaften Funktion (c)** kann eine achsweise Rekuperation über Elektromotoren realisiert werden. Auch hier ist ein Zugriff vom Fahrdynamiksystem auf die Magnetventile des Bremsaggregats (EHB) beziehungsweise eine geeignete Schnittstelle zum Bremsaggregat (EHB) zu definieren, damit der ABS-Betriebszustand in kritischen Fehlerfällen eingreift. Bei einem Zusammenspiel zwischen dem Bremsaggregat (EHB) und die über das Fahrdynamiksystem angesteuerten elektrischen Traktionsmotoren müssen der Druckaufbau und Druckabbau über Einlassventile oder Trennventile zum Bremskreis der Vorderachse für die Verblendung entsprechend geregelt werden. Dies kann im Druckaufbau etwa über eine PMW-Steuerung der Einlassventile erfolgen, im Druckabbau alternativ über das MUX-Verfahren über Einlassventile oder Trennventile oder über einen Druckabbau mittels Auslassventilen.

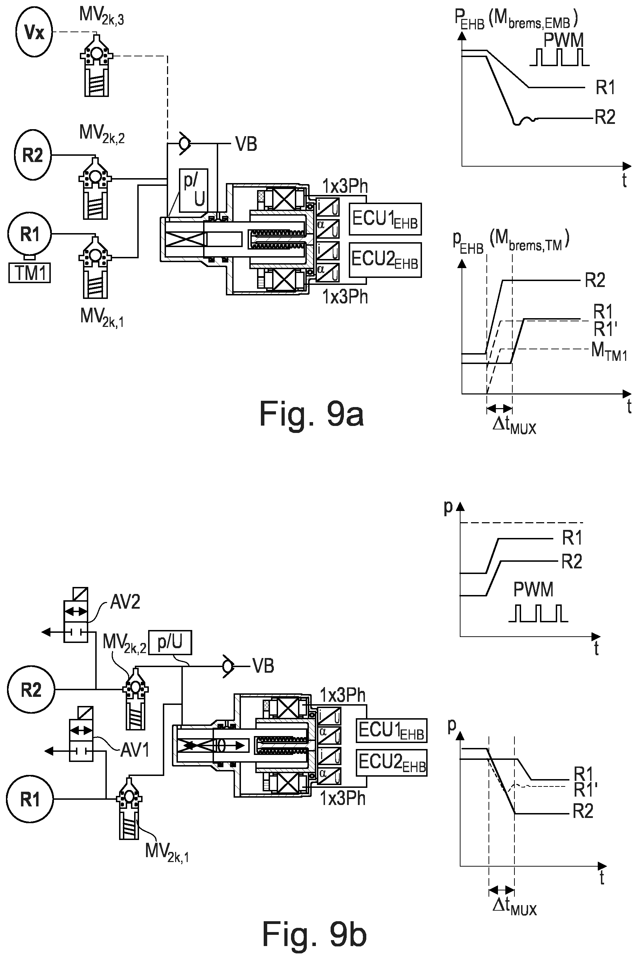

Einfacher und deutlich flexibler ist die Lösung in den Bremsaggregaten EHB-Z und EHB-VA, wie sie unten mit Bezug zu den Figuren 6a-6d beschrieben sind, insbesondere, wenn die Radeinlassventile als zuziehfeste, für bidirektionalen Volumenfluss ausgelegte Magnetventile MV₂ₖ (auch als Einlass-/Auslassventile im weiteren bezeichnet) ausgeführt sind, damit aufgrund fehlenden Rückschlagventilen der Druck gehalten werden kann, wenn die Druckversorgung ein niedriges Druckniveau als die Radbremse hat und das hydraulische Bremsmoment in der Rekuperationsstrategie konstant gehalten werden soll. Während in der Ausführungsform der EHB gemäß Figur 9a beziehungsweise bei den Varianten der Figuren 6a-6d, wo keine oder nur an einigen Radbremsen Auslassventile vorgesehen sind, der Druckabbau ausschließlich über die Ein-/Auslassventile erfolgt, bestehen in der Ausführung gemäß Figuren 6a bis 6d sowie Figur 9b die Freiheitsgrade des Bremsmomentabbaus über die Einlass-/Auslassventile oder über Auslassventile. Dies ist vorteilhaft in der Umsetzung von sehr dynamischen Bremsmomenteingriffen. In der Ausführungsform nach Figur 6b ist auch die achsindividuelle Rekuperationsstrategie wenig beeinträchtigt, da der Druckabbau wahlweise über die Einlass-/Auslassventile MV_{2k,1-4} oder Auslassventile AV₁-AV₄ erfolgt. In der Rekuperationsstrategie über das Fahrdynamiksystem kann der Bremsmomentverlauf durch den elektrischen Traktionsmotor und das Bremsaggregat (EHB) derart synchronisiert werden, dass die Rekuperation maximiert wird. Ist die Rekuperation über den elektrischen Traktionsmotor eingeschränkt, etwa bei vollem Ladezustand der Batterie, so wird die kinetische Energie über das Bremsaggregat (EHB) vernichtet; lässt die Batterie eine Einspeisung zu, so wird primär über den elektrischen Traktionsmotor rekuperiert. Mit den radindividuellen Freiheitsgraden ist daher auch eine achsweise Rekuperation mit einer X-Bremskraftverteilung einfach zu realisieren.

Bei der Ausführung als Achsdrucksteller (EHB-1, EHB-2), vorzugsweise mit einem Aufbau gemäß den Figuren 9a und 9b, ist die Rekuperationsstrategie sehr einfach und benötigt keine Ventilbestätigung, da der Bremsmomentaufbau und Bremsmomentabbau sehr genau mit der bekannten PPC-Druckregelung oder Drucksteuerung erfolgen kann.

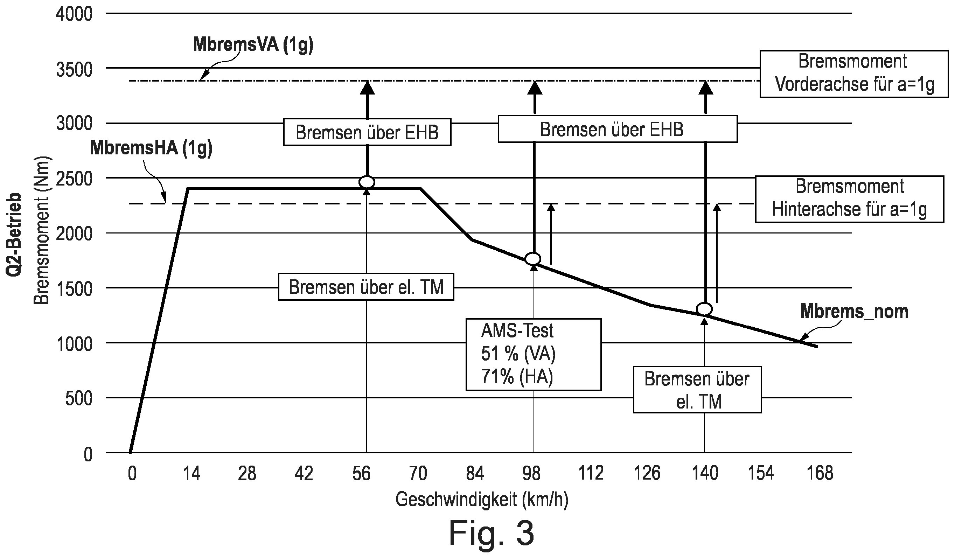

In einer **vierten vorteilhaften Funktion (d)** kann der mindestens eine elektrische Traktionsmotor ein Basisbremsmoment im Regelbetrieb erzeugen. Dies wird dadurch ermöglicht, dass moderne elektrische leistungs- und drehmomentstarke Traktionsmotoren (>200 Nm, <100 kW) eingesetzt und mit einer hohen Betriebsspannung (400V, insbesondere 700-900V) betrieben werden. Derartige Traktionsmotoren können mit hoher Dynamik Bremsmomentänderungen durchführen (typische Werte: 15000 Nm/s, erreichbar sind 30000 Nm/s), sie können im 4 Quadranten-Betrieb operieren und sie sind sehr dynamisch im Bremsmomentaufbau und Bremsmomentreduzierung. Bei niedrigen Sollbremsmomenten sind sie dynamischer als ein hydraulisches Bremsaggregat (EHB). Abhängig davon, welches Drehmoment über den gesamten Drehzahlbereich verfügbar ist (1000 Nm in Figur 3 bis zur maximalen Fahrzeuggeschwindigkeit), kann der maximale Druck des Bremsaggregats (EHB) um das maximale Drehmoment reduziert werden. Nachdem mittels der elektrischen Traktionsmotoren eine neuartige ASR-Regelung möglich ist (siehe ATZ 2/2014: "Regelalgorithmen für Rekuperation und Traktion bei Elektrofahrzeugen"), sind für die ASR-Regelung im Vergleich zum früheren Stand der Technik nicht mehr hohe Drücke erforderlich, sodass der Maximaldruck des Bremsaggregats (EHB) durch den Normalbremsbetrieb bestimmt wird.

In einer **fünften vorteilhaften Funktion (e)** kann der zumindest eine elektrische Traktionsmotor im Fehlerfall des Bremsaggregats (EHB) unterstützend verwendet werden. Neuere 1-Box-Bremssysteme, etwa wie in der DE102018212905A1 gezeigt, sind derart ausgelegt, dass bei Ausfall der Druckversorgung über die Fußkraft des Fahrers nur eine Verzögerung von 0,3 m/s² erreicht wird, welche gesetzliche Anforderungen der ECE-13-H mit einer Mindestverzögerung von 0,244 m/s² und zudem regionale Anforderungen in China erfüllt. Wird das Bremsaggregat (EHB) in das Fahrdynamiksystem) eingebunden, so kann, wie etwa in der WO 2020/165255 A1 vorgeschlagen, die Bremskraft im Fehlerfall auf 0,58 m/s² über die Nutzung der Bremskraft von elektrischen Antriebsmotoren erreicht werden. Zudem kann über die elektrischen Antriebsmotoren, etwa einen Motor TM1 der Hinterachse und einen weiteren Motor TM3 der Vorderachse, eine mit einem 2-Box-Bremssystem (iBooster +ESP-hev) vergleichbare Fahrstabilitätsfunktion erzielt erreicht werden. Damit kann durch Einbindung des Bremsaggregats (EHB) in die zentrale Steuerung des Fahrdynamiksystems eine SAE Stufe 2+ erreicht werden.

Wird das in der WO 2020/165255 A1 dargestellte Bremssystem derart weiterentwickelt, dass elektrische Antriebsmotoren gemäß Funktion (d) eine Grundbremsmoment aufbauen und die Druckversorgung zudem teilredundant mit redundanten Wicklungen ausgebildet ist, etwa indem sie mit 2x3 Phasen, (teil)redundanten Elektroniken (DV1-ECU1, DV-ECU2) und Anschlüsse an zwei Bordnetze und/oder Energieversorgungen (BN1, BN2) sowie Datenleitungen (DS1, DS2) ausgeführt ist, kann auch bei Ausfall einer Wicklung oder eines Leistungshalbleiters einer Motorendstufe, was der häufigste Ausfall bei EC-Motoren ist, die Druckversorgung mit halber Leistung beziehungsweise mit halbem Drehmoment betrieben werden. Bei einer bevorzugten Auslegung auf 140-160 bar kann somit immer noch ein Druck von 70-80 bar aufgebaut werden. Somit ist eine vollwertige ABS-Regelung auch im Fehlerfall bei einem Teilausfall der Druckversorgung möglich. Wird zudem mindestens ein Traktionsmotor in diesem Fehlerfall für die Einstellung des Grundbremsmoments für die Erzeugung eines Basisbremsmomentes genutzt, so kann auch ein ABS-Betrieb mit maximaler Verzögerung, insbesondere etwa 1 bis 1,4 g, erzielt werden.

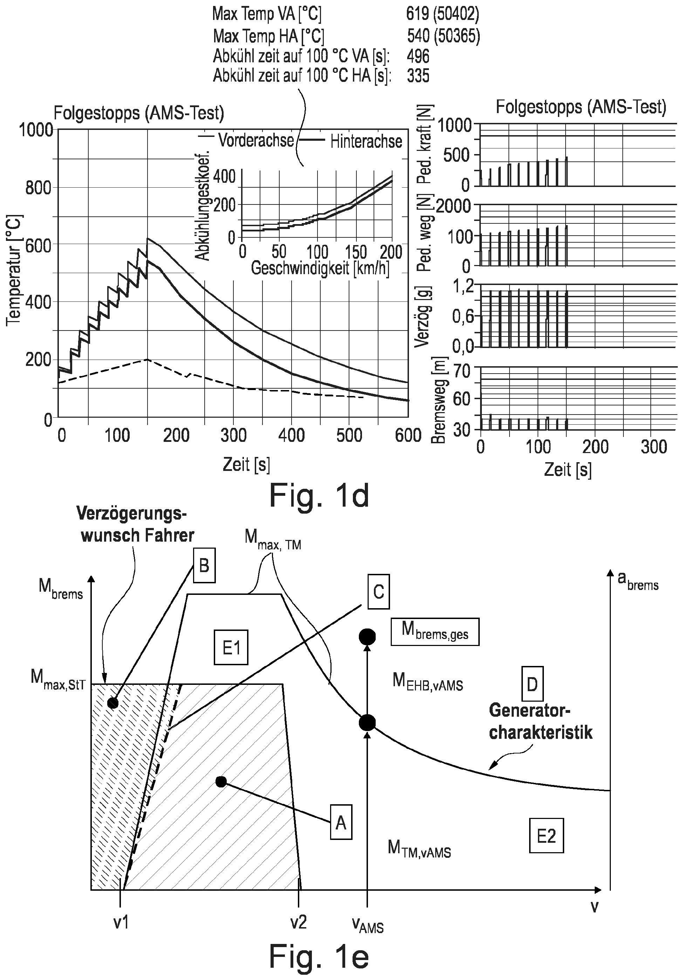

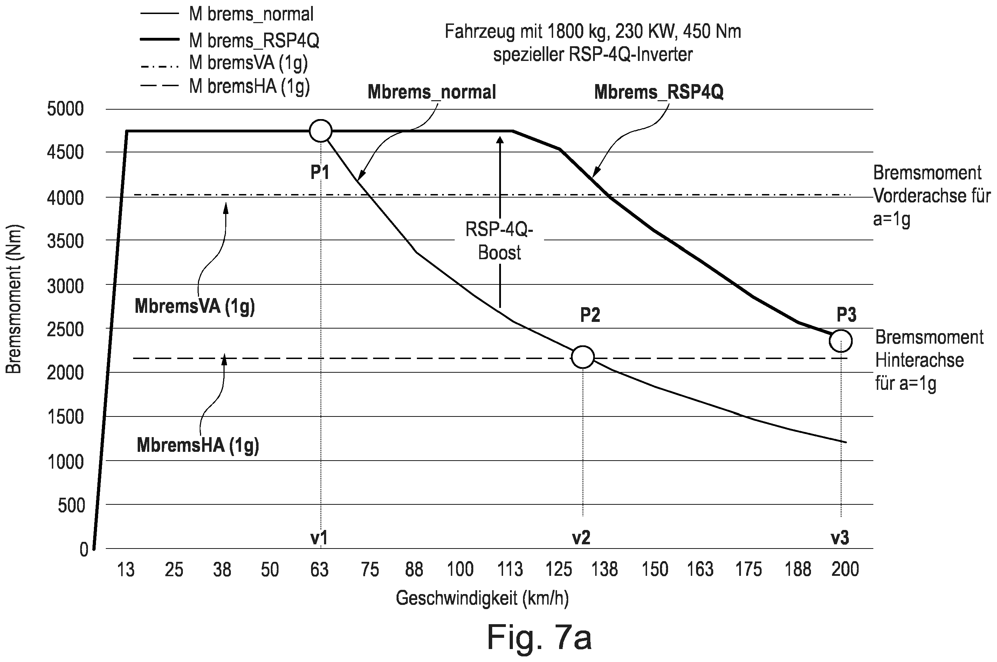

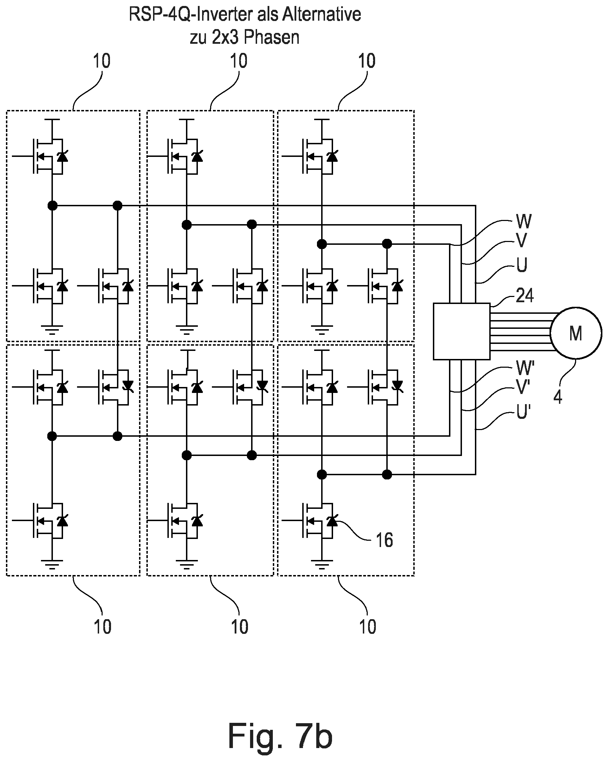

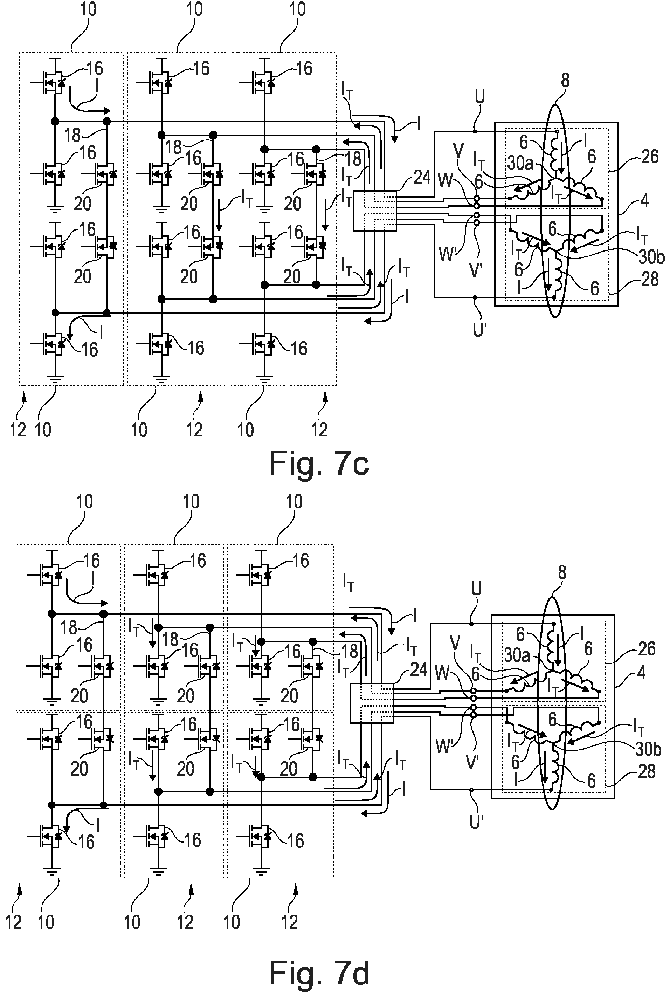

Werden in einem 1-Box-Bremssystem, wie etwa gemäß WO 2020/165255 A1, zudem in beiden Bremsfluidströmungsrichtungen, das heißt von der Druckversorgung zur Radbremse und von der Radbremse zur Druckversorgung, zuziehfeste für bidirektionalen Volumenfluss ausgelegte Einlass/Auslassmagnetventile beziehungsweise Schaltmagnetventile (SV1-SV4 der Fig.7 der WO 2020/165255 A1) zwischen Druckversorgung und Radbremse eingesetzt, so kann jeder Radkreis sicher diagnostiziert und im Fehlerfall vom Bremssystem abgetrennt werden. Dies ist bei den im Stand der Technik sonst eingesetzten Radeinlassventilen nicht möglich, da parallel zu den Einlassventilen (etwa Bezugszeichen 6a-6d der Figur 1 der DE 10 2013 222 281 A1) nicht diagnostizierbare und nicht sicher schließbare Rückschlagventile eingesetzt werden (etwa Bezugszeichen 50a-50b der Figur 1 der DE 10 2013 222 281 A1). Damit ist bei dem Fahrdynamiksystem auch im Fehlerfall ein 3-Kanal Raddruckregelbetrieb möglich, der eine Fahrzeugstabilisierungsfunktion, vergleichbar etwa mit der ESP-Funktion, sowie ein Druckhalten im Radbremskreis ermöglicht. Dies gibt wiederum weitere Freiheitsgrade in der Bremsmomentregelung, insbesondere bei radindividueller Rekuperation. Diese Art der neuartigen Einschaltventile wird vorzugsweise auch bei den erfindungsgemäßen EHB Lösungen der unten näher erläuterten Figuren 6a-6d und Figuren 9a und Figur 9b eingesetzt.

In jedem Fall ist eine 2-Kanal-ABS-Funktion an der Vorderachse zur Sicherstellung der Lenkbarkeit gemäß **Priorität 3** vorzusehen, die auch dann realisiert werden kann, wenn kein bidirektional wirkendes zuziehfestes Ventil (Schaltmagnetventil MV₂ₖ) an den Radbremsen vorgesehen ist. In diesem Fall ist ein Trennventil zwischen Vorderachse und Hinterachse vorgesehen. Die Druckregelung kann dabei alternativ über das MUX-Druckregelverfahren erfolgen mit Druckaufbau und Druckaufbau über Schaltventile, wobei die Schaltventile vorzugsweise derart ausgeführt sind, dass der Ventilsitz der Magnetventile an die Radbremse angeschlossen ist, damit sichergestellt ist, dass der Bremsdruck in der Radbremse nicht eingeschlossen ist. Optional können auch Auslassventile vorgesehen werden, damit als Alternative zum MUX-Druckabbau der Druckabbau über Auslassventile in den Vorratsbehälter erfolgt. In diesem Zusammenhang wird ferner auf die unten näher erläuterten Figuren 9a und 9b hingewiesen.

Als weitere Alternative kann die Standard-ABS-Regelung umgesetzt werden, wo über die Druckversorgung ein Vordruck eingestellt wird und der Druckaufbau über PWM-Steuerung der Schaltventile und Druckabbau über Zeitsteuerung der Auslassventile erfolgt. Hier wird der Ventilsitz an die Druckversorgung angeschlossen, damit eine proportionale Steuerung der Durchflussquerschnitt ermöglicht ist. Hier haben zuziehfeste Schaltventile eine besondere Bedeutung, damit der Bremsdruck im Fehlerfall bei hohen Differenzdrücken nicht der Radbremse eingeschlossen werden.

In einer **sechsten vorteilhaften Funktion (f)** können mittels einer Sollwertvorgabe des Fahrdynamiksystems Giermomenteingriffe zur Lenkungsunterstützung vorgenommen werden. Dazu können Druckaufbau und Druckabbau über Einlassventile (vergleiche etwa Bezugszeichen 11 der DE 10 2018 212 905 A1) entsprechend geregelt werden, so dass die hydraulische Bremskraft mit der elektrischen Bremskraft moduliert werden. Dies kann im Druckaufbau über PMW-Steuerung der Einlassventile erfolgen, im Druckabbau alternativ über das MUX-Verfahren über Einlassventile oder Trennventile oder über Druckabbau über Auslassventile.

Einfacher ist die Lösung in der Lösung mit EHB-Z und EHB-VA gemäß Figur 6a und Figur 9a, insbesondere wenn die Radeinlassventile als zuziehfeste und für bidirektionalen Volumenfluss ausgelegte Einlass-/Auslassventile ausgeführt sind, damit aufgrund fehlenden Rückschlagventilen der Druck gehalten werden kann, wenn die Druckversorgung ein niedriges Druckniveau als die Radbremse hat und das hydraulische Bremsmoment in der Rekuperationsstrategie konstant gehalten werden soll. Zudem bestehen die Freiheitsgrade des Bremsmomentabbaus über die bidirektionalen Einlass/Auslassventile bei gleichzeitigem Zurückfahren des Kolbens der Kolben-Zylinder-Einheit der Druckversorgungseinrichtung oder über Auslassventile in den Vorratsbehälter, was für die Umsetzung von sehr dynamischen Bremsmomenteingriffen vorteilhaft ist.

In einer **siebten vorteilhaften Funktion (g)** können mittels einer Sollwertvorgabe des Fahrdynamiksystems radindividuelle Bremsmomente zur radindividuellen Rekuperation erzeugt werden. Dazu müssen Druckaufbau und Druckabbau über Einlassventile (vergleiche Bezugszeichen 11 der DE 10 2018 212 905 A1) entsprechend geregelt werden, so dass die hydraulische Bremskraft mit der elektrischen Bremskraft moduliert werden. Dies kann im Druckaufbau über PMW-Steuerung der Einlassventile erfolgen, im Druckabbau alternativ über das MUX-Verfahren über Einlassventile oder Trennventile oder über Druckabbau über Auslassventile.

Einfacher und deutlich flexibler ist die Lösung mit EHB-Z und EHB-VA gemäß den unten näher erläuterten Figuren 6a, Figuren 6c und Figur 9a-9b, insbesondere wenn die Radeinlassventile als zuziehfeste Einlass-/Auslassventile MV₂ₖ ausgeführt sind, damit aufgrund fehlenden Rückschlagventilen der Druck gehalten werden kann, wenn die Druckversorgung ein niedriges Druckniveau als die Radbremse hat und das hydraulische Bremsmoment in der Rekuperationsstrategie konstant gehalten werden soll. Während in der Ausführungsform des Bremsaggregats (EHB) gemäß Figur 9a beziehungsweise bei den Varianten der Figuren 6a-6d, wo keine oder nur an einigen Radbremsen Auslassventile vorgesehen sind, der Druckabbau ausschließlich über die Ein-/Auslassventile erfolgt, bestehen in der Ausführung gemäß den Figuren 6a bis 6d sowie der Figur 9b die Freiheitsgrade des Bremsmomentabbaus über die Einlass-/Auslassventile oder über Auslassventile. Dies ist besonders in der Umsetzung von sehr flexiblen Bremsmomenteingriffen im Sinne der Maximimerung der Rekuperation von Vorteil. In der Rekuperationsstrategie über das Fahrdynamiksystem können sind der Bremsmomentverlauf des zumindest einen elektrischen Traktionsmotors und des Bremsaggregats (EHB) derart synchronisiert werden, dass die Rekuperation maximiert wird. Ist die Rekuperation über den zumindest einen elektrischen Traktionsmotor eingeschränkt, etwa bei vollem Ladezustand der Batterie, wird die kinetische Energie über das Bremsaggregat (EHB) vernichtet; lässt die Batterie eine Einspeisung zu, so wird primär über den elektrischen Traktionsmotor rekuperiert.

Bei den Funktionen (e), (f) und (g) ist ein zuziehfestes und kostengünstiges Einlass/Auslassventil MV₂ₖ von Bedeutung, weil dadurch ein Bremskreisausfall vermieden werden kann und auch bei Leckage der Schaltventile ein Radkreis weiter betrieben werden kann. Auf diese Weise kann ein 4-Kanal-Raddruckregelbetrieb auch bei Leckage der Schaltventile aufrechterhalten werden beziehungsweise bei Abschaltung eines Radkreises kann mit dem 3-Kanal-Raddruckregelbetrieb noch eine Notlenkung beziehungsweise Lenkungsunterstützung durchgeführt werden, womit die Redundanzanforderungen der elektrischen Servolenkung für höhere Stufen des automatisierten Fahrens (SAE Stufe 3-4) vereinfacht werden kann. Dies Funktionen (e) und (f) haben für die Gesamtkosten der primären Chassis-Control-Aktuatoren Bremse und Lenkung eine besonders hohe Bedeutung. Wird eine elektrische Servolenkung komplett redundant ausgeführt, so sind dabei zwei Lenkungsaktuatoren erforderlich. Hingegen kann die Bremse durch die Funktion (f) als Redundanzfunktion für die Lenkung ein valider Lösungsansatz werden zur Erfüllung der SAE Anforderungen der Stufe 3-4; Sie hat zudem den Vorteil, dass für die redundante Lenkungsfunktion ein nicht-baugleiches Aggregat verwendet werden kann, wodurch Produktionsqualitätsmängel als Fehlerquellen bei baugleichen Lenkungsaggregaten ausgeschlossen werden können. Die Lenkungsfunktion über das Bremsaggregat (EHB) kann auch als dritte Rückfallebene einer bereits redundant ausgeführten elektrischen Servolenkung EPS mit zwei Lenkaktuatoren vorgesehen werden oder als zweite Rückfallebene einer nicht oder nur teilweise redundant ausgeführten EPS vorgesehen sein, etwa mit einem Lenkaktuator mit 2x3 Phasen und einem redundanten Steuergerät. Zudem kann das Lenkaggregat (EHB) die Lenkung an einer zweiten Achse, wo keine EPS vorgesehen ist, unterstützen oder auch Giermomenteingriffe zur Stabilisierung des Fahrzeuges ergänzend zu Lenkeingriffen durchführen, etwa bei einer Bremsung auf einem µ-Split.

So können mit den oben erläuterten Funktionen mit einem hydraulischen Bremssystem mit nur einer Druckversorgung auch die SAE-Anforderungen für autonomes Fahren der Stufe 3 erfüllt werden. Für die Erfüllung der SAE-Stufe 4 und 5 sind ebenfalls alle Voraussetzungen mit der erfindungsgemäßen Erweiterung eines 1-Box-Bremssystems gemäß den Figuren 6a und 6b geschaffen. Auch eine Notbremsfunktion mit marktüblicher Dynamik von 150 ms kann sichergestellt werden, wenn die Druckversorgung redundant ausgeführt ist und elektrische Traktionsmotoren wie bei der Funktion (b) beim Bremsmomentaufbau unterstützend wirken. Damit kann zwar die maximale Dynamik von 90 ms der erfindungsgemäßen Lösung im Normalfall nicht erreicht werden, ein TTL mit 150-200 ms mit vertretbaren Einbußen kann jedoch erreicht werden. Dies entspricht den Leistungsdaten von marktüblichen Bremskraftverstärkern.

Im Vergleich können Bremssysteme für SAE Level 3 und 4 (vergleiche etwa WO 2018233854 A1) im Fehlerfall des Bremskraftverstärkers nur auf die Druckdynamik der ESP-Pumpe zurückgreifen, die nach aktuellen Pflichtenheft nur einen Druckaufbau von 450 ms auf 50 bar ermöglicht. Bei dem Fahrdynamiksystem besteht auch die Möglichkeit, den Druckaufbau über die ESP-Pumpe mit der Bremsmomentaufbaudynamik eines elektrischen Traktionsmotor zu unterstützen. Je nach Leistungsstärke der elektrischen Traktionsmotoren kann auch für ein derartiges 2-Box-Bremssystem mit einer schwachen ESP-Pumpe ein TTL von ca. 150-250 ms erreicht werden. Die Notbremsfunktion im Fehlerfall ist dann gleichwertig oder annähernd gleichwertig im Vergleich zum Normalbetrieb.

Die Einbindung von Bremssystemen in eine zentrale Steuerung bietet mit den oben erläuterten Synergien und Funktionsunterstützungen letztlich das Potential, auf die hydraulische Rückfallebene über ein Bremspedal (siehe Figuren 6-6c) zu verzichten und entweder ein E-Pedal einzuführen oder auf das Pedal komplett zu verzichten. Damit hat ein Bremssystem mit nur einer Druckversorgung in einer Baueinheit (1-Box-Bremssystem) mit dem erfindungsgemäßen FDS durchaus das Potential, eine Qualifizierung für AD Level 5 zu erreichen.

In einer **zweiten "Architektur II"** sind anstatt einer zentral über die Domäne angesteuerten hydraulischen Bremsanlage Achsmodule vorgesehen. Beispielsweise weist dabei ein Achsmodul zumindest zwei Bremsmodule auf, ausgewählt aus:
- elektrischer Antriebsmotor,
- elektromechanische Bremse (EMB) für je ein Rad,
- elektrohydraulischer Drucksteller (EHB-VA, EHB-HA) für je eine Achse mit Radregelventilen für eine Bremsmomentregelung für jeweils beide Räder der Achse.

Beispielsweise kann ein Achsmodul einen elektrischen Antriebsmotor umfassen, mittels dessen die Räder einer Achse (VA, HA) antreibbar und generativ abbremsbar sind, sowie je ein elektromechanisches Bremsaggregat (EMB) für jedes der beiden Räder der Achse oder ein gemeinsames elektrohydraulisches Bremsaggregat (EHB-VA, EHB-HA) für beide Räder der Achse (VA, HA).

Bei der zweiten Ausführungsform ist im Gegensatz zur ersten Ausführungsform vorgesehen, dass für die jeweilige Achse ein Steuergerät (S-ECU_{VA}, S-ECU_{HA}) vorgesehen ist, welches eine Kommunikationsschnittstelle zum zentralen Steuergerät (M-ECU_{Domäne}) hat und die ausgewählten Bremsmodule der Achse synchronisiert ansteuert. Die Synchronisierung ist insbesondere für den Regelbetrieb im Gegensatz zum Normalbetrieb der Bremse sehr vorteilhaft, weil unterschiedliche Verzugszeiten und Zeitverläufe im Bremsmomentaufbau und Bremsmomentabbau durch die verschiedenen Bremsmodule optimal aufeinander abgestimmt werden. Ferner werden mit einer derartigen Struktur Haftungsprobleme gelöst, weil der Anbieter einer e-Achse dann für das gesamte Antriebs- und Bremsenmanagement verantwortlich ist.

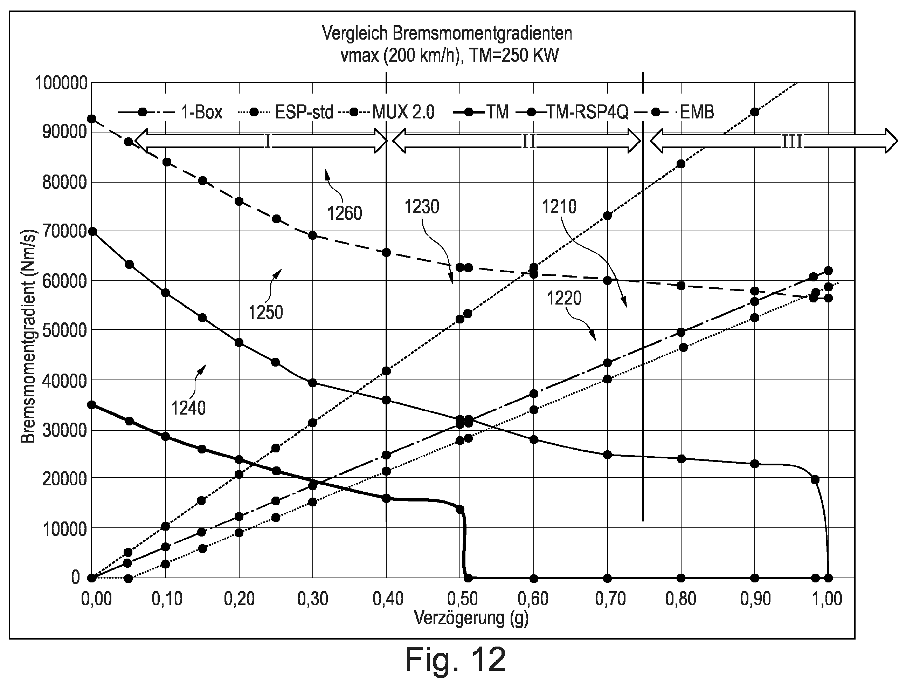

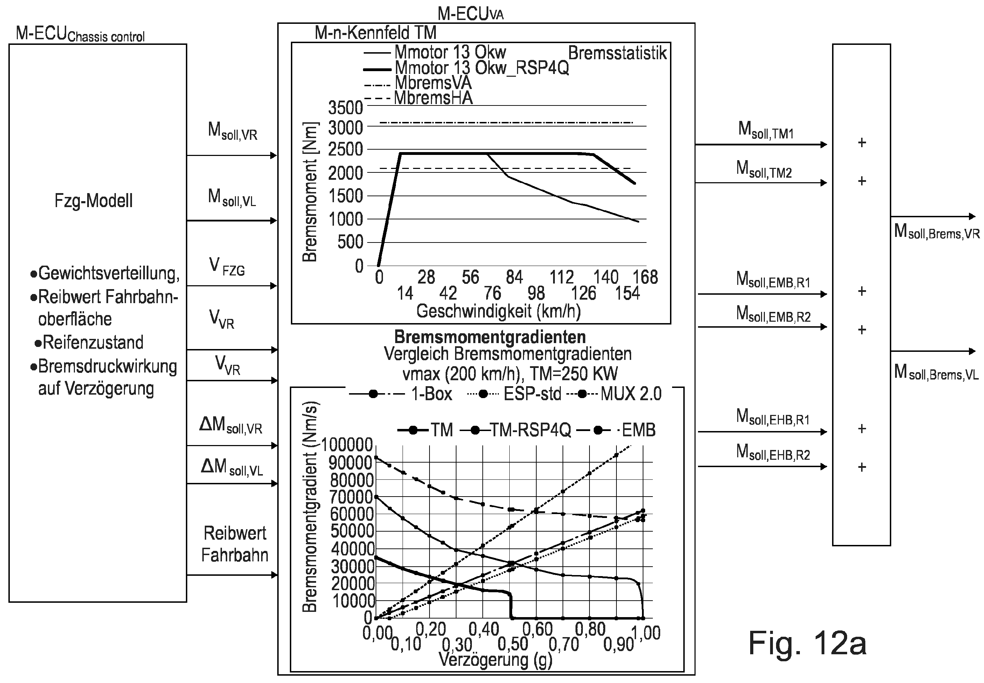

Bei dieser zweiten Ausführungsform sind verschiedene Varianten möglich:
a) Elektromechanisches Bremsaggregat EMB kombiniert mit einem elektrischen Traktionsantrieb, besonders vorteilhaft für die Vorderachse eines Fahrzeuges (siehe Figur 12a);
b) Elektromechanisches Bremsaggregat EMB kombiniert mit einem elektrohydraulischen EHB-Drucksteller mit Radregelventilen, besonders vorteilhaft für die Vorderachse (siehe Figur 12b);
c) Elektrische Traktionsmotoren für jedes Rad einer Achse kombiniert mit einem elektrohydraulischen Drucksteller EHB mit Radregelventilen, besonders vorteilhaft für die Hinterachse (siehe Figur 12c); und
d) Elektrischer Traktionsmotor für eine Achse kombiniert mit einem elektrohydraulischen Drucksteller EHB mit Radregelventilen, allgemein vorteilhaft für Vorderachse und Hinterachse (siehe Figur 12d)

Besonders vorteilhaft ist die Kombination von Elektromotor oder elektromechanischem Bremsaggregat EMB mit dem elektrohydraulischen Bremsaggregat EHB, weil sich die Vorteile der beiden Bremsmomenterzeuger ideal kombinieren lassen:
a) Elektrohydraulische Bremsaggregate EHB sind hochdynamisch im Druckabbau bei hohen Bremsmomenten und unempfindlich für hohe Bremsmomente, während elektrische Antriebsmotoren oder elektromotorische Bremsaggregate EMB ihre größten Vorteile bei den Bremsmomentgradienten bei niedrigen Bremsmomenten haben. Bei ihrer Auslegung für höhere Last steigen zudem ihre Kosten.
b) Elektrohydraulische Bremsaggregate EHB sind im Vergleich zu elektromotorischen Bremsaggregaten EMB deutlich kostengünstiger. Im Vergleich zu einem Drucksteller für eine Hinterachse mit Radregelventilen für zwei Radbremsen liegen die Kosten bei der elektromotorischen Bremse EMB ca. doppelt so hoch. Bei den elektrohydraulischen Druckstellern für die Vorderachse mit Radregelventilen für zwei Radbremsen liegen die Kosten nur um 10% höher, während die Kosten bei der elektromechanischen Bremse EMB für die Vorderachse im Vergleich zur Hinterachse um weitere 50% höher liegen. Der Grund für die überproportionale Kostensteigerung der elektromechanischen Bremse EMB sind die höheren Bremsmomente, die für die Vorderachse erreicht werden müssen, und die Notwendigkeit, bei Oberklassefahrzeugen oder SUVs zwei Motoren je Rad vorzusehen.
c) Eine Kombination des elektrohydraulischen Bremsaggregats EHB in der Ausführung als Drucksteller mit dem später beschriebenen PPC-Gen2-Druckregelverfahren mit einem elektrischen Traktionsmotor oder elektromechanischen Bremsaggregaten EMB kann die Vorteile der neuartigen PPC-Gen2-Druckregelung mit sehr präziser Bremsmomentregelung ausspielen. Totzeiten im PPC-Gen2 Verfahren, beispielsweise durch teilweisen Multiplex-Druckregelbetrieb, können durch eine Regelung über Traktionsmotoren oder EMB ausgeglichen werden, da derartige Bremsaggregate durchaus vergleichbare Bremsmomentgradienten erreichen können.

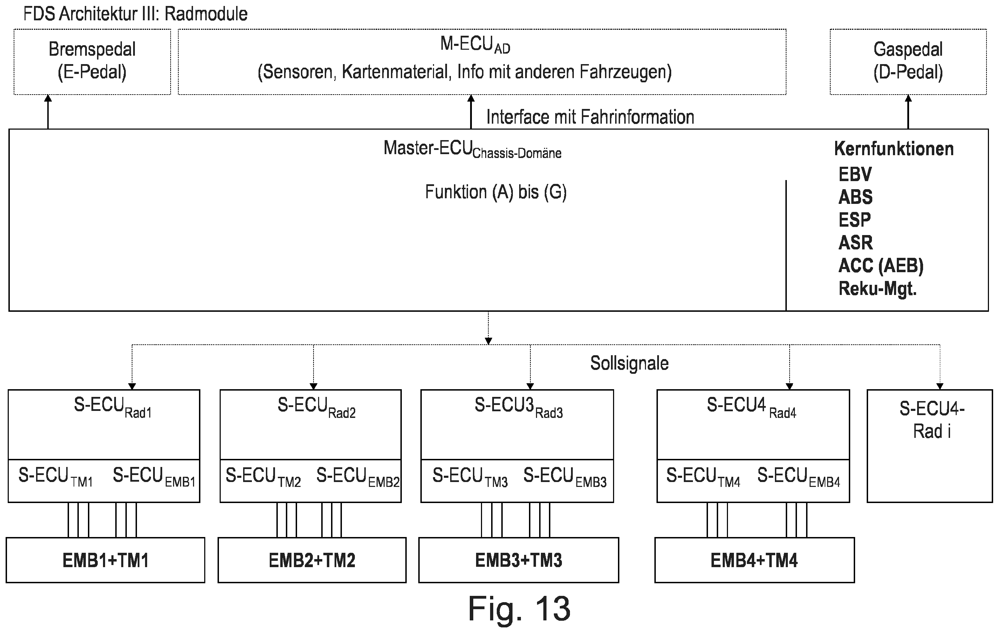

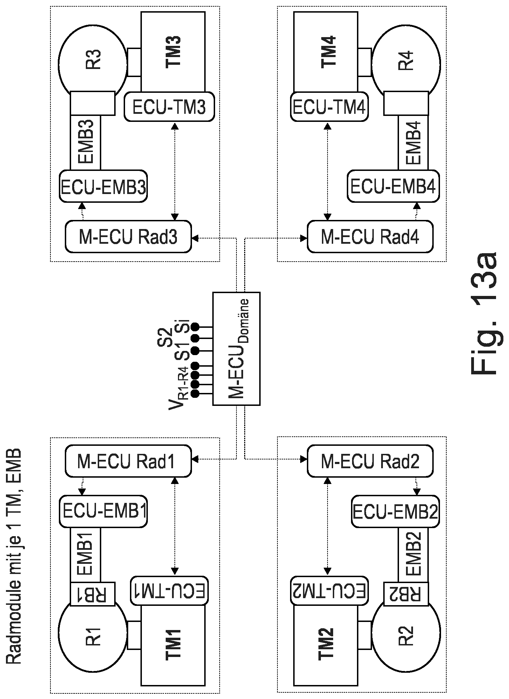

Die erreichbaren Druckmomentgradienten werden zur Illustration der Vorteile in den Figuren 13a und 13b anhand eines leistungsstarken elektrischen Traktionsmotors und mit einem typischen Bremsmomentgradienten von EMB, EHB mit AV/EV-Technik und PPC-Gen2-Betrieb weiter ausgeführt und unten näher erläutert.

Als hydraulisches Grundprinzip kommen die Ausführungsformen der Figuren 9a und 9b, die weiter unten näher erläutert werden, zum Einsatz.

Die in "Architektur I" ausgeführten Funktionen (a)-(g) können alle auch in "Architektur II" durchgeführt werden, sogar mit mehr Freiheitsgraden, weil zwei Druckversorgungen mit Druckregelventilen je Achse, die zudem vorzugsweise auch redundant ausgeführt sind, zur Verfügung stehen.

In einer dritten "Architektur III" sind statt einer konventionellen elektrohydraulischen EHB-Bremsanlage Radmodule vorgesehen, wobei für jedes Radmodul ein elektrischer Traktionsmotor und eine elektromechanische Bremse EMB vorgesehen ist. Radmodule mit elektrischen Traktionsmotoren ermöglichen eine sehr große Flexibilität bei der Gestaltung von Plattformen. Ein derartiges Konzept ist maximal flexibel und hat mehr Redundanzen als ein konventionelles Bremssystem, da bei einem Fehlerfall eines Radmoduls noch mit den verbleibenden Radmodulen alle Kernfunktionen der Bremse und Bremsregelung, Fahrzeugstabilisierung und Lenkung durchgeführt werden können. Nachteilig ist der hohe Aufwand, da für jedes Rad ein elektrischer Traktionsantrieb und ein elektromechanisches Bremsaggregat EMB erforderlich sind. Ferner sind die elektrischen Komponenten im Bereich der ungefederten Massen angeordnet und daher hohen mechanischen Belastungen ausgesetzt. Vorteilhaft ist, dass die EMB die Parkbremsfunktion mit abbilden und daher Kosten reduzieren kann.

Wie in der ersten Ausführungsform ausgeführt, ist ein synchronisierter Einsatz des elektrischen Traktionsmotors und des elektromechanischen Bremsaggregats EMB über das Fahrdynamiksystem vorteilhaft, insbesondere wenn bei der Basisbremsfunktion die Bremsleistung aufgeteilt wird (siehe hierzu insbesondere Funktion (a) der "Architektur I"). Dadurch kann der Fading-Effekt durch die Erhitzung der Reibbremse unterbunden oder verringert werden und bei einer Notbremsfunktion AEB können die Bremsmomente von Traktionsmotor und elektromechanischem Bremsaggregat EMB summiert werden (siehe Funktion (b) der 1. Ausführungsform "Architektur 1").

Im Gegensatz zur Funktion (g) der "Architektur I" kann ferner eine radindividuelle Rekuperation einfacher realisiert werden. Die achsindividuelle Rekuperation (Funktion (c) bei "Architektur 1") ist selbstverständlich auch abbildbar.

Entscheidend ist die Anwendung der Funktion (f), wo im Regelbetrieb ein Grundbremsmoment über den Traktionsmotor erzeugt wird und mittels des elektromechanischen Bremsaggregats EMB das Bremsmoment in der Regelung moduliert wird. Alternativ kann auch über das elektromechanische Bremsaggregat EMB das Grundbremsmoment erzeugt und über den elektrischen Traktionsmotor das Bremsmoment modelliert werden. Für kritische Fahrsituationen (beispielsweise bei einem µ-Sprung) kann sogar gleichzeitig mit dem elektromechanischen Bremsaggregat EMB und dem elektrischen Traktionsmotor das gemeinsame Bremsmoment aufgebaut oder abgebaut werden, sodass in Summe eine hochdynamische Bremsmomentanpassung zur Verfügung steht. Eine gemeinsame Regelung der Bremsmomente ist dadurch einfach möglich, wenn jedes Rad ein Steuergerät (M-ECU-Rad1, M-ECU-Rad2, M-ECU-Rad3, M-ECU-Rad4) hat, das die synchronisierte Bremsmomentregelung von EMB und elektrischen Traktionsmotor regelt. Damit können auch Zeitverzüge bei Bremsmomentänderungen minimiert werden.

Der Vorteil einer koordinierten Bremsmomentreduzierung ist groß, weil die technischen Herausforderungen der elektromechanischen Bremse EMB insbesondere bei hohen Bremsmomenten gegeben sind, weil sich die EMB tendenziell eher bei hohen Betätigungsmomenten verspannt und der Loslösprozess der Bremsbacken eher problematisch ist und zu hohen Kosten führt. Dieses Problem wird durch das Aufbringen eines Grundbremsmomentes über den Traktionsmotor deutlich entschärft. Zudem erlaubt es die Unterstützungsfunktion, die Kosten der elektromechanischen Bremse EMB erheblich zu verringern, wobei dieser Effekt mehr als proportional mit den Betätigungskräften bzw. Bremsmomenten zunimmt. Wenn beispielsweise 30% des geforderten Grunddrehmomentes durch den elektrischen Traktionsmotor aufgebracht werden, dann können die Kosten der elektromechanischen Bremse EMB um mehr als 30% reduziert werden, da die elektromechanische Bremse EMB entsprechend kleiner dimensioniert werden kann. Aufgrund der Achslastverteilung beim Bremsen (typischerweise 60-70% der Last an Vorderachse, 40-30% der Last an der Hinterachse) ist es vorteilhaft, die elektrischen Traktionsmotoren der Vorderachse stärker auszuführen als die elektrischen Traktionsmotoren der Hinterachse. Damit kann erreicht werden, dass Gleichteile der elektromotorischen Bremsaggregate EMB für Hinterachse und Vorderachse eingesetzt werden können, weil die Achslastverteilung beim Bremsen durch höhere Bremsleistung durch eine stärkere Bremsleistung der Motoren an der Vorderachse ausgeglichen wird.

Das Fahrdynamiksystem mit Radmodulen ist eine Lösung, die aufgrund der Redundanzen durchaus die Anforderungen der SAE Stufe 5 erfüllt. Aufgrund der hohen Kosten (vier Traktionsmotoren + vier elektromechanische Bremsen) ist diese Lösung jedoch aus Chassis-Control-Sicht eher eine Nischenlösung für spezielle Anwendungen, wobei allerdings den Mehrkosten andere Vorteile gegenüberstehen, beispielsweise Flexibilität in der Fertigung und Gestaltung von unterschiedlichen Fahrzeugkonzepten.

In einer weiteren Ausführungsform des Fahrdynamiksystems ist eine spezielle Combi-Bremse mit hydraulischer Bremse für die Vorderachse mit je einem Drucksteller für je ein Rad einer Vorderachse (EHB-VR, EHB-VL) und elektromechanischen Bremsaggregaten als EMB-Modulen (EMB1, EMB2) an jedem Rad einer Hinterachse vorgesehen, vorzugsweise mit integrierter elektrischer Parkbremse, beispielweise durch redundante Ausführung der Elektroniken der EMB1, EMB2 oder Realisierung eines Selbsthemmmechanismus der Getriebe von EMB1 und EMB2, beispielsweise durch Einsatz einer Trapezspindel aus Kunststoff. Der elektrohydraulische EHB-VR- oder EHB-VL-Drucksteller kann als Kolben-Zylinder-Einheit ohne Radregelventile oder vereinfacht als Pumpe, insbesondere mit einer Zahnradpumpe je Drucksteller, ausgeführt sein. Wird eine Kolbenpumpe, beispielsweise 2k-Pumpe einer Standard-ESP-Einheit, eingesetzt, so ist zumindest eine Ventileinrichtung zum Druckabbau erforderlich, während eine Zahnradpumpe die Funktion der Kolben-Zylinder-Einheit übernehmen und sowohl Bremsmoment aufbauen als auch Bremsmoment abbauen kann.

Für die spezielle Combi-Bremse eignet sich "Architektur II" besonders, wo die Drucksteller jeder Achse zusammengefasst sind und über ein Achssteuergerät S-ECU_{VA} und S-ECU_{HA} die Synchronisierung der Funktionen a) bis f) einfach koordiniert werden kann. Es ist aber auch eine weitere Architektur denkbar, bei welcher das Steuergerät jedes Bremsmomentstellers in Kommunikation mit der zentralen Steuereinheit M-ECU_{Domäne} steht und die zentrale Steuereinheit die Sollbremsmomente an die Steuerelektroniken der Bremsmomentsteller (EHB-VR, EHB-VL, EMB-HL, EMB-HR) der Radbremsen und an den zumindest einen Traktionsmotor (TM1,TM2, TM3, TM4) überträgt. Unabhängig von der gewählten Architektur können auch die oben erläuterten Funktionen (a) - (g) des Fahrdynamiksystems umgesetzt werden, wobei auch hier das größte Potential in der Kosten- und Gewichtsoptimierung der Reibbremse liegt, beispielsweise durch den Einsatz einer Trommelbremse an der Vorderachse und einer kleineren Scheibenbremse an Hinterachse für elektromechanische Bremsaggregate EMB. Daher ist es besonders vorteilhaft, die Bremswirkung eines elektrischen Traktionsmotors an der Vorderachse für die Combi-Bremse zu nutzen.

Die spezielle Combi-Lösung ist zwar aufwändiger als die Lösung mit elektrohydraulischen Bremsaggregaten EHB-1 oder EHB-ZA mit Radregelventilen an der Vorderachse und elektromechanischen Bremsaggregaten EMB an der Hinterachse (beispielsweise Figur 6c ohne hydraulische Verbindung zur Hinterachse). Sie hat aber den Vorteil von weiteren Freiheitsgraden in einer radnahen Positionierung der EHB-VR- und EHB-VL-Module und sie ermöglicht eine einfachere Skalierung als bei elektromechanischen Bremsaggregaten EMB an der Vorderachse. Ferner macht sie den Hersteller der Druckstelleinheiten, insbesondere neue Firmen, unabhängig von den Lieferanten von Magnetventilen und der erforderlichen Technologie der Druckregelung mit Magnetventile, welche fest in der Hand von etablierten Bremsenherstellern sind.

Zudem lässt sich die spezielle Combi-Bremse vergleichbar mit einem elektromechanischen Bremsaggregat EMB leichter applizieren. Wird statt einer Kolben-Zylinder-Einheit eine Zahnradpumpe eingesetzt, so kann damit ebenfalls eine Lösung zu vertretbaren Kosten realisiert werden. Insbesondere die Kostensenkungspotentiale durch das Fahrdynamiksystem und die Funktionen (a) - (g), wie weiter unten für andere Ausführungsformen und Architekturen erläutert wird, sind auch bei dieser Lösung signifikant.

Folgende erfinderische Ziele mit großen Funktions-, Redundanz- und Kostenvorteilen werden mit der Fahrdynamiksystem-Regelung der Architekturen I-III sowie mit der speziellen Combi-Bremse verfolgt:

### Verbesserung Funktion/ Applikation/ Neue Funktionen:

- Nutzung der elektrischen Traktionsmotoren im ABS-Betrieb insbesondere auf einer Fahrbahn mit Niedrigreibwerten (Schnee, Eis) im Regelbetrieb zur Bremswegverkürzung, wo die größeren Bremsmomentgradienten der elektrischen Traktionsmotoren Vorteile haben im Vergleich zu bekannten ABS-Systemen mit Speicherkammer (vergleiche Standard-ESP-Systeme mit langsamem Druckabbau in eine Speicherkammer).
- Nutzung der elektrische Traktionsmotoren für ASR-Betrieb durch Drehmomentregelung und Motorgeschwindigkeitsregelung beim Anfahren, statt der bekannten Lösungen durch Abbremsen des Hinterrades durch die elektrohydraulische Bremse EHB.
- Verbesserung der Notbremsfunktion AEB mit Bremsmomentanstieg auf 100 ms statt 150 ms mit der entsprechenden Verkürzung des Bremswegs, insbesondere bei hohen Geschwindigkeiten und Unfallgefahr.
- Kombinierte Giermomenteingriffe zur Fahrzeugstabilisierung oder Lenkung durch Nutzung von Drehmomenteingriffen, die mittels des elektrischen Traktionsmotors und eines Bremsmoments durch ein elektrohydraulische Bremsaggregat EHB erzeugt werden.
- Kombinierte Bremseingriffe im Regelbetrieb durch den elektrischen Traktionsmotor und elektrohydraulische Bremse EHB, beispielsweise bei dynamischen Änderungen der Fahrbahneigenschaften, etwa beim µ-Sprung, wo ein schneller Druckabbau gefordert ist.
- ABS-Regelung mit elektrohydraulischer Bremsaggregat EHB im Multiplex-Verfahren mit Drehmomentregelung über elektrische Traktionsmotoren, damit Vermeidung von Totzeiten des Multiplex-Systems.
- Nutzung der Vorteile des geschlossenen hydraulischen Bremssystems für eine schnelle Applikation der Kernfunktionen ABS und ESP und Automatisierung von neuen Softwarefunktionen über zentrale Over-the-air-Updates, beispielsweise Implementierung von Softwareupgrades beim Übergang vom SAE-Level 2 auf die SAE-Level 3-5.
- EBV-Regelung mit elektrischem Traktionsmotor an der Hinterachse und elektrohydraulischer Bremse EHB an der Vorderachse.
- Umsetzung einer redundanten ASR-Funktion durch den elektrischen Traktionsmotor oder das elektrohydraulische Bremsaggregat EHB.

### Vorteile durch Kosten- und Gewichtsreduzierung:

- Nutzung der elektrischen Traktionsmotoren zur Reduzierung der thermischen Belastung der Bremssättel bei Mehrfachbremsungen (sogenannter AMS Fading-Test) und somit Downsizing der elektrohydraulischen Bremsanlage, beispielsweise Auslegung des elektrohydraulischen Bremsaggregats EHB auf den Blockierdruck und zusätzlich eine Reserve von 20-40%, das heißt 120-140 bar, anstatt 200-200 bar, optional sogar Auslegung auf kleinere Drücke als den geforderten Blockierdruck (60-80 bar) bei erfolgreichen Implementierung der Bremse über elektrische Traktionsmotoren mit zuverlässigem Energiemanagement auch bei voller Batterie.
- Nutzung der elektrische Traktionsmotoren zur Reduzierung der thermischen Belastung der Bremssättel und Ermöglichung des Einsatzes von kostengünstigen Trommelbremsen an der Hinterachse.
- Reduzierung des Feinstaubes und des Verschleißes der Bremsanlagen, indem vorwiegend mittels der elektrischen Traktionsmotoren gebremst wird.
- Downsizing des elektromotorischen Bremsaggregats EMB durch Bremsmomentunterstützung durch den elektrischen Traktionsmotor, insbesondere an der Vorderachse des Fahrzeuges, aber auch Hinterachse.
- Einsatz einer elektrohydraulischen Bremse EHB mit einer einfachen 2-K Pumpe mit relativ geringer Leistung statt einer 1-Box mit leistungsstarkem EC-Motor und Abbildung der Notbremsfunktion in 150 ms durch entsprechende Leistung der elektrischen Traktionsmotoren in Kombination mit einem Standard ESP-Gerät mit TTL = 500 ms.
- Einsatz kleinerer Magnetventile durch Abbildung hochdynamischer Druckaufbauten mittels des elektrischen Traktionsmotors.

### Verbesserung durch Redundanz:

- Nutzung des elektrischen Traktionsmotors zum Bremsen bei einem Ausfall oder Teilausfall des Bremssystems.
- Nutzung des elektrischen Traktionsmotors zum Aufrechterhalten einer schnellen Notbremsung AEB mit TTL = 150 ms auch bei Ausfall der primären Bremsanlage.
- Nutzung des elektrischen Traktionsmotors zum Aufrechterhalten der EBV-Funktion auch bei Ausfall des Bremskreises der Hinterachse.
- Nutzung des elektrischen Traktionsmotors bei Bremskreisausfall.
- Nutzung des elektrischen Traktionsmotors bei Ausfall der ESP-Funktion.
- Nutzung des elektrischen Traktionsmotors bei Ausfall der Lenkungs-Funktion oder Unterstützung der Lenkungseingriffe an der Vorderachse durch Giermomenteingriffe an der Hinterachse.
- Umsetzung einer redundanten ASR-Funktion durch den elektrischen Traktionsmotor oder ein elektrohydraulisches Bremsaggregat EHB

Nachfolgend wird die Erfindung mittels mehrerer Ausführungsbeispiele beschrieben, die anhand von Figuren näher erläutert werden. Hierbei zeigen:
- Fig. 1a:: Fading-Effekt beim AMS-Test als Basis zur Auslegung einer Standard-Bremsanlage;
- Fig. 1b:: Verblendungsstrategie mit regnerativen Bremsen gemäß Stand der Technik ohne Fahrdynamiksystem;
- Fig. 2a:: Fahrdynamiksystem "Architektur I": Hydraulisches Bremssystem EHB-Z, EHB-VA in Kombination mit elektrischen Traktionsmotoren TM1, TM2, TM3;
- Fig. 2b:: Fahrdynamiksystem "Architektur I": Hydraulisches Bremssystem in Kombination mit elektrischen Traktionsmotoren;
- Fig. 3:: Neuartige Verblendungsstrategie mit Fahrdynamiksystem und starkem elektrischem Traktionsmotor oder starken elektrischen Traktionsmotoren;
- Fig. 4:: AEB-Zeitgewinn mit Bremsen über elektrischen Traktionsmotor und elektrohydraulisches Bremsaggregat EHB mit angepasster EBV-Funktion;
- Fig. 5:: ABS-Regelbetrieb mit elektrohydraulischem Bremsaggregat EHB und Erzeugung des Basisbremsmoments durch elektrischen Taktionsmotor;
- Fig. 5a:: Typischer ABS-Zeitverlauf mit Radgeschwindigkeit, Druck und Ventilzeiten bei Bremsmomentregelung mit elektrohydraulischem Bremsaggregat EHB;
- Fig. 5b:: Optimierter ABS-Zeitverlauf mit Radgeschwindigkeit, Druck und Ventilzeiten bei Bremsmomentregelung mit elektrischem Traktionsmotor;
- Fig. 5c:: ABS-Regelbetrieb bei einem µ-Sprung mit elektrohydraulischem Bremsaggregat EHB in Kombination mit elektrischem Traktionsmotor;
- Fig. 5d:: ABS-Regelbetrieb im Fall low-µ mit elektrohydraulischem Bremsaggregat EHB in Kombination mit elektischem Tranktionsmotor an der Hinterachse;
- Fig. 6a:: Konzept A für Fahrdynamiksystem "Architektur I": EHB-Z für radindindivuelle Regelung für die Vorderachse und die Hinterachse in Kombination mit elektrischem Traktionsmotor an der Vorderachse und an der Hinterachse;
- Fig. 6b:: Konzept B für Fahrdynamiksystem "Architektur I": EHB-Z für radindividuelle Regelung für die Vorderachse in Kobination mit einem Grundbremsmoment für die Hinterachse, ABS-Regelung an der Hinterachse mittels elektrischer Traktionsmotoren;
- Fig. 6c:: Konzept B für Fahrdynamiksystem "Architektur I": EHB-Z für radindividuelle Regelung für die Vorderachse in Kombination mit einem Grundbremsmoment für die Hinterachse, ABS-Regelung an der Hinterachse mittels elektromechanischem Bremsaggregat EMB;
- Fig. 6d:: Konzept D für Fahrdynamiksystem "Architektur I": EHB-VA für radindividuelle Regelung der Vorderachse, Bremsen und ABS-Regelung an der Hinterachse ausschließlich mit elektrishcen Traktionsmotoren;
- Fig. 7a:: 250 KW-Motorkennfeld mit leistungsstarkem Motor & Power-Boost über neuartigen RSP-4Q-Inverter;
- Fig. 7b:: Aufbau eines neuartigen RSP-4Q-Inverters;
- Fig. 8-8c:: Zuziehfestes Einlass/Auslassventil MV₂ₖ für Druckaufbau und Druckabbau bei hohen Druckgradienten und Bremsdrücken;
- Fig.9a:: Neuartige Druckregelung mit Einlass/Auslassventil MV_{2K} (PPC-Gen-V1);
- Fig. 9b:: Neuartige Druckregelung mit Einlass/Auslassventil MV_{2K} (PPC-Gen2-V2);
- Fig.10:: Fahrdynamiksystem "Architektur II": E-Achsmodule mit Achssteuerelektronik S-ECU_{VA} und S-ECU_{HA};
- Fig.11a:: Fahrdynamiksystem "Architektur II": E-Achsmodul I mit zwei elektromotorischen Bremsaggregaten und einem elektrischen Traktionsmotor;
- Fig.11b:: Fahrdynamiksystem "Architektur II": E-Achsmodul II mit einem elektrohydraulischen Bremsaggregat und zwei elektromotorischen Bremsaggregaten;
- Fig.11c:: Fahrdynamiksystem "Architektur II": E-Achsmodul III mit einem elektrohydraulischen Bremsaggragat und einem elektrischen Traktionsmotor;
- Fig.11d:: Fahrdynamiksystem "Architektur II": E-Achsmodul IV mit einem elektrohydraulischen Bremsaggregat und zwei elektrischen Traktionsmotoren;
- Fig. 12:: Vergleich Bremsmomentgradienten elektrischern Traktionsmotor TM, elektrohydraulisches Bremsaggregat EHB, elektromotorisches Bremsaggregat EMB und Betriebsbereiche;
- Fig.12a:: Entscheidungsheuristik mit Auswertung von Kennfeldern, Kerndaten und Signalen;
- Fig. 13:: Fahrdynamiksystem "Architektur III": Radmodule mit Radsteuerelektronik für elektromotorisches Bremsaggregat und elektrischen Traksionsmotor; sowie
- Fig.13a:: Fahrdynamiksystem "Architektur III": Radmodule mit vier elektromotorischen Bremsaggregaten und vier elektrischen Traktionsmotoren.

**Figur 1d** zeigt eine typische Simulation eines AMS-Tests, nach dem gemäß Stand der Technik eine Bremsanlage ausgelegt wird. Bei dieser Simulation werden 10 Folgebremsungen aus 100 km/h simuliert. Wird bei der Dimensionierung des maximalen Druckes der sogenannte AMS-Fading-Test zugrunde gelegt (Bremsenhandbuch 5. Auflage, Kap. 6.3.2, Abbildung 6.10), so erwärmen sich typischerweise die Radbremsen der Vorderachse auf etwa 600°C, die Radbremsen der Hinterachse auf etwa 500°C. Die Pedalkraft bei Standard-Vakuumbremskraftverstärkern steigt dann um etwa 80% an, das heißt, die Bremsanlage muss für den Fading-Fall auf einen 80% höheren Druck ausgelegt werden, als für den normalen Blockierdruck erforderlich wäre. Mit entsprechender Sicherheitsreserve werden daher typische Bremsanlagen auf 200-220 bar Maximaldruck ausgelegt.

**Figur 1e** zeigt das aktuell marktübliche Bremsenmanagement mit elektrohydraulischer Bremse beim Verblenden mit einem elektrischen Traktionsmotor. Der Ablauf ist etwa im Bremsenhandbuch 5. Auflage, Kap. 19.3.2 und 19.3.3 näher beschrieben und ist in Figur 1a wiedergegeben. Dieses Management wird nunmehr als einer der Kerngedanken der Erfindung erweitert. Charakteristisch ist, dass zu Beginn einer Bremsung bei kleinen Fahrzeuggeschwindigkeiten (Bereich B) hydraulisch gebremst wird, während das generatorische Bremsen bei der Geschwindigkeit v₁ stufenweise erhöht wird und bis zur Geschwindigkeit v₂ stufenweise reduziert wird; das heißt, bei einer kleinen Fahrzeuggeschwindigkeit (v₁<10 km/h, Bereich B) und großen
Fahrzeuggeschwindigkeit (v₂>60 km/h, Bereich E2, D) wird jeweils hydraulisch gebremst, nicht regenerativ. Zudem wird das verfügbare Potential des regenerativen Bremsens, zum Beispiel ein stärkeres Bremsen oberhalb des Bremsmoments von Mₘₐₓ zwischen v₁ und v₂ und ein regenerative Bremsen im Geschwindigkeitsbereich >v₂ nicht ausgeschöpft. Das heißt, obwohl ein höheres Bremsmoment bis zu M_{max,TM} zur Verfügung stehen könnte, wird dies in diesem Geschwindigkeitsbereich (Bereich E1) nicht ausgenutzt. Dies ist oftmals technisch bedingt, etwa wenn die eingesetzte Bremslage nicht für höhere Rekuperation ausgelegt ist. Dies ist zum Beispiel bei dem in der DE 10 2012 211 278 A1 beschriebenen System dadurch begrenzt, dass die Speicherkammer der ESP-hev-Einheit nur begrenzt Volumen aufnehmen kann, sodass die Verblendung limitiert ist.

Bei höheren Verzögerungen und Geschwindigkeiten spielen zudem Sicherheitsaspekte eine Rolle: So wird beispielsweise nicht regenerativ gebremst wird, wenn es in einem ABS-Fall durch das Bremsmoment des elektrischen Traktionsmotors zu blockierenden Rädern führen könnte - hier schafft erst das Fahrdynamiksystem der Erfindung Abhilfe durch eine zentrale Steuerung des elektrischen Traktionsmotors und des elektrohydraulischen Bremsaggregats. Daher ist in der Verblendungsstrategie gemäß Stand der Technik im Bereich E1 und E2 kein regeneratives Bremsen vorgesehen.

Aus den genannten Gründen wird das Potential des regenerativen Bremsens sowie der Optimierung der Reibbremse für den AMS-Fading-Fall bei bekannten Systemen nicht ausgeschöpft, da der AMS-Fading-Fall ja gerade bei einer Geschwindigkeit ab etwa 100 km/h und einer Vollbremsung auftritt. Dort wird nach Stand der Technik (siehe Figur 1) rein hydraulisch gebremst. Würde die Bremsleistung beim AMS-Test bespielhaft zu 30% vom elektrischen Traktionsmotor übernommen werden (M_{el.TM, AMS}), so wäre der Fading-Effekt deutlich reduziert, da die Erwärmung der Bremsanlage signifikant geringer ist. Die Bremsanlage könnte dann auf einen deutlich niedrigeren Maximaldruck, etwa 140-160 bar, ausgelegt werden. Eine Maximierung mittels der erfindungsgemäßen Fahrdynamiksystem-Regelung hätte dreierlei Effekte mit signifikanten Kosten- und Gewichtseinsparungen:
1. Die Regeneration könnte maximiert werden, was die Reichweite von E-Fahrzeugen erhöht und für den Betrieb von Wärmepumpen genutzt werden kann,
2. Die Reibbremse könnte vereinfacht werden, beispielsweise durch einfachere Kühlung, geringeren Verschleiß und kleinere Bremsscheiben, und kostengünstige Trommelbremsen könnten Scheibenbremsen ersetzen,
3. Ein Downsizing der elektrohydraulischen Bremse wäre möglich, insbesondere mit einem kleineren EC-Motor für geringere Maximalmomente, eine Auslegung der Radregelventile auf geringere Maximaldrücke, eine Gewichtsreduzierung des elektrohydraulischen Bremsaggregats EHB und ein kleineres Volumen der Druckversorgungseinheit des elektrohydraulischen Bremsaggregats.

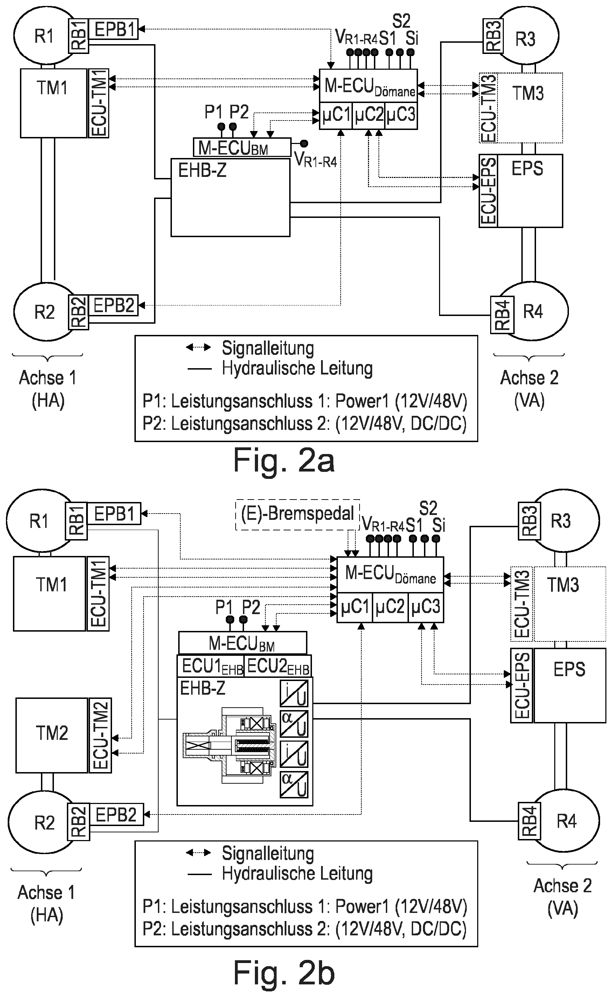

**Figur 2** zeigt die vorteilhafte Fahrdynamiksystem "Architektur I" für eine gemeiname Wirkungsweise von elektrischen Traktionsmotoren an der Vorderachse (TM3) und/oder an der Hinterachse (TM1, TM2), kombiniert mit einer elektrohydraulischen Bremsanlage der Topologie EHB-Z oder EHB-VA gemäß Abbildung 2. Die zentrales Steuereinheit übernimmt hier die Regelung der Bremsmomente der elektrischen Traktionsmotoren TM1, TM2, TM3 und der elektrohydraulischen Bremsaggregate EHB-Z, EHH-VA für mindestens eine der folgenden Funktionen:
- (A) Basisbremse mit Thermomanagment und Energiemanagment der zugeführten und abgeführten Energie (elektrische Energie, Wärmeenergie) des Traktionsmotors;
- (B) Notbremse AEB mit elektronischer Bremskraftverteilung (EBV);
- (C) Regeneratives Bremsen an mehreren Achsen;
- (D) ABS-Regelung mit Basisbremsmomentunterstützung und/oder gemeinsamen Bremsmomentregelung;
- (E) Bremsbetrieb bei Ausfall des elektrohydraulishcen Bremsaggregats EHB-Z, EHB-VA;
- (F) Giermomenteingriffe mittels radindividueller Bremsmomenteingriffe;
   und/oder
- (G) radindivduelle Bremsmomenteingriffe für radindividuelles regeneratives Bremsen.

Das Fahrdynamiksystem sendet Sollwerte an die unterschiedlichen Aggregate, wobei die Sollwerte insbesondere Bremssollmomente oder Bremssolldrücke umfassen. Für bestimmte Funktionen (etwa die oben beschriebenen Funktionen (C), (E), (F)) werden auch Sollsignale für die Drucksteuerung oder Druckregelung, etwa Steuersignale für Magnetventile für Funktionen wie Schaltdauer der Öffnungszeit oder eine PWM-Frequenz beim Drosselbetrieb, und/oder Vordrücke für die Druckversorgungseinrichtung zum Druckaufbau oder Druckabbau vorgegeben.

Ferner kann die M-ECU_{Domäne} auch eine Schnittstelle zum Steuergerät oder Domäne des autonomen Fahrens M-ECU_{AD} aufweisen und kann weitere Informationen auswerten, die für eine effektive und prädiktive Regelung hilfreich sind. Dies sind etwa Kamerainformationen über die Fahrbahnbeschaffenheit (Schnee, Eis, Regen) oder Informationen über die Umgebung (Abstände zu Passanten und/oder anderen Fahrzeugen).

**Figur 2a** zeigt den beispielhaften Aufbau einer Fahrzeugarchitekur mit dem des Fahrdynamiksystem mit hydraulischen Leitungen sowie Signalleitungen zwischen den Aggregaten und Sensoren. Die zentrale Steuereinheit M-ECU_{Domäne}, vorzugsweise umfassend drei Microcontrollern µC1, µC2, µC3 zur Umsetzung einer 2-aus-3-Architektur, kommunziert mit dem Steuergerät des elektrohydraulischen Bremsaggregats (M-ECU_{BM}) sowie den elektrischen Traktionsmotoren TM1, (optional TM2) der Hinterachse und dem elektrischen Traktonsmotor TM3 der Vorderachse, insbesondere über redundante Datenleitungen.

Die zentrale Steuereinheit M-ECU_{Domäne} kann insbesondere zumindest einen sehr leistungstarken Microcontroller und einen großen Speicher (in der Dimensionierung im Gigabyte-Bereich) aufweisen, damit über Artificial Intelligence (AI) eine automatische Applikation vor der Erstinbetrriebnahme des Fahrzeuges und/oder im Fahrzeugbetrieb umgesetzt werden kann. Alternativ kann statt eines Domänenrechners auch ein Zentralrechner eingesetzt werden oder es können die typischerweise größeren Ressouren eines Zentralrechners, der für die Verarbeitung von Multimediadaten ausgelegt ist, inbesondere für die Applikation über AI genutzt werden.

Die zentrale Steuereinheit M-ECU_{Domäne} empfängt Daten von Raddrehzahlsensoren der Räder v_{R1} - v_{R4} und vorzugsweise weitere Sensorsignale S1, S2, Si, etc. Die Sensorsignale S1, S2, Si können von Giermomentsensoren, Beschleunigungssensoren und/oder Gewichtssensoren bereitgestellt werden, die für die zentrale Steuerung über ein Fahrzeugmodell von Bedeutung sind, weil diese Sensoren es ermöglichen oder zumindest erleichtern, die zentrale Steuerung zu optimieren. So kann der Gewichtssensor vorteilhaft genutzt werden, um die Rekuperationsstrategie abhängig vom Gewicht anzupassen. Giermomentsensoren sind hilfreich für Fahrdynamikeingriffe, beispielsweise Torque-Vektoring oder ESP-Giermomenteingriffe, und Beschleunigungssensoren helfen bei der Kalibrierung des Zusammenhangs zwischen dem Bremsdruck eines hydraulischen Bremsaggregats (EHB) und dem erzielten Bremsmoment bzw. Bremsdruck und der erzielten Fahrzeugverzögerung. Weitere Sensoren oder Daten aus dem autonomen Fahrsystem, etwa Daten von Kameras und Lidarsensoren, Kartenmaterial oder Daten in der Interaktion mit Umgebung und anderen Fahrzeugen zum Beispiel in der Car2X (V2x) oder Car2Car (V2V) Kommunikation können ebenfalls verwendet werden, um verkehrsspezifisch Bremsmomenteingriffe vorzunehmen oder das Fahrzeug zielorientiert zu verzögern und im Fehlerfall, etwa bei einem Teilausfall mit reduzierter maximaler Verzögerung, das Fahrzeug mit angepasster Geschwindigkeit oder frühzeitiger Verzögerung zu betreiben.

Ergänzend sind vorteilhafterweise noch die elektrische Servolenkung EPS der Vorderachse und optional elektrische Parkierbremsen (EPB1, EPB2) der Hinterachsen für eine Kommunikation mit der zentralen Domäne vorgesehen. Die Einbindung der EPS ermöglicht koordinierte Fahrdynamikeingriffe, etwa Torque-Vektoring, ESP-Giermomenteingriffe über das elektrohydraulische Bremsaggregat EHB in Ergänzung zur Lenkung beziehungsweise zur Unterstützung der elektrischen Servolenkung des Fahrzeuges beim Ausfall oder Teilausfall der EPS. Zudem ist eine Einbindung der elektrischen Parkbremse EPB vorteilhaft, weil die Parkbremse neben der reinen Stillstandssicherstellung auch noch dynamische Bremsfunktionen oder Notfunktionen durchführen kann, wie etwa in der WO 2020165255 A1 beschrieben.

**Figur 2b** zeigt den beispielhaften Aufbau einer weiteren Fahrzeugarchitekur des erfindungsgemäßen Fahrdynamiksystems mit EHB-Z mit hydraulischen Leitungen sowie Signalleitungen zwischen den Bremsaggregaten und Sensoren. Die zentrale Steuereinheit M-ECU_{Domäne}, vorzugsweise umfassen drei Microcontroller µC1, µC2, µC3 zur Umsetzung einer 2-aus-3-Architektur, kommunziert mit einem Steuergerät des hydraulischen Bremsaggregats (M-ECU_{BM}) mit zwei redundanten Steuergeräten ECU1_{EHB} und ECU2_{EHB} sowie den elektrischen Traktionsmotoren TM1, TM2 der Hinterachse und dem elektrischen Traktonsmotor TM3 der Vorderachse, insbesondere über redundante Datenleitungen. Im Gegensatz zur Fig.2b ist im EHB-Z kein Pedal integriert und es ist nur eine hydraulische Leitung zu den Radbremsen der Hinterachse vorgesehen sowie je ein elektrischer Traktionsmotor für je ein Rad der Hinterachse, sodass die Bremsmomentregelung für unterschiedliche Funktionen ABS, ASR, ESP, EDB und rekuperatives Bremsen durch die elektrischen Traktionsmotoren durchgeführt wird, während das elektrohydraulische Bremsaggregat EHB-Z lediglich ein Grundbremsmoment bereitstellt. Weitere Details zum hydraulischen Layout der EHB-Z sind in Figur 6b gezeigt.

In den zentralen Steuereinheiten M-ECU_{Domäne} werden Daten von Raddrehzahlsensoren der Räder v_{R1} - v_{R4} empfangen sowie vorzugsweise weitere Sensorsignale S1, S2, Si, etc. Die Sensorsignale S1, S2, Si können von Giermomentsensoren, Beschleunigungssensoren und/oder Gewichtssensoren bereitgestellt werden, die für die zentrale Steuerung über ein Fahrzeugmodell von Bedeutung sind, weil diese Sensoren es ermöglichen oder zumindest erleichtern, die zentrale Steuerung zu optimieren. So kann der Gewichtssensor vorteilhaft genutzt werden, um die Rekuperationsstrategie abhängig vom Gewicht anzupassen. Giermomentsensoren sind hilfreich für Fahrdynamikeingriffe, beispielsweise Torque-Vektoring oder ESP-Giermomenteingriffe, und Beschleunigungssensoren helfen bei der Kalibrierung des Zusammenhangs zwischen Bremsdruck einer hydraulischen Bremsanlage (EHB) und dem erzielten Bremsmoment bzw. Bremsdruck und erzielten Fahrzeugverzögerung. Weitere Sensoren oder Daten aus dem autonomen Fahrsystem, etwa Daten von Kameras und Lidarsensoren, Kartenmaterial oder Daten in der Interaktion mit der Umgebung und mit anderen Fahrzeugen, etwa in der Car2X (V2x) oder Car2Car (V2V) Kommunikation, können ebenfalls verwendet werden, um verkehrsspezifisch Bremsmomenteingriffe vorzunehmen oder zielorientiert das Fahrzeug zu verzögern und im Fehlerfall, zum Beispiel bei einem Teilausfall mit reduzierter maximaler Verzögerung, das Fahrzeug mit angepasster Geschwindigkeit oder frühzeitiger Verzögerung zu betreiben.

Ergänzend sind vorteilhafterweise noch die elektrische Servolenkung EPS der Vorderachse und optional ebenfalls die elektrischen Parkierbremsen (EPB1, EPB2) der Hinterachsen für eine Kommunikation mit der zentralen Domäne vorgesehen. Die Einbindung der EPS ermöglicht koordinierte Fahrdynamikeingriffe, etwa Torque-Vektoring oder ESP-Giermomenteingriffe über das hydraulische Bremsaggregat EHB in Ergänzung zur Lenkung beziehungsweise zur Unterstützung der elektrischen Servolenkung des Fahrzeuges beim Ausfall oder Teilausfall der EPS. Zudem ist einen Einbindung der elektrischen Parkbremse EPB vorteilhaft, weil die Parkbremse neben der reinen Stillstandssicherstellung auch noch dynamische Bremsfunktionen oder Notfunktionen durchführen kann, wie etwa in der WO2020165255A1 beschrieben.

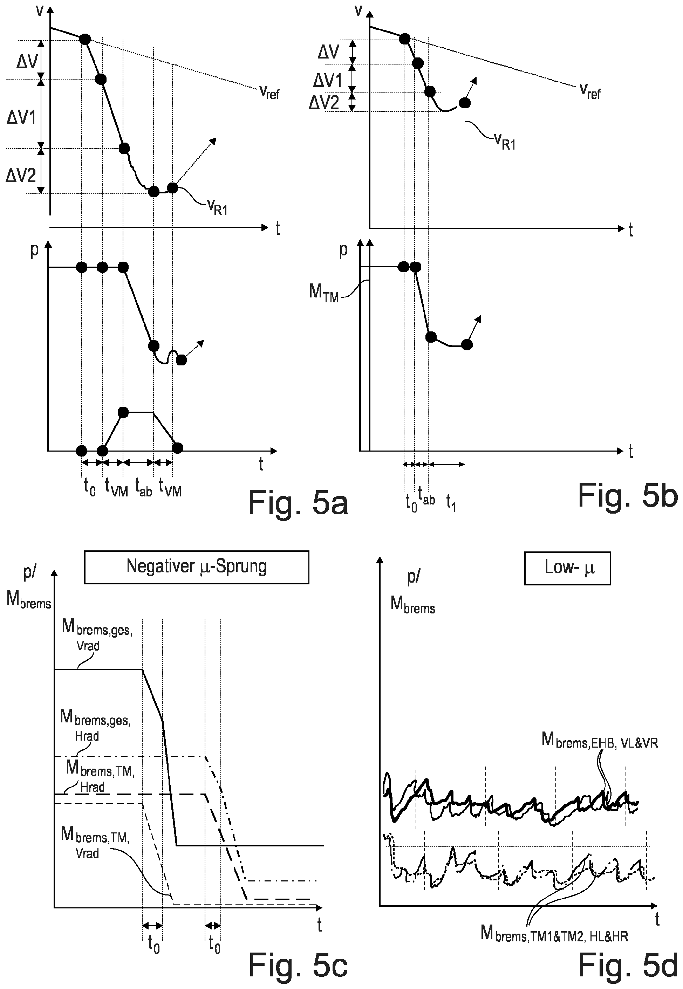

**Figur 3** zeigt die Verblendungsstrategie des Fahrdynamiksystems mit der vollen Ausnutzung der Bremskraft eines elektrischen Traktionsmotors über den gesamten Geschindigkeitsverlauf des Fahrzeuges sowie bis zum maximalen Bremsmoment der eingesetzten elektrischen Traktionsmotors. Die volle Ausnutzung ist bei dem Fahrdynamiksystem dadurch möglich, dass, wie in Fig.2a dargestellt, die zentrale Domäne über alle wichtigen Informationen verfügt und daher mit minimalem Zeitverzug in einer kritischen Fahrsituation, etwa bei einem ABS-Regelbetrieb, sehr schnell eine Anpassung der Bremswirkung über den Elektromotor vornehmen kann. Neuartige Elektromotoren der Hochvolttechnik (>700V) können das elektrische Bremsmoment über den Elektromotor sehr dynamisch mit 10.000 bis 30.000 Nm/s erhöhen oder reduzieren. In einem ABS-Fall kann daher durch den elektrischen Traktionsmotor an der Achse bei elektrischen Achsantrieben (siehe Tabelle) oder bei einem Rad mit radindividuellem Antrieb oder bei elektrischen Achsen mit Torque-Vektoring-Modulen das Bremsmoment annäherend schnell wie bei einer hydraulische Bremse (typischerweise 1.000 bis 2.000 bar/s = 20.000 bis 40.000 Nm/s) abgebaut werden, bevor das elektrohydraulische Bremsaggregat EHB die ABS-Regelung übernimmt. Eine Regelstrategie im ABS-Betrieb gemeinsam mit elektrischen Traktionsmotor und dem elektrohydraulischen Bremsaggregat EHB ist in **Figur 5a** weiter ausgeführt. Damit ist zwar der erste Regelzyklus nicht ganz optimal, aber es besteht keine sicherheitskritische Situation, wo das Fahrzeug instabil werden könnte. Ferner können in kritischen Fahrsituationen, wo eine automatische Notbremse (AEB) zum Einsatz kommt, die Nachteile des ersten Regelzyklus durch eine Verkürzung von TTL überkompensiert werden.

In der Darstellung wurde beispielhaft das Drehmoment-Drehzahl-Kennfeld eines elektrischen Antriebsmotors eines Plug-In-Hybrids oder E-Fahrzeuges (beispielsweise BMW i3) mit einem Fahrzeuggewicht von 1365 kg eingesetzt. Der elektrische Traktionsmotor weist in diesem Fall eine maximale Leistung von etwa 130 kW und ein maximales Drehmoment von 250 Nm auf und wirkt mit einer Getriebeübersetzuung von 9,5, das heißt, es kann ein Drehmoment von bis zu 2400 Nm an den Achsen eines Fahrzeuges zum Antrieb und zur Verzögerung genutzt werden. Legt man das zulässige maximale Fahrzeuggewicht von 1710 kg und eine Gewichtsverteilung beim Bremsen mit maximaler Verzögerung von 40% an der Hinterachse und 60% an der Vorderachse zugrunde, dann ist ein Achsbremsmoment von 3400 Nm an der Vorderachse und 2465 Nm an der Hinterachse erforderlich. Damit kann die Hinterachse komplett elektrisch gebremst werden bis zu einer Geschwindigkeit von ca. 70 km/h.

Im Auslegungspunkt für den AMS-Fading-Test können bei einer Geschwindigkeit von 100 km/h an der Vorderachse etwa 50% der Bremsleistung erbracht werden, an der Hinterachse sogar annäherend 70%. Dies bedeutet wiederum, dass die Bremse an der Vorderachse nur die hälftige Reibleistung erfährt und die Hinterachse nur 30%.

Das hohe zur Verfügung stehende zusätzliche Bremsmoment über einen großen Geschwindigkeitsbereich kann zur signikanten Reduzierung der Erwärmung der Reibbremse genutzt werden, neben der AMS-Testbedingungen bei 100 km/h auch bei hohen Geschwindigkeiten, wo sehr viel kinetische Energie von der Reibbremse aufgenommen wird. Letzteres wirkt sich vorteilhaft aus für sportliche Fahrzeuge, wo typischerweise sehr teure Keramikbremsen eingesetzt werden. Zudem kann die Hinterachse im Geschwindigkeitsbereich bis 70 km/h thermisch komplett entlastet werden; sie kann insbesondre auch beim kritischen AMS-Test sehr stark entlastest werden. Dies ermöglicht den Einsatz einer kostengünstigen Trommelbremse.

Die zentrale Steuereinheit des Fahrdynamiksystems, die vorzugsweise auch das Gewicht des Fahrzeuges erfasst, kann dann auch bei niedriger Beladung das Bremsen über regeneratives Bremsen steigern, sodass die Rekuperationsstrategie abhängig von der Fahrzeugbeladung angepasst wird.

Problematisch ist die Aufnahmemöglichkeit der Batterie für hohe Impulsleistungen, inbesondere im Zustand von hohen Ladezuständen. Für diesen Sonderfall bietet es sich an, die Leistung nicht in die Battierie zurückzuspeisen, sondern im elektrischen Traktionsmotor zumindest teilweise durch intelligente feldorientierte Vektorregelung (Id, Iq) intern im elektrischen Traktionsmotor zu vernichten, sodass keine Energie zurückgeführt wird. Alternativ kann ein zusätzlicher Widerstand genutzt werden, bei dem die Wärme vernichtet werden kann. Die über einen Widerstand erzeugte Wärme kann dann vorteilhaft auch für die Heizung des Fahrzeuges oder über einen Wärmetauscher zur Kühlung des Fahrzeuges genutzt werden. Die Möglichkeiten des Energiemanagements wurden bereits oben in zusätzlichem Detail beschrieben.

Wird zusätzlich ein spezieller Inverter eingesetzt, mittels dessen die Wicklungen des Motors alternativ in Reihe oder parallel geschaltet werden können (RSP-4Q-Inverter), ist zusätzlich ein Drehmoment-Boost möglich bei höheren Motordrehzahlen beziehungsweise bei höheren Fahrzeuggeschwindigkeiten. Damit kann ferner das Bremsmoment bei höheren Fahrzeuggeschwindigkeiten zur generatorischen Bremsen gesteigert und somit noch mehr kinetische Energie rekuperiert werden. Alternativ kann die TTL-Zeit (Time-to-Lock), wie in **Figur 4** dargestellt, bei hohen Geschwindigkeiten weiter reduziert werden, was ebenfalls vorteilhaft zur Bremswegverkürzung genutzt werden kann, da additiv zur hydraulischen Bremse zusätzlich elektrisch gebremst werden kann.

**Figur 4** illustriert, wie die erfindungsgemäße Funktion der Notbremse AEB (Funktion B) mit der erfindungsgemäßen Steuerung des Fahrdynamiksystems umgesetzt werden kann, indem bei der elektrischen Notbremse neben der Bremswirkung über elektrische Traktionsmotoren ferner die EBV-Regelung im Sinne einer Bremswegverkürzung sinnvoll angepasst wird. In Figur 4 wird beispielhaft ein elektrischer Traktionsmotor mit den Leistungsdaten der Figur 3 (130 kW, 250 Nm, Getriebeübersetzung von 9,5) sowie ein Drehmomentgradient von 15.000 Nm/s angesetzt. Beim elektrohydraulischen EHB-System wird von einer Schwarz-Weiss-Bremskreisaufteilung ausgegangen, das heißt, von einem Bremskreis für die Vorderachse und einem zweiten Bremskreis für die Hinterachse des Fahrzeugs. Die Kurven BM_{TM1-VA} und BM_{TM2-HA} zeigen jeweils den Bremsmomentanstieg des elektrischen Traktionsmotors an der Vorderachse VA beziehungsweise Hinterachse HA, insbesondere mit einem Bremsmomentgradient von 15.000 Nm/s. Dieser Anstieg wird für die elektronische Bremskraftverteilung EBV so berücksichtigt, dass der Druckverlauf über ein vorteilhaftes hydraulisches Bremssystem, wie in **Fig. 6a bis 6d** weiter ausgeführt, so auf die Vorderachse und die Hinterachse verteilt wird, dass Vorderachse und Hinterachse ihr maximales Bremsmoment, beispielsweise für 1 g Verzögerung, gleichzeitig erreichen und gleichzeitig sichergestellt wird, dass Prioritäten der Auslegung (siehe Tabelle 1 der Prioritäten) berücksichtigt werden.

Vereinfacht dargestellt steigt das Bremsmoment nach Erreichen des maximalen Bremsmomentes, in der Figur mit etwa 1 g angegeben) weiter an, um den weiteren zeitlichen Bremsmomentverlauf zu illustrieren und somit auch TTL für höherer Verzögerungen (z.B. bis 1,4 g bis Sportfahrzeugen) zu illustrieren. Tritt ein ABS-Fall ein, typischerweise bei einer Verzögerung von etwa 1 g, wird das Bremsmoment in Folge reduziert und es folgt eine ABS-Regelbetrieb, wie unten mit Bezug zu den Figuren 5, 5a, 5b, 5c weiter ausgeführt.

Die Kurve BM_{EHB-HA} zeigt dabei den Bremsmomentverlauf für die elektrohydraulische Bremse der Hinterachse; die Kurve BM_{HA,EHB+TM2-HA} zeigt die Summe des Bremsmomentverlaufs für die elektrohydraulische Bremse der Hinterachse und des der Hinterachse zugeordneten Traktionsmotors TM2.

Die Kurve BM_{EHB-VA} zeigt ferner den Bremsmomentverlauf für die elektrohydraulische Bremse der Vorderachse; die Kurve BM_{VA,EHB+TM1-VA} zeigt die Summe des
Bremsmomentverlaufs für die elektrohydraulische Bremse der Vorderachse und des Traktionsmotors.

Als eine obere waagrechte Linie BLM-VA ist das dem Blockierdruck für die Vorderachse VA entsprechende Bremsmoment eingezeichnet. Als eine untere waagrechte Linie BLM-HA ist das dem Blockierdruck für die Hinterachse HA entsprechende Bremsmoment eingezeichnet.

Dort, wo sich die Kurven für das mittels der Bremsaggregate EHB-VA, TM1, EHB-HA, TM2 erzielte Bremsmoment mit den waagrechten Linien BLM-VA, BLM-HA schneiden, wird der jeweilige Blockierdruck erhalten. Die Zeit bis zum jeweiligen Erreichen dieses Punktes wird als Time-to-Lock (TTL) bezeichnet.

Das TTL für die elektrohydraulischen Bremsen EHB-VA, EHB-HA allein beträgt etwa 140 ms, während es beim zusätzlichen Verwenden der regenerativen Bremsmomente der Traktionsmotoren TM1, TM2 bei etwa 90 ms liegt. Das heißt, mittels der Regelung des Fahrdynamiksystems kann die TTL in der Simulation um eine Differenz ΔTvon 140 ms auf 95 ms reduziert werden, was signifikante Auswirkungen auf den Bremsweg hat. Bei einer Geschwindigkeit von beispielsweise 100 km/h entsprechen diese 45 ms einer zurückgelegten Strecke von etwa 1 m. Dies ist im Verhältnis zu typischen Bremswegen von 25 m mit ABS-Bremsung bereits eine signifikante Verbesserung.

Eine solche Verbesserung des Bremswegs um 1 m ist für Applikateure von ABS-Bremssystemen ein sehr ambitioniertes Ziel.

**Figur 5** illustriert einen weiteren grundlegenden Gedanken der synergetischen Nutzung der Bremsmomente von elektrischen Traktionsmotoren und der Bremsmomente von elektrohydraulischen Bremsaggregaten anhand eines typischen ABS-Regelverlaufes bei hohen Drücken auf Asphalt, das heißt im sogenannten "high-µ-Fall".

Nachdem, wie oben bereits ausgeführt, ein Traktionsmotor sehr schnell ein Bremsmoment auf- und abbauen kann, ist der Einsatz des elektrischen Traktionsmotors in der ABS-Regelung unproblematisch.

In Figur 5 ist einKurve für die Verzögerung des Fahrzeugs gezeigt, ferner sind Kurven für die Radgeschwindigkeiten der vier Räder des Fahrzeugs gezeigt.

Vorteilhafterweise erzeugt der elektrische Traktionsmotor im ABS-Betrieb ein Basisbremsmoment VA, was in Figur 5 für eine beispielhafte Anordnungen des elektrischen Traktionsmotors an der Vorderachse dargestellt ist. Dies hat zur Folge, dass der Vordruck des elektrohydraulischen Bremsaggregats EHB um das Basisbremsmoment des elektrischen Traktionsmotors reduziert werden kann. Dies hat zur Folge, dass der Blockierdruck, wie in Figur 4 ausgeführt, schneller erzeugt werden kann und der erforderliche Druck der EHB für die ABS-Regelung reduziert wird.

Dies kann für ein Downsizing der Bremsanlage genutzt werden, die üblicherweise einen Vordruck erzeugen muss, der 20-40% höherer ist als der maximale Raddruck. Werden jedoch 50% des Basisbremsmomentes über den elektrischen Traktionsmotor erzeugt, so ist statt der typischen Auslegung auf 120-140 bar für den ABS-Betrieb nur ein Druck von 70-80 bar erforderlich. Nachdem zudem die Erwärmung der Bremsanlage durch generatives Bremsen (siehe die obigen Ausführung mit Bezug zu Figur 3) signifikant reduziert wird, ist eine Auslegung der EHB auf 100 bar ausreichend für den sicheren Regelbetrieb.

In Figur 5 ist gezeigt, wie das Basisbremsmoment an der Vorderachse VA vom elektrischen Traktionsmotor bereitgestellt wird. Die Differenz ΔP zum gewünschten Vordruck für die Vorderachse VA ist dann relativ gering. Die Druckregelung für die beiden Räder der Vorderachse VA weit entsprechend Variationen mit einer geringen Amplitude auf, sodass das elektrohydraulische Bremsaggregat kleiner ausgebildet werden kann.

Dies hat signifikante Auswirkungen auf die Bremsanlage, da zum einem die Druckversorgung ein kleineres Volumen benötigt, um das notwendige Fluidvolumen bereitzustellen, und der Elektromotor des elektrohydraulischen Bremsaggregats EHB nur 50% des Bremsmomentes aufbauen kann. Zudem kann die Ventilauslegung der Hydraulic Control Unit, HCU, der EHB angepasst werden, indem kleinere oder kostengünstigere Ventile eingesetzt werden, die auf eine deutlich geringere Druckfestigkeit ausgelegt werden können. Mit diesen grundlegenden Gedanken können die Kosten für eine EHB um etwa 10% reduziert werden. Zudem kann die Reibbremse deutlich kostengünstiger ausgeführt werden, da die thermische Belastung abnimmt und ein geringeres Bremsmoment auf die Bremsbacken übertragen werden muss. Bei sportlichen Fahrzeugen können teure Keramikbremsen durch deutlich kostengünstige Graugussbremsen ersetzt werden.

In der Figuren 5a und 5b werden die Verzüge der ABS-Regelung mit elektrischen Traktionsmotoren gegenüber Standard-ABS-Systemen gezeigt. Dazu sind im Vergleich die zeitlichen Abläufe bei der Radgeschwindigkeit eines Rades vR1 illustriert.

**Figur 5a** zeigt einen typischen Ablauf am Anfang eines Regelzyklus des Druckabbaus im ABS-Betrieb mit einer Standard-ESP-Anlage oder einem 1-Box-System, dargestellt auf niedrigem Reibwert, beispielsweise auf Schnee.

Im oberen Diagramm ist die Radgeschwindigkeit in Abhängigkeit von der Zeit t aufgetragen. Im unteren Diagramm ist der Druck in Abhängigkeit von der Zeit t aufgetragen (obere Kurve); ferner ist der Öffnungszustand eines ventils über die Zeit t schematisch gezeigt (untere Kurve).

Nach einer Zeit t_{0,} bedingt durch eine Totzeit des Systems wird das Blockieren eines Rades erkannt, da dort die Radgeschwindigkeit v um Δv von der Referenzgeschwindigkeit v_{ref} abweicht. Danach werden die Auslassventile zum Druckabbau geöffnet. Bis das Ventil geöffnet ist, vergeht eine Zeit t_{VM}. In dieser Zeitphase fällt die Radgeschwindigkeit weiter um Δv₁. Nach der Ventilöffnungsphase erfolgt dann der Druckabbau über die Zeitdauer t_{ab}, der vereinfachend linear dargestellt wird. In dieser Zeitphase fällt die Radgeschwindigkeit weiter um Δv2, bis sich das Rad stabilisiert. Dann wird das Ventil wieder geschlossen. Es folgt danach ein nicht dargestellter stufenweiser Druckaufbau, um die Radgeschwindigkeit wieder auf das Niveau der Referenzgeschwindigkeit v_{ref} zu führen, was vorzugsweise über kleine stufenweise Druckerhöhungen über Einlassventile erfolgt.

**Figur 5b** zeigt eine ABS-Regelung eines Rades über Traktionsmotoren.

Im oberen Diagramm ist die Radgeschwindigkeit in Abhängigkeit von der Zeit t aufgetragen. Im unteren Diagramm ist der Druck in Abhängigkeit von der Zeit t aufgetragen.

Werden bei der hier beschriebenen ABS-Regelung mit Traktionsmotoren vorzugsweise Raddrehzahlsensoren mit hoher Auflösung und kurzen Latenzzeiten der Datenübertragung zur zentralen Steuereinheit M-ECU_{Domäne} eingesetzt, so kann insbesondere auch aufgrund einer genauen Modellierung eines Fahrzeugmodells im Zentralrechner ein ABS-Fall, gekennzeichnet durch eine Raddrehzahlabweichung vom Referenzwert, schneller detektiert werden. In der Folge ist die Verzugszeit t₀ bei der erfindungsgemäßen Regelung des Fahrdynamiksystems kürzer und damit auch die Geschwindigkeitsdifferenz Δv kleiner. Da ferner bei einer ABS-Regelung mit elektrischen Traktionsmotoren kein Ventil erforderlich ist und der Zeitverzug der Drehmomentänderung in einem Inverter eines leistungsstarken Traktionsmotors vernachlässigbar klein ist, erfolgt der Bremsmomentabbau ohne weiteren Zeitverzug t_{MV} sofort nach der anfänglichen Verzögerung tₒ, vor allem bei einem niedrigen Fahrbahnreibwert mit einem größeren Bremsmomentgradienten (siehe Illustration der Bremsmomentgradienten in Figur 12). Ferner kann aufgrund der höheren Auflösung eine verbesserte Radbeschleunigungsregelung mit zentraler Domänensteuerung umgesetzt werden, sodass das Radsollmoment schneller und zudem ohne Überschwinger erreicht werden kann. Folgt danach der Bremsmomentanstieg ebenfalls ohne Verzögerung der Ventilbetätigung und zudem mit der Präzision einer Motorregelung mit Drehmoment und
Motorgeschwindigkeitsregelungskaskade (insbesondere also unter Berücksichtigung von Drehmoment/Strom des Elektromotors des Druckstellers, Position eines Kolbens in einem Kolben-Zylinder-System des Druckstellers, sowie eine Aktorgeschwindigkeit, also eine Geschwindigkeit der Verstellung eines Kolbens des Druchstellers), wird die Referenzgeschwindigkeit v_{ref} ohne Schwingungen im Bremsmomentverlauf auch deutlich schneller wieder erreicht. Durch die geringeren Abweichungen der Refenzgeschwindigkeit kann der Bremsweg bei einer Regelung mit elektrischen Traktionsmotoren im ABS im Vergleich zu einem Standard-ABS-System reduziert werden, bei gleichzeitig niedrigerem Geräusch aufgrund der druckschwingungsarmen Regelung. Anders betrachtet kann mit kleineren Bremsmomentgradienten bei einer Regelung mittels Traktionsmotoren im Vergleich zu Bremsmomentgradienten eines elektrohydraulischen Bremsaggregats EHB die gleiche Regelgüte erreicht werden, weil der durch die Magnetventile bedingte kritische Zeitverzug **t_{vM}** wegfällt. Zudem kann durch den leistungsstarken Rechner und durch Raddrehzahlsensoren mit höherer Auflösung die Reaktionszeit **tₒ** reduziert werden, das heißt, ein Blockieren eines Rades wird früher erkannt und kann schneller ausgeregelt werden.

**Figur 5c** zeigt einen weiteren erfindungsgemäße Vorteil der gemeinsamen Bremsmomentmodulation im Regelbetrieb beispielhaft für einen negativen µ-Sprung, wenn also das Fahrzeug beispielsweise von Asphalt auf Schnee kommt.

In Figur 5c ist der Druck beziehungsweise das entsprechende Bremsmoment an der Vorderachse VA und an der Hinterachse HA in Abhängigkeit von der Zeit t aufgetragen. Dabei sind Kurven für die mittels der Traktionsmotoren an Vorderachse und Hinterachse erzeugten Bremsmomente sowie die gesamten Bremsmomente an der Vorderachse und Hinterachse gezeigt.

In der Figur 5c wird vereinfacht angenommen, dass beide Räder der Vorderachse das gleiche Bremsmoment bzw. den gleichen Bremsdruck haben und dass sowohl die Vorderachse als auch die Hinterachse einen Traktionsmotor an der Achse aufweisen, der ein Basisbremsmoment zum Gesamtbremsmoment der jeweiligen Achse beiträgt. Zum Gesamtbremsmoment M_{brems,ges,Vrad} bzw. M_{brems,ges,Hrad}w irken additiv das Bremsmoment der Traktionsmotoren M_{brems,TM,Vrad} bzw. M_{brems,TM,Hrad} und das nicht dargestellte hydraulische Bremsmoment des elektromhydraulischen Bremsaggregats EHB der Vorderräder beziehungsweise der Hinterräder. Beim Bremsmomentabbau kann ohne Zeitverzug zuerst das Bremsmoment der Vorderachse M_{brems,TM,Vrad} abgebaut werden, mit dem oben beschriebenen Zeitverzug t₀ folgt dann der Druckabbau durch die EHB. Damit kann das Bremsmoment vorteilhaft sehr schnell angepasst werden und der Gradient erhöht sich, sobald die EHB den Druck abbauen kann. Dies wirkt sich positiv auf den nicht dargestellten Geschwindigkeitseinbruch der Vorderräder aus. Mit kurzer zeitlicher Verzögerung folgt der Bremsmomentabbau an der Hinterachse beziehungsweise der Abbau des Bremsmoments M_{brems,ges,Hrad}, der - wie oben für die Vorderachse beschrieben - von dem schnell einsetzenden Bremsmoment durch den elektrischen Traktionsmotor M_{brems,TM,Hrad} ohne weiteren Zeitverzug t₀ profitiert, sodass auch hier die Radgeschwindigkeit nicht so stark einbricht.

**Figur 5d** zeigt den erfindungsgemäßen Ansatz für eine andere Regelsituation, in welcher das Fahrzeug auf einer weitestgehenden homogenen Fahrbahn beispielsweise mit Schnee betrieben wird (sog. low-µ-Fall).

Es sind die an den Rädern vorne rechts VR, vorne links VL, hinten rechts HR und vorne rechts VR erzeugten Bremsmoments M_{brems} in Abhängigkeit von der Zeit t aufgetragen.

Hier wird vorteilhaft die Vorderachse mit der EHB geregelt, während die niedrigeren Bremsmomente für die Hinterachse durch die zwei Traktionsmotoren TM1 und TM2 erhalten werden, wobei hier das Konzept der nachfolgend erläuterten Figuren 6b oder 6d zugrunde gelegt wird.

Alternativ ist die Regelung auch auf Antriebskonzepte zu übertragen, bei denen an der Hinterachse gemäß dem Konzept der Figur 6c ein elektromechanisches Bremsaggregat EMB und an der Vorderachse ein elektrohydraulisches Bremsaggregat EHB vorgesehen sind. Ein elektromotorisches Bremsaggregat EMB hat nämlich vergleichbare Vorteile wie die Traktionsmotoren, etwa einen hohen
Bremsmomentgradienten und eine genaue Bremsmomentregelung durch Drehmoment- und Beschleunigungsregelung des Motors der EMB. Die elektromotorische Bremse EMB ist elektrischen Traktionsmotoren im Bremsmomentgradienten sogar überlegen (siehe Darstellung in Figur 12). Zudem entfällt bei niedrigen Reibwerten der Bremsbackenverspanneffekt der EMB.

**Figur 6a** zeigt eine für die Einbindung in das Fahrdynamiksystem gemäß der ersten Ausführungsform ("Architektur I") vorteilhafte hydraulische Bremsanlage für vier Radbremsen sowie mit elektrischen Traktionsmotoren TM1 an der Hinterachse und TM2 an der Vorderachse des Fahrzeuges. Diese Bremsanlage ist kann zudem eine redundanten Druckversorgung in Form einer über einen Elektromotor und Spindeltrieb angetriebenen Kolben-Zylinder-Einheit aufweisen. Die Druckversorgung kann mit einem Stromsensor i/U und einem Winkelgeber a/U sowie optional mit Tempartursensoren T/U, welche die Motortemperatur des EC-Motors messen, ausgestattet sein. Die Kolben-Zylinder-Einheit kann ferner redundante Phasenanschlüsse, redundante Elektroniken und/oder redundante Bordnetzanschlüsse BN1 und BN2 und Datenleitungen DS1 und DS2 zur Kommunikation mit der Chasssis-Domäne eines zentralen Steuergerätes (M-ECU_{Chassis Domaine}) aufweisen. Das Bremssystem kann ferner ein E-Pedal mit einer Sensor-ECU und Sensoren aufweisen, insbesondere mit einem Kraft-Weg-Sensor basierend auf dem Prinzip der Differenzwegmessung (vergleiche US13/883,192), übertragen auf das E-Pedal-Konzept zur Erfassung der Pedalkraft. Die Sensor-ECU kann in direkter Kommunikation mit dem zentralen Steuergerät der Chasiss-Domäne stehen.

Zudem können für jede Radbremse bidirektional wirksame spezielle Einlass-/Auslassventile (vereinfacht als MV₂ₖ gekennzeichnet) eingesetzt werden, wobei durch gleichzeites Vor- und Rückfahren des Kolbens einer Kolben-Zylinder-Einheit Druck aufgebaut oder Druck abgebaut werden kann. Alternativ können unterschiedliche Anschlüsse der Ventile vorgesehen sein, sodass entweder beim Druckaufbau oder Druckabbau die Querschnitte der Ventile durch geeignete Bestromung gesteuert werden können. Wird beispielsweise der Ventilsitz an die Radbremse angeschlossen, so können bei Druckabbau unterschiedliche Druckgradienten realisiert werden, sodass gleichzeitig geräuscharm der Druck in mehreren Radbremsen abgebaut werden kann. Der Druckaufbau erfolgt dann über eine Volumensteuerung durch die Druckversorgungseinheit gleichzeitig oder in einem Mulitplexverfahren.

Wird der Ventilsitz an die Druckversorgung angeschlossen, so wird über eine klassische Vordrucksteuerung der Druck aufgebaut. Für letzteres Verfahren sind Auslassventile AV1-AV4 vorteilhaft, aber nicht zwingend für den Druckabbau vorgesehen. Zudem ist es sinnvoll, die Auslassventile nur in Extremsituationen einzusetzen, da hierdurch das Volumen der Druckversorgung in den Vorratsbehälter verloren geht; bei einem relativ langwierigen Regeleingriff ist es dann erforderlich, durch Rückzug des Kolbens Volumen aus dem Vorratsbehälter zurückzuführen, vergleiche eine Regelstrategie gemäß EP 2580095 B1. Der Volumenabbau über die Auslassventile ist daher so zu bemessen, dass zur Vermeidung einer kritischen Regelungsunterbrechung ein Bremsvorgang komplett abgeschlossen werden kann und dass erst nach Abschluss des Bremsvorgangs ein Nachfördern erfolgen muss. Alternativ kann für die Druckverorgung auch ein kontinuierlich fördernder Doppelhubkolben vorgesehen sein, wie in der EP 3 145 771 B1 beschrieben, oder die elektrischen Traktionsmotoren können in der Zeitphase der Unterbrechung die Bremsmomentregelung übernehmen.

Eine derartige Systemlösung hat die Freiheitsgrade des wahlweisen Druckabbaus über die Einlass/Auslassventile MV₂ₖoder über Auslassventile. Der Einsatz von Auslassventilen ist daher optional und es können wahlweise 1-4 Auslassventile vorgesehen werden. Die Auslassventile bieten hier nur einen weiteren Freiheitsgrad in den Druckabbaumöglichkeiten. Sinnvollerweise können bei Systemeinführung alle Räder mit Auslassventilen versehen werden, wobei deren Anzahl später im Rahmen der Produktpflege Schritt für Schritt reduziert wird.

Alternativ kann auch das bekannte Mulitplexverfahren an zwei Radbremsen mit der klassischen Druckregelung an zwei weiteren Radbremsen über Einlass/Auslassventile kombiniert werden. Dabei werden optional Standardeinlassventile statt der Einlass/Auslassventiie eingesetzt oder die MV₂ₖ -Ventile werden nur für den Druckaufbau und Druckabbau im Bremskraftverstärkerbetrieb verwendet. Die elektrischen Traktionsmotoren können zudem vorteilhaft im Sinne des Downsizing (siehe Figur 5) dazu genutzt werden, eine efflizente Verblendungsstrategie zu realisieren, wobei sie im bei ABS-Betrieb ein Grundbremsmoment zur Verfügung stellen und/oder bei der Notbremsfunktion AEB (siehe Figur 4) zum erreichen eines schnelleren TTL eingesetzt werden.

Zudem wird vorteilhaft über die Domäne ein gezielter Bremsmomenteneingriff als Sollwert oder Sollwertverlauf vorgegeben, der vorteilhafterweise auch den zeitlichen Verlauf des Bremsmomentenanstiegs oder des Bremsmomentenabfalls festlegt, damit eine effiziente Sychrononisation mit dem Bremsmomentverlauf der elektrischen Traktionsmotoren erfolgen kann. Der Eingriff kann achsindividuell oder radindividuell erfolgen. Der radindividuelle Eingriff wird dabei primär zur Giermomentregelung verwendet, beispielsweise für Torque-Vektoring-Eingriffe, vorteilhafterweise ebenfalls zeitlich sychronisiert mit dem Lenkungseingriff der elektrischen Servolenkung EPS.

Die Einsatz von MV₂ₖ- Ventilen hat zudem den Vorteil, dass der Ausfall eines Radkreises diagnostiziert werden kann und der Radkreis durch Schließen der MV₂ₖ-Ventile im Fehlerfall abgetrennt werden kann. So ist auch bei Ausfall eines Radkreises noch ein 3-Kanal-Regelbetrieb möglich, der für eine ABS-Regelung, aber auch Giermomenteingriffe zur Lenkungsunterstützung oder Notfalllenkung bei Ausfall oder Teilausfall einer elektrischen Servolenkung genutzt werden kann.

Zudem werden die Bremsaggregate vorzugsweise redundant ausgeführt, etwa mit redundanten Wickelungen und Elektroniken, sodass die einzelnen Bremsaggregate auch bei Teilausfall noch betrieben werden können. Damit kann mit hoher Zuverlässigkeit eine Zwei- bis Dreifachredundanz der Bremsfunktion erreicht werden. Selbst wenn dann die Bremsleistung reduziert ist, können kritische Situationen immer noch beherrscht werden. Fällt die Druckversorgung teilweise aus, so wird mit reduzierter Dynamik der 1x3 statt 2x3 Phasen noch 50% des maximalen Bremsmomentes aufgebaut, das heißt, etwa 70 bar bei einer Auslegung auf 140 bar. Damit kann an beiden Achsen bis zum Blockierdruck ein vollwertiger ABS-Betrieb relasiert werden, weil dann die elektrischen Traktionsmotoren ein unterstützenden Drehmoment an einer oder beiden Achsen liefern können.

Das hydraulische Bremssystem mit dem Fahrzeugdynamiksystem der vorliegenden Beschreibung hat einen sehr einfachen und kostengünsten Aufbau (wenige Magnetventile, downgesized Druckversorgung) und erfüllt alle Redundanzanforderungen der SAE Stufe 4, wie weiter oben spezifiziert.

**Figur 6b** zeigt eine zweite Auführungsform des elektrohydraulischen Bremsaggregats EHB mit zwei elektrischen Traktionsmotoren TM1 und TM2 an der Hinterachse und einem Traktionsmotor TM3 an der Vorderachse. Auf den Traktionsmotor TM3 kann verzichtet werden, wobei die beiden Traktionsmotoren TM1 und TM2 systemrelevant sind und die Topologie B der Abbildung 2 abbilden.

Von der Druckversorgung des elektrohydraulischen Bremsaggregats EHB führt nur eine hydraulische Leitung zu den beiden Radbremsen RB3 und RB4 der Hinterachse und es wird an der Hinterachse vorteilhafterweise nur eine kostengünstige Trommelbremse eingesetzt.

Die elektrischen Traktionsmotoren TM1 und TM2 sind leistungstark mit mehr als 50 kW je Rad. Der Bremsmomentaufbau und Bremsmomentabbau werden dynamisch ausgeführt. Die Traktionsmotoren TM1 und TM2 überrnehmen hier die Bremsmomentregelung, während die EHB im Normalbetrieb nur für das Aufbringen eines Grundbremsmomentes für die Hinterachse genutzt wird.

Der Regelbetrieb ist vergleichbar mit dem in Figur 5 gezeigten Fall mit dem Unterschied, dass die Rollen des EHB und der Traktionsmotoren getauscht sind und diesmal die EHB das Grundbremsmoment aufbaut, statt der elektrischen Traktionsmotoren. An der Vorderachse wird hingegen die ABS-Regelung über die EHB durchgeführt und der optionale Traktionsmotor TM3 stellt das Grundbremsmoment zur Verfügung. Wird ein optionaler Traktionsmotor TM3 an der Vorderachse eingesetzt, so kann auch hier eine kostengünstige Trommelbremse eingesetzt werden.

In einem ersten Fehlerfall, beispielsweise bei einem Ausfall der Hydraulikverbindung zu den Radbremsen der Hinterachse, wird die Verbindungsleitung über das Trennventil getrennt und die Traktionsmotoren übernehmen dort vollständig die Regelfunktion. Damit ist bedingt durch die Leistungsfähigkeit und Geschwindigkeit der Traktionsmotoren gegebenenfalls die Hinterachsverzögerung limitiert, es können aber dennoch alle sicherheitskritischen Funktionen (µ-Sprung, ABS auf low-µ) sehr sicher geregelt werden und die Lenkbarkeit (Priorität 3) ist durch die Vorderachsdruckregelung und/oder durch die Ansteuerung der Lenkung EPB über das Fahrdynamiksystem sichergestellt.

Sinnvollerweise wird die Geschwindigkeit des Fahrzeuges in einem solchen Fehlerfall beschränkt (beispielsweise auf 75 km/h bei einer Auslegung des Motors gemäß Figur 3). Dieser Fehlerfall führt ohne Geschwindigkeitsbeschränkung zu einem längeren Bremsweg, ist aber ansonsten sicherheitstechnisch unkritisch.

Fallen in einem zweiten Fehlerfall die elektrischen Traktionsmotoren TM1 und TM2 der Hinterachse aus, so wird über die Druckversorgungseinrichtung achsweise ABS geregelt. Lenkungseingriffe werden dann vorzugsweise über eine Ansteuerung der EPS durch das Fahrdynamiksystem vorgenommen. Fällt nur ein Traktionsmotor aus, so können über den noch aktiven Traktionsmotor ebensfalls Lenkungseingriffe vorgenommen werden.

Die Druckregelung kann auch bei Teilausfall der Druckversorgung, beispielsweise beim Ausfall einer Wicklung eines Elektromotors, aufrechterhalten werden, wenn auch mit geringerer Leistung, indem der zweite Strang der 2x3 Phasen die Regelung mit 50% der Leistung übernimmt. Zudem können in diesem Fall die Traktionsmotoren an der Hinterachse die Antischlupfregelung (ASR) sowie Torque-Vektoring oder Giermomenteingriffe übernehmen.

Das Ausführungsbeispiel eines hydraulischen Bremssystems gemäß **Figur 6b** ist nochmals einfacher als das in Figur 6a gezeigte System, da weniger Magnetventile und Hydraulikleitungen vorgesehen sind und eine Trommelbremse eingesetzt werden kann. Dabei erfüllt das Ausführungsbeispiel gemäß Figur 6b ebenfalls die Redundanzanforderungen der SAE Stufe 4, wie oben spezifiziert.

**Figur 6c** zeigt eine dritte Auführungsform mit zwei elektromechanischen Bremsen EMB1 und EMB2 an der Hinterachse und einem Traktionsmotor TM3 an der Vorderachse.

Auf den Traktionsmotor TM3 kann verzichtet werden, wobei allerdings die elektromotorischen Bremsaggregate EMB1 und EMB2 systemrelevant sind und die Topologie B und Topologie D der Abbildung 2 abbilden. Von der Druckversorung der EHB führt nur eine hydraulische Leitung zu den beiden Radbremsen RB3 und RB4 der Hinterachse. Insbesondere kann an der Hinterachse nur eine kostengünstige Trommelbremse eingesetzt werden.

Die elektromechanischen Bremsaggregate EMB 1 und EMB 2 sind dynamisch im Bremsmomentaufbau und Bremsmomentabbau ausgeführt und überrnehmen hier die Bremsmomentregelung. Die eltrkohydraulische Bremse EHB wird im Normalbetrieb nur für das Aufbringen eines Grundbremsmomentes für die Hinterachse genutzt. Der Regelbetrieb erfolgt ähnlich wie oben mit Bezug zu Figur 5 erläutert, allerdings mit dem Unterschied, dass die Rollen der EHB und der EMB getauscht sind und die EHB das Grundbremsmoment aufbaut. An der Vorderachse wird hingegen die ABS-Regelung über die EHB durchgeführt und der optionale Traktionsmotor TM3 stellt das Grundbremsmoment zur Verfügung. Wird ein optionaler Traktionsmotor TM3 an der Vorderachse eingesetzt, so kann auch hier eine kostengünstige Trommelbremse eingesetzt werden.

In einem ersten Fehlerfall, beispielsweise bei einem Ausfall der Hydraulikverbindung zur Radbremse der Hinterachsen, wird die Verbindungsleitung über das Trennventil getrennt und EMB1 und EMB2 übernehmen vollständig die Regelfunktion an den einzelnen Rädern der Hinterachse. Damit können auch ohne hydraulische Unterstützung durch die EHB alle sicherheitskritischen Funktionen (µ-Sprung, ABS auf low-µ) sehr sicher geregelt werden und die Lenkbarkeit (Priorität 3) ist durch die Vorderachsdruckregelung und/oder durch Ansteuerung der Lenkung EPB über das Fahrdynamiksystem sichergestellt.

Die elektromechanischen Bremsaggregate EMB1 und EMB2 sind sinnvollerweise auf das Blockierbremsmoment mit geringer Reserve für Fading (20% Reserve) ausgelegt; man kann die elektromechanischen Bremsaggregate EMB1, EMB2 aber auch aus Kostengründen vorteilhaft auslegen auf ein Bremsmoment unterhalb der Blockiergrenze (etwa 50% des Blockierbremsmomentes). Im Normalbetrieb kann durch die EHB-Unterstützung das Bremsmoment zum Regeln bei maximaler Verzögerung sicher erreicht werden, ohne dass eine Trommelbremse thermisch zu stark belastet wird. Bei Ausfall der hydraulischen Leitung ist es durchaus akzeptabel, dass die Hinterachse weniger Bremsmoment zur Gesamtverzögerung beitragen kann als die Vorderachse, da der Einfluss auf die Bremswegverlängerung eher klein ist. Wichtig ist primär der Regelbetrieb bei low-µ und µ-Sprung. Dabei reichen 50% des Blockiermomentes für einen sicheren Fahrbetrieb aus.

Fallen in einem zweiten Fehlerfall die elektromechanischen Bremsaggregate EMB1 und EMB2 der Hinterachse aus, so wird über die Druckversorgungseinrichtung achsweise ABS geregelt. Lenkungseingriffe werden dann vorzugsweise über eine Ansteuerung der EPS durch das Fahrdynamiksystem vorgenommen. Fällt nur ein elektromechanisches Bremsaggregat EMB (EMB1 oder EMB2) aus, dann können über das noch aktive elektromechanische Bremsaggregat EMB (EMB2 oder EMB1) ebensfalls Lenkungseingriffe vorgenommen werden.

Die Druckregelung kann auch bei einem Teilausfall der Druckversorgung, beispielsweise beim Ausfall einer Wicklung eines Elektromotors, aufrechterhalten werden, wenn auch mit geringerer Leistung, indem der zweite Strang der 2x3 Phasen die Regelung mit 50% des Drehmomentes übernimmt. Zudem übernehmen die elektromechanischen Bremsaggregate EMB1 und EMB2 an der Hinterachse die Antischlupfregelung (ASR) sowie Torque-Vektoring und/oder Giermomenteingriffe.

Das Ausführungsbeispiel eines hydraulischen Bremssystems gemäß **Figur 6c** ist einfacher als das in Figur 6a gezeigte System, da weniger Magnetventile und Hydraulikleitungen vorgesehen sind und eine Trommelbremse eingesetzt werden kann. Dabei erfüllt das Ausführungsbeispiel gemäß Figur 6c ebenfalls die Redundanzanforderungen der SAE Stufe 4, wie oben spezifiziert.

Eine derartige Lösung wird sinnvollerweise eingesetzt, wenn kein elektrischer Traktionsmotor an der Hinterachse oder weder ein elektrischer Traktionsmotor an Hinterachse noch an der Vorderachse für Eingriffe zur Bremsmomenterzeugung durch das Fahrdynamiksystem vorgesehen ist, beispielsweise für Wasserstofffahrzeuge oder Hybridfahrzeuge, wo der Elektromotor mit einem Verbrennungsmotor eng verbunden und daher nicht dynamisch ist.

**Figur 6d** zeigt eine vierten Variante des elektrohydraulischen Bremsaggregats EHB für die Einbindung in das Fahrdynamiksystem, wobei hier nur eine elektrohydraulische Bremse für die Vorderachse vorgesehen ist und an der Hinterachse, wie schon in Figur 6b, ebenfalls für jedes Rad ein elektrischer Traktionsmotor TM1 und TM2 vorgesehen ist.

Im Gegensatz zu dem System der Figur 6b erfolgt keine Unterstützung der Hinterachse durch ein Grundbremsmoment über die EHB, das heißt, die Traktionsmotoren sind vorteilhafterweise entsprechend leistungsstärker ausgeführt und können bis zur Blockiergrenze ein Bremsmoment aufbringen und zudem dynamisch regeln. Eine derartige Konfiguration ist bei Sportwagen oder Premiumfahrzeuge mit starker Motorisierung vorteilhaft, da die Motoren ausreichend stark sind und ein elektrohydraulisches Bremsaggregat EHB für die Hinterachse nicht mehr erforderlich ist. Bei einer derartigen Anordnung entfällt die Reibbremse komplett an der Hinterachse. Die Traktionsmotoren TM1 und TM2 übernehmen viele Funktionen (ESP-Eingriffe, ASR-Eingriffe, ABS-Eingriffe, EBV-Bremsmomentstellung) und werden zeitlich sychron über das Fahrdynamiksystem mit den elektrohydraulischen Bremsaggregaten EHB der Vorderachse angesteuert, das heißt, die Bremsmomentsollwerte sind auch im zeitlichen Ablauf synchronisiert.

**Fig.7a** zeigt zwei Kurven von Motormoment-Drehzahl-Kennfeldern, skaliert mit einem Getriebübersetzungsverhältnis auf die Geschwindigkeit eines Fahrzeuges mit 1.800 kg bis zu einer Maximalgeschwindigkeit von 200 km/h, daher als Motormoment-Fahrzeuggeschwindigkeits-Kennfeld dargestellt. Die Bremsmomente für eine Verzögerung von 1 g = 9,81 m/s² sind berechnet mit einer Gewichtsverteilung VA/HA von 65%/35% und als gestrichelte Linien für die Bremsmomente der Vorderachse (obere horizontale Linie, Strichpunkt) und Hinterachse (untere horizontale Linie, gestrichelt). In einem ersten Motormoment-Fahrzeuggeschwindigkeits-Kennfeld 1 (in der Figur 7a bezeichnet als "Mbrems_normal") wird von einer typischen Auslegung eines Motors mit einem typischen Inverter ausgegangen, da der elektrische Traktionsmotor auf eine konstante Leistung ausgelegt ist und somit ab einem bestimmten Punkt P1 der Leistungshyperbel primär durch die Spannung begrenzt ist. Noch bis zu einer Geschwindigkeit v2 kann hier das maximale Bremsmoment an der Hinterachse durch den elektrischen Traktionsmotor im generatorischen Betrieb erzeugt werden.

Um das Bremsmoment des Traktionsmotors für eine Bremsung auch bei Maximalgeschwindigkeit optimal einsetzen zu können, kann vorteilhafterweise ein Inverter eingesetzt werden, der eine Umschaltung der Spulen von einer Reihenschaltung in eine Parallelschaltung von Spulenwicklungen ermöglicht. Dadurch wird die Induktivität halbiert und mit einer gegebenen Spannung kann bei der gleichen Drehzahl ein höheres Moment erzeugt werden; gleichzeitig erhöht sich auch die Drehmomentdynamik um 100%, was für die hochdynamische Bremsmomentregelung im ABS-Betrieb sehr vorteilhaft ist. Zudem sollte der Inverter deart ausgeführtt werden, dass vergleichbar einem 2x3-Phasen-Umrichterkonzept auch ein Betrieb bei Ausfall einer oder mehrere Bauelemente (Leistungshalbleiter, Spulenwicklungen) noch möglich ist, um einen Komplettausfall des elektrischen Traktionsmotors als Bremsaggregat zu verhindern.

Bei weiteren Ausführungsbeispielen können auch andere, aus dem Stand der Technik bekannte und in der Wirkung ähnliche Topologien zur Lösung der oben geforderten Funktionalität verwendet werden. Dies weisen aber üblicherweise zwischen 24 und über 42 Schaltelemente auf, um eine Redundanz (2 x 3 Phasen) und eine Umschaltbarkeit zwischen Reihenschaltung und Parallelschaltung im Betrieb zu implementieren. Sie können ebenfalls für die Boost-Funktion verwendet werden.

**Figur 7b** zeigt einen Umrichter, der im Gegensatz zu ähnlichen Systemen im Stand der Technik mit nur 18 Schaltelementen statt 30 bis über 40 Schaltelementen auskommt und der, wie auch Standard-Umrichter eines bürstenlosen Motors, ebenfalls im 4-Quadranten-Betrieb betreibbar ist. Die vier Quadranten ergeben sich dabei aus positivem oder negativem Drehmoment sowie positiver oder negativer Drehzahl. Der 4-Quadranten-Betrieb ermöglicht zum einen einen Motordrehmoment-Boost-Betriebsmodus, bei dem temporär das Drehmoment um bis zu 100% gesteigert wird, zum anderen wird so eine Redundanz bei Ausfall eines oder mehrerer Bauelememente (Leistungsschalter, Spulenwicklungen) erhalten.

Umrichter mit den oben beschrieben Möglichkeiten sind zunächst aufgrund des Aufwandes an Verschaltungen und Komponenten immer noch aufwändiger als ein Standard-Umrichter mit drei Phasen, welche typischerweise sechs Schaltelemente aufweisen. Die Anwendung für das hier beschriebene Fahrdynamiksystem ist besonders attraktiv, wenn gemäß Fig. 6c eine ausschließlich regenerative Bremsung der Hinterachse im Normalbremsbetrieb und im ABS-Regelbetrieb erfolgen kann und es daher potentiell signifikante Kosten- und Gewichttseinsparungen durch den Wegfall der Reibbremse gibt. Zudem ist die Redundanz des Umrichters zwar für SAE Level 2 nicht zwingend erforderlich, es sind aber die Anorderungen für SAE Level 3 erfüllt, weil auch bei einem Teilausfall der elektrischen Traktionsmotoren weiterhin ein Regelbetrieb an der Hinterachse möglich ist. SAE Level 3 rechtfertigt alternativ auch ein Inverterkonzept gemäß dem Stand der Technik mit 30 bis 40 Bauelementen, weil vergleichbare Bremssysteme, beispielsweise 2-Box-Bremssysteme, nochmals deutlich aufwändiger sind als typische 1-Box-Bremssysteme für SAE Level 2.

Die nachstehend im Detail beschriebene Konfiguration des erfindungsgemäßen neuen Umrichters (als "RSP-4Q-Umrichter" bezeichnet) ermöglicht es, einen Umrichter mit nur 18 Schaltelementen (insgesamt nur sechs Verbindungsschaltelemente und zwölf Versorgungsschaltelemente) zu realisieren, der es ermöglicht, während des Betriebs des Elektromotors von einer Serienschaltung zu einer Parallelschaltung der Phasen und umgekehrt vorzunehmen. In Parallelschaltung sind hierbei die zwölf Versorgungsschaltelemente aktiv, während in Serienschaltung die sechs Verbindungsschaltelemente und sechs der zwölf Versorgungsschaltelemente aktiv sind. Unter "aktiv" kann hierbei verstanden werden, dass diese Schaltelemente getaktet angesteuert werden, während sich die anderen Schaltelemente beispielsweise im Freilauf befinden.

Ergänzend erfolgt die Umschaltung von der Serienschaltung zur Parallelschaltung oder umgekehrt in Abhängigkeit von einem Ausfalls eines oder mehrerer Betriebselemente. Unter den Betriebselementen können vorliegend und nicht abschließend die Schaltelemente, beispielsweise Versorgungsschaltelemente und Verbindungsschaltelemente, und/oder die Spulen der einzelnen Phasen verstanden werden. Durch diese Ausgestaltung ist es auf einfache Weise möglich, bei einem Ausfall eines oder mehrerer Betriebselemente durch eine Umschaltung von der Serienschaltung zur Parallelschaltung den Elektromotor dennoch weiter zu betreiben.

Der in Figur 7b dargestellte Umrichter, wie ihn etwa die WO 2021/179980 beschreibt, ist an einen Elektromotor 4 mit sechs Phasen U, V, W, U', V', W' angeschlossen, der lediglich schematisch mit einem Kreis und seinen Anschlüssen abgebildet ist.

Jede Phase U, V, W, U', V', W' weist zumindest eine Spule 6 auf. Jeweils zwei Phasen U, V, W, U', V', W' sind zu einem Strang zusammengefasst. Ein Strang ist in Figur 7b exemplarisch durch eine Umkreisung der jeweils den Strang ausbildenden Phasen dargestellt. Jeweils eine der zwei Phasen U, V, W, U', V', W' des Stangs ist zu der anderen Phase U, V, W, U', V', W' des gleichen Strangs 8 um 180 Grad elektrisch gedreht, also invertiert geschaltet. Die jeweils invertiert geschalteten Phasen U', V', W' sind zur Unterscheidung der anderen Phase U, V, W mit einem Strich gekennzeichnet. So ist im Ausführungsbeispiel die Phase U' die zur Phase U invertiert geschaltete Phase, die Phase V' die zur Phase V invertierte Phase und die Phase W' die zur Phase W invertierte Phase.

Der Umrichter weist ferner sechs Schalteinheiten 10 auf, die durch gestrichelte Rechtecke dargestellt sind. Jeweils eine Schalteinheit 10 ist einer Phase U, V, W, U', V', W' zugeordnet. Zudem bilden jeweils die Schalteinheiten 10 der zwei Phasen U, V, W, U', V', W' eines Strangs ein Schaltmodul aus. In der Figur bilden jeweils die Schalteinheiten 10 ein Schaltmodul aus, sodass der erfindungsgemäße Umrichter gemäß Figur 7b drei Schaltmodule aufweist. Jede Schalteinheit 10 ist mit einer verbunden, die die einzelnen Phasen U, V, W, U', V', W' mit einer Versorgungsspannung beaufschlagt. Hierzu weist jede Schalteinheit 10 zwei Versorgungsschaltelemente 16 auf. Die Versorgungsschaltelemente 16 sind im Ausführungsbeispiel als MOSFET ausgebildet.

In Abhängigkeit von einem Betriebsmodus des Elektromotors 4 sind die jeweils zwei Phasen U, V, W, U', V', W' eines Strangs parallel oder in Serie zueinander geschaltet. Hierzu weist der Umrichter 2 eine Steuereinheit auf, die derart eingerichtet ist, die Versorgungsschaltelemente 16 und die Verbindungsschaltelemente 20 anzusteuern.

Ergänzend weist der Umrichter 2 eine Sicherungseinheit auf (in Figur 7b nicht gezeigt), die auch als "Circuit Breaker Modul" bezeichnet wird und zwischen dem Elektromotor 4 und dem Umrichter 2 angeordnet ist. Die Sicherungseinheit weist nicht dargestellte Schaltelemente auf, die dazu eingerichtet sind, den Elektromotor 4 in einem Fehlerfall vorzugsweise galvanisch von dem Umrichter 2 zu trennen.

Aufgrund der Einfachheit wird der hier beschrieben RSP-4Q-Inverter für die Regelstrategie mit Drehmoment-Boost, wie in Fig. 7a beschrieben, eingesetzt. Bei weiteren Ausführungsbeispielen können aber auch anderer Inverter geeignet sein, die eine Umschaltung der Induktivitäten im Betrieb ermöglichen, wie beispielsweise ein Inverter mit Umschaltung zwischen Dreieck- und Sternschaltung oder ein anderer Inverter wie sie beispielsweise in der DE 11 2018 000 733 T5 oder DE 11 2018 001 213 T verwendet werden.

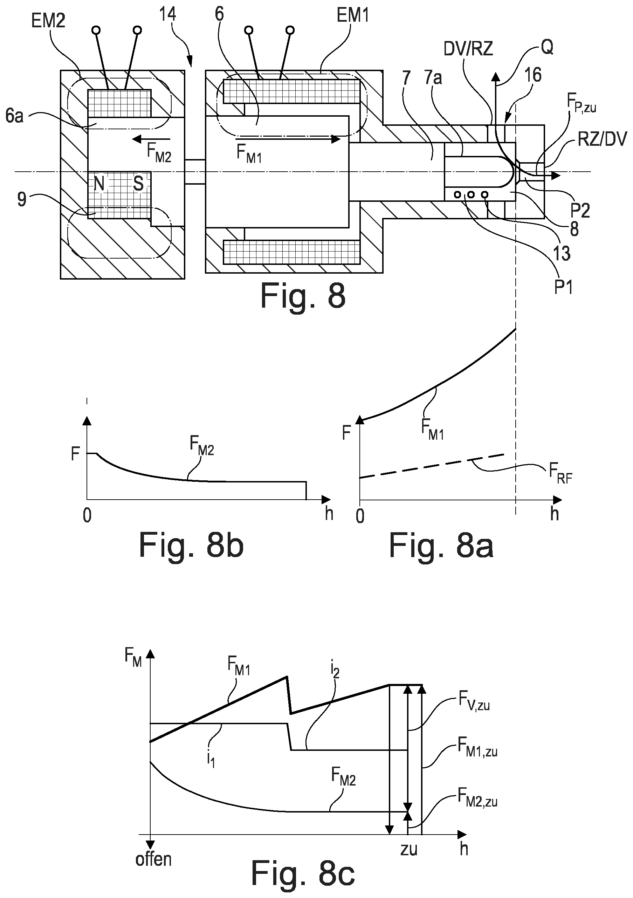

**Figur 8** zeigt eine vorteilhafte Ausführungsform eines zuziehfesten bidirektion wirksamen Einlass-Auslass-Ventil MV₂ₖ, das für die Umsetzung der Druckstellfunktionen in den EHB-Bremssystemen der Figuren 6a bis Figur 6d oder für einen Achsdrucksteller gemäß Figur 9a und 9b eingesetzt wird.

Figur 8 zeigt ein für die genannten Ausführungsformen benötigtes spezielles Ventil MV₂ₖ, welches in beide Durchflussrichtungen sicher funktioniert. Das heißt, die Funktionsfähigkeit des Ventils ist gewährleistet, selbst bei grossen Durchflussmengen, wie beispielsweise 100 cm³/s - 120 cm³/s, oder großen Druckdifferenzen über das Ventil, wie beispielsweise 160 bar - 220 bar.

Insbesondere für die vorbeschriebenen Bereiche von Parametern ist bei diesem Ventil MV₂ₖ sichergestellt, dass es nicht selbsttätig schliesst.

Das Ventil MV₂ₖ hat grundsätzlich den typischen Aufbau eines Magnetventils mit elektromagnetischem Kreis EM1 mit einem Anker 6, einem Ventilstellglied beziehungsweise Ventilstössel 7 und eine Ventilsitz 8 sowie einer Rückstellfeder 13. Auf die Rückstellfeder kann verzichtet werden, wenn die Kraftzusatzeinrichtung, welche in Figur 8 durch einen elektromagnetischen Kreis EM2 gebildet ist, entsprechend ausgebildet ist.

Der Magnetkreis EM1 erzeugt (siehe Figur 8a) über einen Hub h einen starken progressiven Kraftverlauf FM1 und die Rückstellfeder 13 erzeugt zur Rückstellung des Ankers eine über den Hub h progressive Rückstellkraft F_{RF}.

Der Anker 6 ist im linken Bildteil von Figur 8 mit einem zweiten krafterzeugenden Element gekoppelt, welches eine Kraftzusatzeinrichtung bildet. Diese kann aus einem zweiten elektromagnetischem Kreis EM2 mit Anker 6a bestehen, dessen schaltbare Kraft F_{M2} der Kraft F_{M1} des ersten magnetischen Kreises EM1 entgegenwirkt.

Als kostengünstigere Variante kann auch ein permanentmagnetischer Kreis als passive Kraftzusatzeinrichtung eingesetzt werden, umfassend einen kleinen Permanentmagneten 9 mit Polplatte 10.

Die Kraftwirkung von F_{M2} wirkt F_{M1} entgegen und wirkt mit relativ starker Kraft bei offenem Ventil mit starkem gewünschtem Abfall der Kraft über dem Hub h.

Die Kraft F_{M2} ist (siehe Figur 8b) bei Erreichen des Hubendes immer noch groß genug, um die übliche Ankerrückstellung zu übernehmen und daher auch optional die übliche Rückstellfeder 13 ersetzen.

Figur 8c zeigt das Zusammenwirken der Kraftquellen F_{M1} als Funktion der Stromstärke und F_{M2} beim Permanentmagneten.

Am Ventilsitz wirkt in geschlossener Ventilstellung die Druckdifferenz P2-P1 mit der Kraft FP, zu welcher in Richtung Ventilöffnung gerichtet ist, wenn der Druck P2 größer als der Druck P1 ist.

Am Ventilsitz wirkt in offener Ventilstellung durch den Volumenstrom Q durch das Ventil die beschriebene hydraulische Kraft F_{H}, welche das Ventil ohne Gegenmaßnahmen zureißen könnte, sowohl beim Druckaufbau P_{auf} und auch beim Druckabbau P_{ab}, je nachdem wie das Magnetventil MV₂ₖ an eine Druckversorgung DV und einen Radbremszylinder RZ angeschlossen ist, und je nachdem in welche Richtung die Volumenströmung verläuft. Dies liegt der in den nachfolgenden Figuren 9a und 9b gezeigten Druckregelung mit Druckversorgungseinrichtung und Radbremsen zugrunde.

Ist das Magnetventil in einer geöffneten Stellung, so wirkt bei Durchströmung des Ventils ausgehend vom Ventilankeranschluss (14) in Richtung Ventilsitzanschluss (16) eine Kraft F_{H}, abhängig von der Höhe des Volumenstroms Q aufgrund des Bernouilli-Effekts. Ist der Volumenstrom Q sehr hoch, zum Beispiel bei hohen Druckdifferenzen, so kann dies dazu führen, dass das Ventil allein durch die Strömungskraft F_{H} zugedrückt wird. Dies hat zur Folge, dass das Ventil schließt und nicht mehr geöffnet werden kann.

Um diesen Effekt zu vermeiden, wirkt die Kraft der Kraftzusatzeinrichtung F_{M2} der Kraft F_{H} entgegen und verhindert selbst bei großen Druckdifferenzen, die im Bremssystembetrieb auftreten können, ein Schließen des Ventiles.

Vorzugsweise ist die Zusatzkraft F_{M} bei Offenstellung des Ventils am höchsten, was beispielsweise durch einen Permanentmagnetkreis erreicht werden kann, und wirkt über den gesamten Hubbereich und unterstützt die Rückstellkraft der Ventilfeder F_{RF} derart, dass das Ventil bei einer Durchströmung mit einem Volumenstrom Q unabhängig von der Ventilstellung, das heißt insbesondere auch in einem halb geschlossen Zustand, stets in die offene Ventilstellung zurückgeführt wird.

Bei entsprechender Auslegung kann auch auf die Ventilrückstellfeder 13 verzichtet werden.

Das Ventil muss auch derart ausgelegt werden, dass bei Bestromung des Ventils durch Aktivierung des Magnetkreises EM1 die Primärventilkraft F_{M1} die Summe beider Kräfte (F_{M2}+F_{RF}) überwunden werden kann, sodass das Ventil mit Bestromung schließen kann.

Große Volumenströme können beispielsweise dann auftreten, wenn die Radbremse, wie typischerweise bei einer Radventilkonfiguration mit Einlass-/Auslassventilen üblich (vergleiche für diese Ausführungsform Fig. 6a - 6d), über den Ankeranschluss an das Schaltventil angeschlossen ist und die ECU oder Stromversorgung des Bremssystems zu diesem Zeitpunkt ausfällt und damit einen Druckabbau über Auslassventile verhindert, weil diese durch den Differenzdruck geschlossen werden und nicht mehr geöffnet werden können, da ein verbleibender Restdruck größer als die Rückstellkraft FRF der Ventilfeder das Ventil zuhält. Ein Ventilzuziehen kann auch beim Abbau des Drucks der Radbremse mit einem sehr hohen Druckgradienten auftreten, beispielsweise beim Druckabbau durch eine sehr schnelle Rückbewegung des Kolbens der Druckversorgungseinheit.

Eine zuziehfeste Ventilgestaltung auch dann relevant, wenn die Druckversorgungseinrichtung an den Ankeranschluss angeschlossen ist, vergleiche etwa die Figuren 9a und 9b, und mit der Druckversorgungseinheit sehr schnell ein Druck aufgebaut wird. Ein schneller Druckaufbau erfolgt beispielsweise bei der automatischen Notbremse (AEB) oder beim Multiplexverfahren mit Druckverlaufsregelung über Volumenregelung/-steuerung der
Druckversorgungseinrichtung anstatt Vordruckregelung sowie Druckverlaufsreglung über Volumenflussdrosselregelung der PWM-Steuerung der Einlassventile.

Der Zuzieheffekt kann durch eine Druckdifferenzbegrenzung in der Regelung der Druckversorgungseinheit oder vorzugweise mittels einer in den Figuren nicht dargestellten Drossel begrenzt werden, wobei die Drossel vor dem Ankeranschluss der Ventilanschluss in einer hydraulischen Leitung angebracht ist.

Zudem ist alternativ denkbar, dass ein Überdruckventil in einer hydraulischen Parallelschaltung zum Schaltventil angeordnet ist, welches sich bei hohen Differenzdrücken öffnet und somit die durch den Bernoulli-Effekt wirksame hydraulische Kraft F_{H} begrenzt und somit die Kraftzusatzeinrichtung F_{M2} nicht erfordert. Dies vereinfacht die Ventilgestaltung, limitiert aber die Druckänderungsdynamik über die hydraulische Druckversorgung.

Wenn die Bremsmomentänderung parallel über einen Traktionsmotor geregelt wird, dann sind derartige Massnahmen nicht erforderlich, weil die Anforderung an die Dynamik des hydraulischen Bremssystems geringer sind. Dann können Standardventile ohne Zusatzkrafteinrichtung und ohne Drossel beziehungsweise Überdruckventil eingesetzt werden.

Bei einem Ausfall eines Radkreises kann ein Radkreis durch Schließen eines Einlassventils SV, das zwischen Radbremse und Druckversorgung angeordnet ist, getrennt werden. Das hydraulische Bremssystem mit n-Radkreisen kann dann mit einem Radkreis weniger betrieben werden, das heißt mit n-1-Radkreisen. So kann beispielsweise statt einer 4-kreisigen Bremssystemregelung noch mit 3 Kreisen gearbeitet werden. Dadurch ist im Fehlerfall eines Ausfalles eines Radkreises nach Schließen des Einlassventils SV eine immer noch sehr hohe Verzögerung erreichbar und es kann zudem eine Giermomentregelung mit 3 Radbremsen beziehungsweise eine ESP- Funktion aufrechterhalten werden. Steht an dem ausgefallenen Radkreis ein Elektromotor zur Verfügung, dann kann dieser die Bremsmomentregelung der ausgefallen Radbremse übernehmen und somit kann weiterhin eine 4-Kreis-Bremsmomentregelung ohne oder mit nur geringen Einschränkungen, etwa durch das maximale Bremsmoment des Traktionsmotors, aufrechterhalten werden.

Der Ventilstößel 7 kann auch eine spezielle Form aufweisen, welche die Gegenkraft durch hydraulische Strömungskräfte liefert und die Zuziehkraft reduzieren kann.

Figur 8c zeigt die elektrische Ansteuerung des Ventils über einen Strom i. Die Stromstärke i1 wird in geschlossener Ventilstellung so gewählt, dass F_{M1} größer F_{M2} ist. Der Strom kann dann in geschlossener Stellung des Ventils, bei Stromstärke i2, variiert werden, abhängig vom hydraulischen Differenzdruck P2-P1 über das Ventil. Da die Kraft F_{M2} aus beschriebenen Gründen in dieser Stellung im Bereich der
üblichen Federkraft liegt, kann das Ventil auch beispielsweise mit einer Stromsteuerung oder Stromregelung betrieben werden.

Um das Ventil in geschlossener Stellung zu halten, muss die Differenzkraft ${F}_{V , zu} = {F}_{M 1 , zu} - {F}_{M 2 , zu}$ größer sein als die Kraft FP, welche aus dem Differenzdruck P2-P1 über das Ventil in geschlossener Stellung resultiert.

**Figur 9a** beschreibt den Aufbau eines Druckstellers in Form einer elektromotorisch über ein Getriebe angetriebenen Kolben-Zylinder-Einheit, an die über Hydraulikleitungen zwei Radbremsen R1 und R2 und optional weitere hydraulische Verbraucher Vx angeschlossen sind. Weitere hydraulische Verbraucher Vx können weitere Radbremsen oder auch anderere hydraulische Verbraucher sein, beispielsweise Hydraulikkolben von Kupplung(en) oder eine hydraulische Servolenkung oder sonstige Stellkolben einer Fahrzeugachse. Vorzugweise ist der Drucksteller auch mit einer Ventilvorrichtung mit einem Vorratsbehälter VB verbunden.

Der Drucksteller weist vorzugsweise 2x3-Phasen-Anschlüsse auf zu jeweils zwei Steuergeräten ECU1_{EHB} und ECU2_{EHB}, wobei Stromsensoren i/U und Winkelgeber α/U vorgesehen sind, die vorzugsweise ebenso redundant ausgeführt sind und die für eine hochpräzise PPC-Drucksteuerung oder eine Druckregelung über Kolbenposition oder Strom verwendet werden.

Am Ausgang der Druckversorgung ist vorzugsweise ein Drucksensor p/U vorgesehen, der primär für Kalibrierungszwecke verwendet wird. Die Druckregelung oder Drucksteuerung kann aber auch ohne diesen Druckgeber durchgeführt werden, wenn der Zusammenhang zwischen EHB-Bremsmoment und Strom oder Kolbenposition anderweitig hergestellt wird, beispielsweise durch eine Nutzung von Beschleunigungssensoren oder einen Abgleich mit den Bremsmomenten oder der Fahrzeugverzögerung durch Bremsmomente von elektrischen Traktionsmotoren TM1-TM4.

Als Magnetventile werden bidirektional wirkende Einlass/Auslassventile eingesetzt, die hier als "MV₂ₖ-"bezeichnet werden. Dabei werden die MV₂ₖ-Ventile derart betrieben, dass über die Magnetventile sowohl Druck aufgebaut als auch Druck abgebaut werden kann, wobei die Druckänderung insbesondere hochdynamisch erfolgt, das heißt mit > 1000 bar/sec, vorzugsweise > 2000 bar/sec. Die Ventile müssen entsprechend der Systemspezifikation, das heißt entsprechend der geforderten maximalen Drücke und maximalen Volumenströme, zuziehfest ausgelegt werden.

Vorzugsweise werden dabei Magnetventile mit einem ersten Weicheisenmagnetkreis EM1 und einem zweiten Permanentmagnetkreis EM2 gemäß den Figuren 8-8c eingesetzt.

Alternativ können auch modifzierte Einlassventile einer Standard-ESP-Einheit als MV₂ₖ eingesetzt werden, das heißt stromlos offene Magnetventile mit Standard-Ventilöffnungsquerschnitt und 6 mm-Magnetankerdurchmesser ohne zweiten Permanentmagnetkreis EM2, welche in der klassischen Auslegung ebenfalls zuziehfest ausgeführt werden können, insbesondere aufgrund der bei dem vorliegenden Fahrdynamiksystem auftretenden geringeren Maximaldrücke und der daher geringeren Zuziehkräften bei Druckänderung mit maximalen Druckgradienten.

Wenn Einlass-Ventile einer ABS/ESP-Einheit als MV₂ₖ Ventile eingesetzt werden, dann müssen diese entsprechend den Druckdifferenzen und
Druckänderungsgeschwindigkeiten ausgelegt werden, beispielsweise mit einem stärkeren Magnetkreis mit größerem Anker und/oder stärkeren Rückstellfedern.

Alternativ kann der Druckgradient und/oder Druckdifferenzen über die Regelung beim Druckaufbau über Software begrenzt werden, sodass ein dynamischer Druckaufbau nicht zum Zuziehen der Magnetventile führt.

Aufgrund der Tatsache, dass der Druckbereich bei der hier beschriebenen Regelung des Fahrdynamiksystems geringer ist als bei Standard-Bremssystemen, und weil zudem ein Bremsmoment über den elektrischen Traktionsmotor aufgebaut werden kann, sind die Anforderungen an die MV-_{2K} Ventile geringer als bei Standard-Bremssystemen.

Spezifisch für das MV₂ₖ-Ventil ist - unabhängig von der gewählten Variante -, dass die Magnetventile ohne parallel geschaltetes Rückschlagventil ausgeführt werden beziehungsweise dass in der Hydraulikverbindung zwischen einer Radbremse R1,R2 oder einem hydraulischen Verbraucher Vx und der Druckversorgungeinrichtung kein Rückschlagventil in der Hydraulikleitung parallel angeordnet ist.

Damit wird der Zweck verfolgt, dass ein Druck in der Radbremse konstant gehalten werden kann, während in anderen Radbremsen ein Druck geändert wird. Dies ist ein großer Unterschied zu Standardbremsanlagen, wo ein Druck in einer Radbremse nur über einen Vordruck durch den Drucksteller aufrecht erhalten werden kann; dies beschränkt bei Standardbremsanlagen die Freiheitsgrade in der Druckregelung stark und es erschwert zudem eine Diagnose des Ausfalls einer Radbremse erheblich, wenn dies nicht gar undiagnostizierbar wird, da bei einem Radkreisausfall nicht erkennbar ist, ob das Magnetventil, das Rückschlagventil oder die hydraulische Leistung die Ursache ist.

Wird ein MV₂ₖ-Ventil eingesetzt, so kann die Radbremse unabhängig von der Ausfallsursache sicher von der Druckversorgung abgetrennt werden. Es ist somit eine Umschaltung von einem m-kreisigen elektrohydraulischen Bremssystem EHB auf ein m-1-kreisiges Bremssystem möglich. In Figur 9a etwa wird aus einem 2-kreisigen EHB mit zwei Radbremsen ein 1-kreisiges EHB, beziehungsweise aus einem 3-kreisigen EHB mit Vx ein 2-kreisiges EHB.

Bei dem in Figur 6a gezeigten Fall wird aus einem 4-kreisigen EHB ein 3-kreisiges EHB, bei Figur 6b wird aus einer 3-kreisigen EHB ein 2-kreisiges EHB.

Eine Besonderheit dieser ersten Konfiguration ist, dass der Ventilsitz des MV₂ₖ-Ventils am Radkreis angeschlossen ist und dass sein Ankerraum mit dem Drucksteller verbunden ist.

Mit einem derartigen Aufbau kann eine innovative Druckregelung mit bidirektional wirkenden Einlass/Auslassventilen sowie Vor- und Zurückbewegen des Kolbens einer Kolben-Zylinder-Einheit über Strom oder Kolbensteuerung sowie simultanten druckgradientengesteuerten Druckabbau realisiert werden. Der Druckaufbau erfolgt in einer Ausführungsform im bekannten Multiplexverfahren nacheinander. Alternativ kann die Totzeit des Druckaufbau durch einen Bremsmomentgradienten durch einen elektrischen Traktionsmotor vermieden, was möglich ist, wenn ein elektrischer Traktionsmotor für radindividuellen Antrieb vorhanden ist. Alternativ kann der Bremsmomentaufbau auch nur über den Traktionsmotor einer Achse erfolgen, was insbesondere dann möglich ist, wenn an zwei Rädern einer Achse beide Räder den gleichen Bremsmomentanstieg aufweisen.

Sofern ein simultaner Druckaufbau erforderlich ist und kein elektrischer Traktionsmotor zur Unterstützung zur Verfügung steht, kann der Druckaufbau auch gleichzeitig durch Zeitsteuerung der Ventile erfolgen, das heißt, ein variabler Vordruck wird durch den Kolben vorgegeben und ein Ventil wird früher geschlossen als das zweite Ventil. Der Druckabbau erfolgt simultan an mehreren Radbremsen über Kolbensteuerung mittels der Druckvolumenkennlinie sowie PWM-Steuerung der Ventile oder Stromregelung der Ventile. Das heißt, es wird über einen Strom ein variabler Durchflussquerschnitt eingestellt, so dass unterschiedliche Druckabbaugradienten realisiert werden können.

Eine derartige Regelung wird im weiteren als PPC-Gen2-V1 (**P**iston **P**ressure **C**ontrol der **2. Gen**eration mit Ventilanschluss **V1**: Ventilsitz Einlass/Auslassventil MV₂ₖ an Radbremse) bezeichnet.

**Figur 9b** beschreibt den Aufbau eines Druckstellers mit einer elektromotorisch über ein Getriebe angetriebenen Kolben-Zylinder-Einheit mit MV₂ₖ Schaltventilen, deren Ventilsitz im Unterschied zur Figur 9a an die Hydraulikleitung zum Drucksteller angeschlossen ist und deren Ankerraum mit der Radbremse verbunden ist. Zudem sind optional Auslassventile vorgesehen.

Mit einem derartigen Aufbau kann eine zweite Variante einer Druckregelung **PPC-Gen1-V2** realisiert werden, mit bidirektional wirkenden Einlass/Auslassventilen MV₂ₖ sowie Vor- und Zurückbewegen des Kolbens einer Kolben-Zylinder-Einheit über Strom oder Kolbensteuerung sowie simultan druckgradientengesteuertem Druckaufbau. Die Ventilauslegung der MV2k-Ventile ähnlich zur in Figur 9a gezeigten Konfiguration und damit übertragbar, ebenso die PPC-Druckregelung oder Drucksteuerung sowie die vorzugsweise redundante Auslegung der Motoren mit redundanten Elektroniken ECU1_{EHB}, ECU2_{EHB} und Sensoren α/U, i/U.

Der Druckabbau erfolgt in einer Ausführungsform im bekannten Multiplexverfahren nacheinander mit einem Zeitverzug Δt_{MUX} oder über eine Zeitsteuerung von Auslassventile, wie von klassischen ABS-Systemen bekannt.

Der Druckabbau kann im Gegensatz zum Stand der Technik aber auch simultan in einem Radkreis (R2) über Einlass-/Auslassventile mittels Kolbensteuerung anhand der Druckvolumenkennlinie erfolgen, während er in einem zweiten Rradkreis (R1') über Auslassventile erfolgt. Damit kann der Zeitverzug Δt_{MUX} vermieden werden.

Damit kann in kritischen Fahrsituationen, beispielsweise bei high-µ oder einem µ-Sprung, der Druck sehr schnell abgebaut werden. In einem anderen Regelzustand, beispielsweise bei low-µ, das heißt bei einer Reglung auf Eis und Schnee, kann die Regelung im bekannten Multiplexverfahren erfolgenwerden. Durch Kombination der Druckabbauverfahren können somit sehr kurze Bremswege in allen Fahrsituationen errreicht werden.

Die Kombination des Druckabbaus über Auslassventile mit Einlass-/Auslassventilen hat den weiteren Vorteil, das keine für hohe Druckdifferenzen und Volumenflüsse ausgelegten zuziehfesten MV₂ₖ- Ventile eingesetzt werden müssen, weil beim Druckabbau die MV₂ₖ-Ventile nicht mit hohen Durchflussmengen durchströmt werden müssen, da Druckabbauten mit hohen Druckgradienten über Auslassventile erfolgen.

Ferner sind die MV₂ₖ-Ventile im Druckabbau weiterhin deshalb geringer beansprucht, weil das beschriebene elektrohydraulische Bremsaggregat EHB für das Fahrdynamiksystem auf einen Maximaldruck von maximal 140 bar ausgelegt ist und die Ventile nicht, wie in Figur 8a ausgeführt, druckfest für 160 bar - 220 bar sein müssen. Das heißt, es können in dieser Ausführungsform modifizierte Standardeinlassventile einer ESP-Einheit mit typischen Ventilöffnungsquerschnitten, jedoch ohne parallel geschaltete Rückschlagventile eingesetzt werden. Die Vorteile ohne parallele Rückschlagventile wurden oben mit Bezug zu Figur 9a beschrieben und gelten analog für Figur 9b.

Durch die vorteilhafte Kombination mit Auslassventilen kann in allen Fahrsituation der Druck schnell abgebaut werden, womit auch die Anforderungen an die Dynamik des Antriebsmotors des Druckstellers signifikant reduziert werden können. Wird in den meisten Betriebszuständen im MUX-Verfahren geregelt, so kann der hydraulische Bremskreis primär im geschlossenen Bremskreis betrieben werden. Damit kann auf das kritische Nachfördern von Hydraulikfluid im Regelbetrieb - typisch für offene Systeme gemäß Stand der Technik (DE 10 2018 212 905 A1), die nach dem in EP 2 580 095 B1 beschriebenen Verfahren geregelt werden - verzichtet werden. Das Nachfördern von Volumen in offenen Systemen wird nämlich zunehmend als kritisch angesehen, da die Zeitunterbrechung von mehr als 100 ms zu kritischen Fahrsituationen führen kann.

Zudem kann ein Bremssystem, das in das hier beschriebene Fahrdynamiksystem eingebettet ist, mehr Funktionen neben dem reinen ABS-Regelbetrieb übernehmen, etwa weitere Bremsmomenteingriffe wie Torque-Vektoring-Eingriffe. Dadurch könnte es Hydraulikvolumen im offenen Kreis verlieren.

Wird als Schaltventil noch das erfindungsgemäße MV_{2K}-Ventil eingesetzt, so kann analog zu dem mit Bezug zu Figur 9a beschriebenen Fall ebenso ein Radkreisausfall diagnostiziert werden und auch bei geringer Leckage kann der Radkreis weiterbetrieben werden, was bei Systemen gemäß Stand der Technik mit parallel geschalteten Rückschlagventilen nicht möglich ist.

Eine derartige Regelung wird hier als PPC-Gen2-V2 (**P**iston **P**ressure **C**ontrol der **2. Gen**eration mit Ventilanschluss **V2**: Ventilsitz Einlass/Auslassventil MV₂ₖ an Druckversorgung) bezeichnet.

Alternativ zu den zuziehfesten Magnetventilen MV₂ₖ können auch Standard-Einlass-Ventile einer ABS/ESP-Einheit eingesetzt werden, die entsprechend den Druckdifferenzen und Druckänderungsgeschwindigkeiten ausgelegt sind, beispielsweise mit stärkerem Magnetkreis und/oder stärkeren Rückstellfedern. Aufgrund der Tatsache, dass der Druckbereich der hier beschrieben Regelung des Fahrdynamiksystems geringer ist als bei Standard-Bremssystemen, sind die Anforderungen an die Magnetventile geringer.

Als Alternative zur Kolben-Zylinder-Einheit mit Einlass/Auslassventilen kann auch eine einfache Pumpe, beispielsweise eine 2-Kolben-Pumpe nach Stand der Technik bei ABS-Pumpen oder eine Zahnradpumpe gemäß WO 2021 005 151 A1 eingesetzt werden. Bei einer 2-Kolben-Pumpe erfolgt die Druckabbauregelung über Auslassventile und der Druckaufbau wird über einen Vordruck und eine PWM-Steuerung der Einlassventile geregelt. Wird eine Zahnradpumpe eingesetzt, so besteht der gleiche Freiheitsgrad wie bei der Kolben-Zylinder-Einheit, weil wahlweise Druck über Auslassventile oder über die Zahnradpumpe durch Änderung der Drehrichtung erfolgen kann. Die Ausführung hat Kostenvorteile, jedoch Nachteile in der Präzision der Bremsmomentregelung durch Leckagen in der Zahnradpumpe.

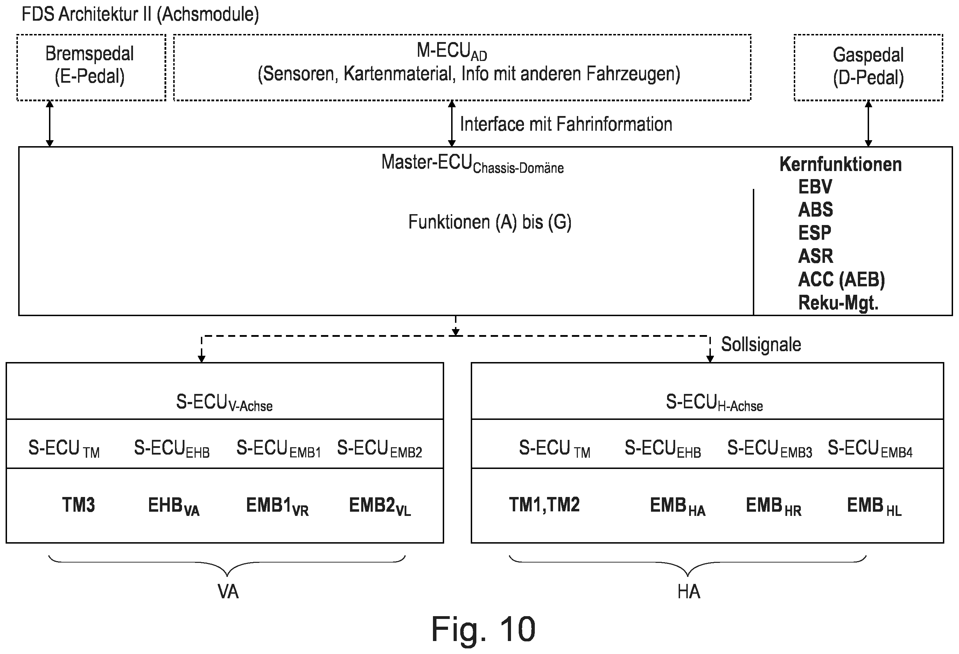

**Figur 10** zeigt die vorteilhafte "Architektur II" des Fahrdynamiksystems für E-Achsen, wobei an der Vorderachse und Hinterachse jeweils mehrere Bremsaggregate wirken.

Bremsaggregate sind Traktionsmotoren TM1, TM2, TM3, hydraulische Drucksteller EHB_{HA}, EHB_{VA} und/oder EMB-Module für Radbremsen. Die zentrale Steuereinheit übernimmt hier die Regelung der Bremsmomente und sendet Sollsignale an die Steuergeräte S-ECU_{VA}, S-ECU_{HA} der Achsen. Damit werden analog zu "Architektur I" vorzugsweise folgende Funktionen realisiert:
- (A) Basisbremse mit Thermomanagment und Energieflussmanagment des Traktionsmotors;
- (B) Notbremse AEB mit elektronischer Bremskraftverteilung (EBV);
- (C) Regeneratives Bremsen an mehreren Achsen;
- (D) ABS-Regelung mit Basisbremsmomentunterstützung und/oder gemeinsamen Bremsmomentregelung;
- (E) Bremsbetrieb bei Ausfall des elektrohydraulischen Bremsaggregats EHB-Z, EHB-VA;
- (F) Giermomenteingriffe beziehungsweise radindividuelle Bremsmomenteingriffe; und/oder
- (G) radindivduelle Bremsmomenteingriffe für radindividuelles regeneratives Bremsen.

Das Fahrdynamiksystem sendet Sollwerte insbesondere Bremsmomente oder Bremsdrücke umfassen. Für bestimmte Funktionen (etwa die oben beschrieben Funktionen (C), (F), (G)) werden auch Sollsignale für die Drucksteuerung oder Druckregelung, beispielsweise Steuersignale für Magnetventile für Funktioneen wie Schaltdauer der Öffnungszeit, PWM-Frequenz oder alternativ Stromprofil bei Druckänderung mit gedrosselten Ventilquerschnitten, und/oder Vordrücke für die Druckversorgungseinrichtung zum Druckaufbau oder Druckabbau vorgegeben.

Ferner kann die M-ECU_{Domäne} auch eine Schnittstelle zum Steuergerät oder Domäne des autonomen Fahrens M-ECU_{AD} aufweisen und kann weitere Informationen auswerten, die für eine effektive und prädiktive Regelung hilfreich sind. Dies sind beispielsweise Kamerainformationen über die Fahrbahnbeschaffenheit (Schnee, Eis, Regen) oder Informationen über die Umgebung (Abstände zu Passanten und/oder anderen Fahrzeuge).

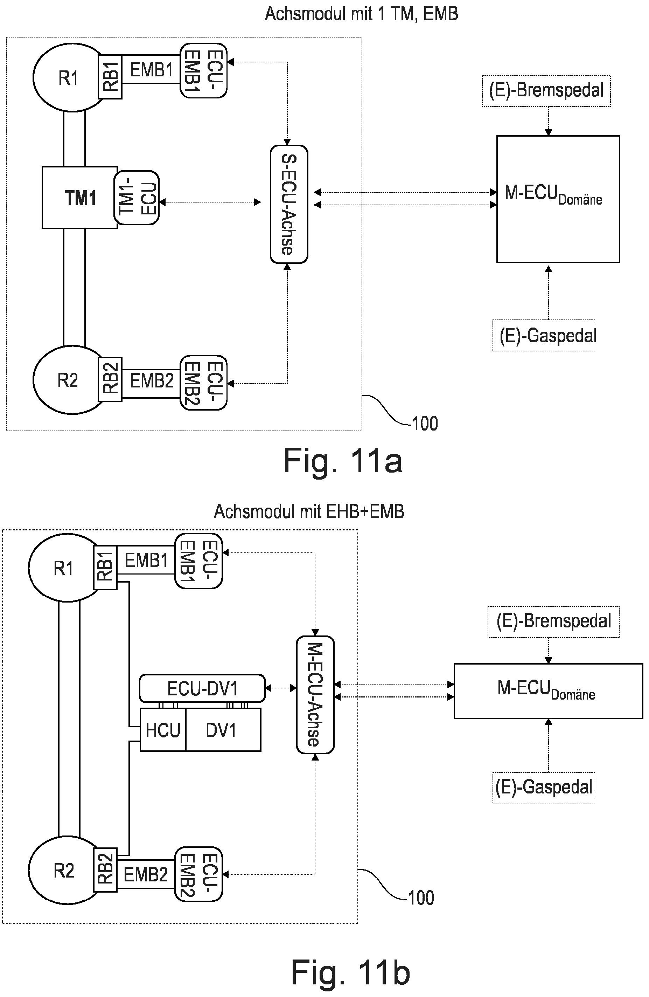

Mit Bezug zu **Figur 11a** wird eine erste Ausführungsform eines Achsmoduls beschrieben. Bei diesem Beispiel sind an je einem Rad elektromotorische Bremsaggregate EMB1, EMB2 vorgesehen, ferner ist ein elektrischer Traktionsmotor TM1 für die Achse vorgsehen.

Ein Steuergerät der Achse S-ECU-Achse kommuniziert mit den elektromotorischen Bremsaggregaten EMB1, EMB2 und dem elektrischen Traktionsmotor TM1 und sendet entsprechend Sollsignale derart, dass vorzugweise gleichzeitig ein Bremsmoment mittels der elektromotorischen Bremsaggregate EMB1, EMB2 und des Traktionsmotors TM1 geregelt wird. Dabei wirken vorzugsweise auch im Regelbetrieb die Bremsmomente additiv auf die Räder.

So wird etwa mit dem Traktionsmotor TM1 vorzugsweise ein Basisbremsmoment aufgebaut, das die Bremsmomentapplitude der EMB-Module reduziert (siehe obige Beschreibung mit Bezug zu Figur 5). Zudem kann das Basisbremsmoment des Traktionsmotors TM1 auch gleichzeitig zu EMB-Bremsmomenten der Radbremsen reduziert werden, wodurch höhere Bremsmomentgradienten erzielt werden können. Dies ist insebsondere in kritischen Fahrsituationen wie bei einem µ-Sprung von Bedeutung (siehe obige Beschreibung von Regelsituationen mit Bezug zu Figur 5b). Dies kann ferner vorteilhaft zum Downsizing der EMB-Module mit geringen Maximalkräften und geringerer Leistung der Antriebsmotoren der EMB genutzt werden.

Mit Bezug zu **Figur 11b** wird ein weiteres Ausführungsbeispiel beschrieben. Dabei ist in einem Achsmodul ein elektrohydraulischer Drucksteller EHB mit EMB-Modulen kombiniert, wobei der Drucksteller vorzugsweise gemäß Figur 9a und 9b aufgebaut ist und eine radindividuelle Regelung ermöglicht.

Damit kann wahlweise durch die EMB-Module oder mittels des elektrohydraulischen Bremsaggregats EHB eine radindividuelle Regelung erfolgen.

Dies ermöglicht maximale Freiheitsgrade in der Druckregelung.

Es ermöglich ferner Redundanzen in der radindividuellen Druckregelung, wie beispielsweise für SAE Level 4-5 gefordert, sodass die ABS-Regelfunktion redundant und zudem mit zwei unterschiedlichen Bauformen der Bremsmomentsteller realisiert werden kann. Dies ist besonders vorteilhaft in Hinblick auf die Erfüllung der Redundanzanforderungen.

Eine derarige Konfiguration ist insbesondere für die Vorderachse eines autonom fahrenden Fahrzeuges konzipiert, wo höhere Anforderungen erfüllt werden müssen als an der Hinterachse, etwa hinsichtlich der Lenkbarkeit und des großenr Einflusses auf den Bremsweg.

Eine derartige Achskonfiguration kann auch genutzt werden, um Steer-by-Wire-Anlagen zu vereinfachen, die typischerweise zwei Lenkaktuatoren aufweisen, wobei zudem ein Lenkaktuator mit einer 2x3-Phasenwicklung ausgestattet ist. So kann durch die Bremsmomente die Lenkung vereinfacht werden, weil eine sichere redundante Lenkung durch Bremsmomente sichergestellt werden kann. Dies führt zu Kosteneinsparungen von bis zu 100 € bei der Lenkung.

Alternativ ist auch ein Drucksteller mit nur einer hydraulischen Leitung an zwei Radbremsen denkbar, was in Figur 11b allerdings nicht dargestellt ist. Hierzu ist als Alternative zu einer Kolben-Zylinder-Einheit auch eine einfache Rotiationspumpe in Form einer Zahnradpumpe denkbar, mittels der Druck aufgebaut und Druck abgebaut werden kann. In dieser Ausführungsform kann ein achsweises Bremsmoment aufgebracht werden. Der hydraulische Drucksteller wirkt dann analog zum Traktionsmotor in der Regelung unterstützend, kann aber aufgrund der fehlenden Leistungsbeschränkung auch eine Verzögerung bis zum Blockierdruck erreichen. Damit ist eine achsweise ABS-Funktion möglich, was für die Regelung einer Hinterachse absolut ausreichend ist, wenn an der Vorderachse eine radindividuelle Regelung realisiert wird.

Wird das System der Figur 11b für die Hinterachse vorgesehen und kombiniert mit einem System der Figur 11a für die Vorderachse, so können ein 3-Kanal ABS-Betrieb sowie eine Giermomentregelung realisiert werden.

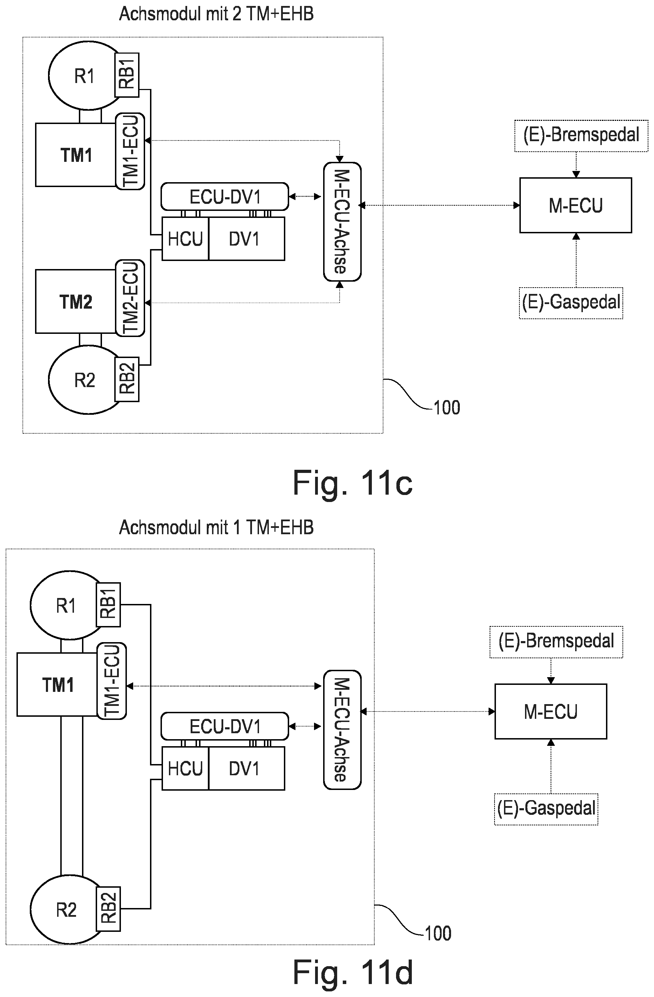

Mit Bezug zu **Figur 11c** wird eine weitere Ausführungsform mit elektrohydraulischem Bremsaggregat EHB sowie zwei elektrischen Traktionsmotoren TM1 und TM2 erläutert. Dabei ist je ein Traktionsmotor für ein Rad vorgesehen.

Alternativ ist das elektrohydraulische Bremsaggregat EHB wie dargestellt für eine radindividuelle Regelung ausgeführt, das elektrohydraulische Bremsaggregat EHB kann aber auch nur 1-kreisig konzipiert werden.

Mit einer derartigen Konfiguration wird sinnvollerweise eine Hinterachse eines Fahrzeugs ausgerüstet und das elektrohydraulische Bremsaggregat EHB wird für Redundanzzwecke für ABS und Giermomentregelung für Stabilitätseingriffe und Lenkungseingriffe eingesetzt. ABS wird über die Traktionsmotoren bei Low-mue geregelt und durch EHB unterstützt, während bei high-µ ABS über die EHB geregelt wird und durch Traktionsmotoren unterstützt wird. Die Antischlupfregelung erfolgt ausschließlich über die Traktionsmotoren TM1 und TM2. Sinnvollerweise wird ein derartige Achse mit einer kostengünstigen Trommelbremse ausgestattet.

Mit Bezug zu **Figur 11d** wird eine weitere Ausführungsform erläutert, bei der ein Traktionsmotor TM1 kombiniert wird mit einem elektrohydraulischen Bremsaggregat EHB. Die Variante ist vergleichbar mit dem in Figur 11a gezeigten Ausführungsbeispiel mit dem Unterschied, dass das elektromotorische Bremsaggregat EMB durch ein elektrohydraulisches Bremsaggregat EHB in seiner Funktion ersetzt wird.

In **Figur 12** sind die maximalen Bremsmomentgradienten in Abhängigkeit von der Fahrzeugverzögerung anhand beispielhafter Auslegungen der typischen Bremsaggegate 1-Box (Kurve 1210), ESP-Standard mit Speicherkammer (Kurve 1220), elektrischer Tranktionsmotor (Kurve 1240), elektrischer Traktionsmotor mit RSP-4Q-Inverter (Kurve1250) sowie Drucksteller mit PPC-2Gen-V1 oder V2 Druckregelung (Kurve 1260) mit Auslegung für hohe Bremsmomentgradienten, vorzugsweise mit zuziehfesten MV₂ₖ-Ventil, für eine beispielhafte Maximalgeschwindigkeit von 200 km/h dargestellt.

Zudem ist die entsprechende Kurve für "MUX 2.0" gezeigt (Kurve 1230), wobei unter MUX 2.0 die Multiplexverfahren der 2. Generation zusammengefasst sind, wie etwa die Druckregelungen PPC-Gen2-V1 und PPC-Gen1-V2, die in der vorliegenden Beschreibung beschreiben ist (siehe Beschreibung mit Bezug zu den Figuren 9a und 9b). Bei diesen Systemen werden insbesondere zuziehfeste Ventile eingesetzt und es wird zwischen unterschiedlichen Ventilanschlüssen und Druckregelungsverfahren differenziert. Bei PPC-Gen2-V1 wird der Ventilsitz an die Radbremse angeschlossen, bei PPC-Gen2-V2 wird der Ventilsitz an die Druckversorgungseinheit angeschlossen. Bei beiden Verfahren erfolgt eine bidirektionale Durchströmung der Ventile und es wird in einer Druckänderungsrichtung über eine Volumenregelung der Druck geändert; in eine andere Druckänderungsrichtung wird mittels
Öffnungsquerschnittregelung der Ventile optional gedrosselt der Druck oder nur über Zeitsteuerung der Ventil verändert. Diese Multiplexverfahren der zweiten Generation unterscheiden sich von Multiplexverfahren der ersten Generation (MUX 1.0) dadurch, dass beim MUX 1.0.-Verfahren in beide Druckänderungsrichtungen der Druck auschließlich über Volumensteuerung/Volumenregelung geändert wird. Zusätzlich wird ein Druckabbau über zumindest ein Auslassventil an einer Radbremse realisiert. Dies führt in Summe zu höheren Druckänderungsgradienten als bei der Verwendung von 1-Box und ESP.

Zudem werden drei Bereiche I-III definiert:
Im Bereich I kleinerer Verzögerungen können das elektromotorische Bremsaggregat EMB und elektrische Traktionsmotoren prinzipbedingt besonders hohe Bremsmomentgradienten erreichen. Ein Standard-ESP-System mit Speicherkammer hat die geringsten Gradienten, da in der Speicherkammer ein Gegendruck wirkt, während 1-Box-Bremssysteme den Druck in den Vorratsbehälter abbauen und daher Vorteile haben. Im Bereich I, der typischerweise zum Beispiel für die ABS-Regelung auf Schnee und Eis oder eine Verzögerung in einem normalen ACC-Bremsbetrieb relevant ist, werden für die Bremsmomentregelung daher vorzugsweise elektromotorische Bremsaggregate EMB oder Traktionsmotoren eingesetzt.

Im Bereich III wiederum, bei großen Verzögerungen, haben elektrohydraulische Systeme (Drucksteller mit vorzugsweise PPC-Gen2-Regelung, 1-Box) die größen Vorteile und übernehmen vorzugsweise die ABS-Regelung.

Im dazwischen liegenden Bereich II können mit allen genannten Bremsaggregaten ausreichende Bremsmomentgradienten erreicht werden. Vorzugsweise unterstützt dann ein erster Bremsmomentsteller mit einem geringen Bremsmomentgradienten die ABS-Regelung mit einem konstanten Bremsmoment, während die ABS-Regelung durch einen dyamischeren Drucksteller übernommen wird.

Linearisiert man die additiven Bremsmomente über den gesamten Verzögerungsbereich durch Addition der Bremsmomentgradienten von jeweils zwei Bremsmomentstellern, so kann über den gesamten Verzögungsbereich ein hoher Bremsmomentgradient gewährleistet werden. Idealerweise wird die bevorzugte Charakteristik sinnvoll zum Downsizing der Bremsaggegate genutzt: So können für EMB und EHB Motoren mit geringen Antriebsmomenten und Leistungen verwendet werden und/oder es können kleinere Regelventile eingesetzt werden. Insbesondere ist in einem solchen Fall ein kostengünstiger EHB-Drucksteller mit einer Trapezspindel realisierbar, was wegen der Spindelbelastung durch höhere Drücke nur für niedrigere Druckbereiche geeignet ist.

Wird ein Drucksteller mit einer MUX-Regelung sequentiell betrieben, so können Totzeiten in den Regelzyklen durch Bremsmomenteingriffe anderer Aggregate reduziert werden, sodass auch eine MUX-Regelung wieder an Relevanz gewinnt, die aufgrund der Nachteile in Extremsituationen (etwa bei high-µ) an Bedeutung verloren hat. Dies hat den besonderen Vorteil, dass ein Bremssystem dann komplett geschlossen ist und die Regelung über mathematische Modelle abgebildet werden kann. Es sind dann keine aufwändigen Druckschätzmodelle und Applikationsarbeiten wie für die Kalibrierung von offenen ABS-Systemen notwendig. So ist auch eine automatisierte Applikation möglich.

Mit Bezug zu **Figur 12a** wird beispielhaft beschrieben, wie die Soll-Bremsmomente für die Radbremsen der Vorderachse des Fahrzeugs von den Steuereinheiten erhalten werden. Ein bei dem zentralen Steuereinheit M-ECU_{Chassis control} implementiertes Fahrzeugmodell umfasst beispielsweise Modellierungsdaten zur Gewichtsverteilung, einem Reibwert der Fahrbahnoberfläche, einem Reifenzustand und einer Bremsdruckwirkung auf die Verzögerung des Fahrzeugs. Es werden insbesondere die folgenden Werte an ein Steuergerät M- ECU_{VA} der Vorderachse übergeben: Sollwerte für das Soll-Bremsoment des rechten M_{soll,VR} und linken Vorderrades M_{soll,VL}, eine Geschwindigkeit des Fahrzeugs v_{Fzg}, eine Geschwindigkeit des rechten v_{VR} und linken v_{VL} Vorderrads, ein Differenz-Moment des rechten ΔM_{soll,VR} und linken Vorderrads ΔM_{soll,VL} sowie ein Reibwert der Fahrbahn.

Bei dem Steuergerät M- ECU_{VA} der Vorderachse sind insbesondere ein M-n-Kennfeld des Traktionsmotors TM hinterlegt, welches eine Abhängigkeit der durch den Traktionsmotor erreichten Verzögerung von der Geschwindigkeit des Fahrzeugs oder der Drehzahl des Traktionsmotors angibt, sowie ein weiteres Kennfeld, das den Zusammenhang zwischen dem erreichbaren Bremsmomentgradienten und einer Verzögerung des Fahrzeugs für die zur Verfügung stehenden Bremsaggregate beziehungsweise den Traktionsmotor angibt.

Anhand dieser Daten bestimmt das Steuergerät M- ECU_{VA} Soll-Momente für einen ersten M_{soll,TM1} und zweiten Traktionsmotor M_{soll,TM2} der Vorderachse, Soll-Momente für elektromechanische Bremsaggregate des ersten M_{soll,EMB,R1} und zweiten Rades M_{soll,EMB,R2} sowie Soll-Momente für elektrohydraulische Bremsaggregate für das erste M_{soll,EHB,R1} und zweite Rad M_{soll,EHB,R2}. Dabei wird das Vorgehen daran angepasst, welche Bremsaggregate tatsächlich zur Verfügung stehen.

Aus diesen Werten resultiert dann ein Soll-Bremsmoment des rechten M_{soll,Brems,VR} und linken Vorderrads M_{soll,Brems,VL}.

Das gleiche Vorgehen kann analog für die Hinterachse beziehungsweise für alle Räder des Fahrzeugs durchgeführt werden.

Mit Bezug zu **Figur 13** wird eine vorteilhafte "Architektur III" des Fahrdynamiksystems für Radmodule erläutert, wobei an jedem Rad jeweils zwei Bremsaggregate wirken. Als Bremsaggregate können etwa Traktionsmotoren TM1, TM2, TM3,TM4 und elektromotorische Bremsaggregate EMB-Module EMB1, EMB2, EMB3, EMB4 für Radbremsen verwendet werden.

Die zentrale Steuereinheit übernimmt die Regelung der Bremsmomente und sendet Sollsignale an die Steuergeräte S-ECU_{Rad1}, S-ECU_{Rad2,} S-ECU_{Rad3}, S-ECU_{Rad4} der einzelnen Räder beziehungsweise Achsen.

Damit werden analog zu Architektur I und II vorzugsweise folgende Funktionen realisiert:
- (A) Basisbremse mit Thermomanagment und Energieflussmanagment des Traktionsmotors;
- (B) Notbremse AEB mit elektronischer Bremskraftverteilung (EBV);
- (C) Regeneratives Bremsen an mehreren Achsen;
- (D) ABS-Regelung mit Basisbremsmomentunterstützung und/oder gemeinsamer Bremsmomentregelung;
- (E) Bremsbetrieb bei Ausfall eines elektromotorischen Bremsaggregats EHB-Z, EHB-VA;
- (F) Giermomenteingriffe bzw. radindividuelle Bremsmomenteingriffe;
   und/oder
- (G) radindivduelle Bremsmomenteingriffe für radindividuelles regeneratives Bremsen.

Bei der Umsetzung der Funktionen wird entsprechend von Kennfeldern, insbesondere der Bremsmomentgradienten, wie in Figur 12 gezeigt, entsprechend der Verzögerung des Fahrzeuges das Bremsmoment aufgeteilt auf den elektrischen Traktionsmotor und die EMB, wobei im Unterschied zu den anderen Architekturen die Bremsmomentmodulation bevorzugt in allen Fahrzuständen durch die elektromotorischen Bremsaggregate EMB durchgeführt wird und über den elektrischen Traktionsmotor des jeweiligen Rades lediglich ein Grundbremsmoment bereitgestellt wird, was insbesondere zum Downsizing der elektromotorischen Bremsaggregate EMB genutzt wird. Dies wird vorzugsweise bei Erwämung der Radbremse verstärkt ausgenutzt. Bei Ausfall eines Bremsaggregates wird der Regelbetrieb dann durch das jeweils andere Bremsaggregat übernommen, gegebenenfalls mit Einschränkungen der maximal erreichbaren Verzögerung, jedoch mit vollredundanten Regelfunktionen an allen Rädern.

Mit Bezug zu **Figur 13a** wird ein Ausführungsbeispiel dieser Architektur erläutert. In einem Radmodul wird eine elektromechanische Bremse EMB (EMB1-EMB4) mit einem elektrischen Traktionsmotor (TM1-TM4) kombiniert, sodass jeweils ein Radmodul eine Baugruppe bildet und jeweils über ein Radmodulsteuergerät (M-ECU-Rad1 - M-ECU-Rad4) angesteuert wird. Das jeweilige Radmodulsteuergerät synchronisiert dabei die Drehmomentregelung des elektrischen Traktionsmotors zeitlich und teilt je nach Fahrsituation, etwa Reibwert oder Geschwindigkeit, das Bremsmoment unterschiedlich auf EMB und Traktionsmotor TM auf.

Vorzugsweise haben der Traktionsmotor und die EMB jeweils ein weiteres Steuergerät (ECU-EMB, ECU-TM), das inbesondere die Endstufen des Umrichters und die Motorregelung enthält und mit einer schnelleren Taktzeit arbeitet, während im Radmodulsteuergerät M-ECU-Rad vorzugsweise die Entscheidungsheuristik sowie Kennfelder abgebildet sind.

Die Darmodulsteuergeräte (M-ECU-Rad1 bis M-ECU-Rad4) kommunizierten zudem mit der zentralen Steuereinheit (M-ECU-Domäne), wo insbesondere Raddrehzahlen v_{R1}-v_{R4} und insbesondere weitere Sensorsignale S1, S2, Si, eingelesen werden.

Es ist denkbar, dass auch die Radmodulsteuergeräte (ECU-Rad1 bis M-ECU-Rad4) Raddrehzahlen v_{R1}-v_{R4} sowie Sensorsignale S1, S2, Si erfassen. Sie können ferner Funktionen der zentralen Steuereinheit (M-ECU-Domäne) redundant ausführen.

Damit kann jeweils wahlweise durch die EMB-Module oder den Traktionsmotor eine radindividuelle Regelung erfolgen. Dies ermöglicht maximale Freiheitsgrade in der Druckregelung, aber auch Redundanzen in der radindividuellen Druckregelung, wie beispielsweise für SAE Level 4-5 gefordert. Insbesondere kann eine ABS-Regelfunktion redundant und zudem mit zwei unterschiedlichen Bauformen der Bremsmomentsteller realisiert werden, was in Hinblick auf Erfüllung der Redundanzanforderungen besonders vorteilhaft ist. So kann bei Ausfall eines Radmodules immer noch mit drei Radmodulen eine sehr sicherere und zuverlässsige Regelung mit kurzen Bremswegen und Giermomentregelungsmöglichkeiten realisiert werden. Fällt innerhalb eines Radmodules entweder das elektromotorische Bremsaggregat EMB oder der Traktionsmotor aus, so übernimmt die jeweils andere, nicht ausgefallene Komponente die Regelung des Bremsvorgangs.

Dabei gibt es verschiedene Varianten der Auslegung
a) Das elektromotorische Bremsaggregat EMB ist ausgelegt für die Erreichung des Blockierdrucks, sodass bei Ausfall des Traktionsmotors noch mit maximaler Verzögerung über das elektromotorische Bremsaggregat EMB gebremst werden kann; es wird jedoch auf die großzügige Reserve für Fading (typischerweise 100%) verzichtet, das heißt, das elektromotorische Bremsaggregat EMB hat nur eine geringe Reserve zusätzlich zum maximalen Bremsmoment ohne Erwärumung, beispielsweise 20-40%.
b) Das elektromotorische Bremsaggregat EMB und der elektrische Traktionsmotor TM sind so ausgelegt, dass die maximale Verzögerung in Kombination der Bremsmomente von EMB und TM erreicht wird und die Reibbremse entsprechend des maximalen Bremsmomentes des elektromechanischen Bremsaggregats EMB ausgelegt wird. Zudem sind, wie oben hinsichtlich der "Architektur I" ausgeführt, geeignete Vorkehrungen und Regelstrategien erforderlich, damit die Bremsung über das regenerative Bremsmoment des Traktionsmotors nicht zu einer Schädigung der Batterie führt, insbesondere bei vollem Ladezustand. Zu nennen sind hier die Strategieren (1) Rückspeisen in Batterie bis zur Grenze der Leistungsaufnahme, (2) feldorientierte Regelung (Id/Iq-Stromregelung) des Elektromotors derart, dass die Energie im Motor intern vernichtet wird, (3) anderweitiges Vernichten der durch den elektrischen Traktionsmotor im generatorischen Betrieb gewonnenen Energie oder (4) Verwendung eines elektrischen Zwischenspeichers, der für Impulsleistung ausgelegt ist, beispielsweise ein Super-Cap.

Variante b) ist die bevorzugte Auslegung, weil hier das größte Potential zur Kostensenkung und Gewichtsreduzierung liegt. In einem ersten Einführungszenario der Technologie kann jedoch Variante a) im Sinne der Risikominimierung sinnvoll sein.

Die beiden genannten Varianten a) und b) bieten eine ausreichende Sicherheit für SAE Level 5, weil sowohl beim Ausfall einer Komponente des Radmoduls, als auch bei einem Ausfall des gesamten Radmoduls das Fahrzeug noch mit hoher Fahrzeugstabiität und sogar ABS-Betrieb verzögert werden kann. Es kommt lediglich zu Einbußen beim Bremsweg bei hohen Geschwindigkeiten und Verzögerungen.

Die vorliegend beschriebenen Systeme, insbesondere das Fahrdynamiksystem, das Fahrzeug und das Verfahren, ermöglicht große Kosteneinsprungen bei den Kernkomponenten Brems und Lenkung des Fahrzeugs. Zudem können erhebliche Einsprungen beim Gewicht erreicht werden, was wiederum zu weiteren Kosteneinsparungen führt.

Indem das Potential der regenerativen Bremsung mittels des elektrischen Traktionsmotors oder der elektrischen Traktionsmotoren optimal ausgeschöpft wird, können dissipative Bremssysteme kleiner dimensioniert werden, da sie nur noch einen geringeren Teil des gesamten Bremsmoments aufbringen müssen. Das Problem des Fading bei der übermäßigen Erwärmung der Reibbremse kann somit ebenfalls verringert werden.

### A: AD Level 2

Wird beispielsweise, wie oben für die FDS-Variante A1 beschrieben, die Basisbremsfunktion (Funktion a) mit Fahrdynamiksystem und zentraler Regelung sowie einer Verblendungsstrategie nach Figur 3 optimiert, das heißt, es wird beispielsweise zu 51% über den Traktionsmotor an der Vorderachse und zu 71% an Hinterachse regenerativ gebremst, dann kann die Erwärmung der Radbremse minimiert werden.

Dies hat zweierlei positive Auswirkungen auf die Kosten: Zum einem kann die Bremsanlage auf einen kleineren Druck ausgelegt werden, was die Kosten des elektrohydraulischen Bremsaggregats EHB reduziert, zum anderen kann die Fundamentbremse erheblich schwächer dimensioniert werden. Dies kann beispielsweise durch kleinere Bremsscheiben, kleinere Bremsbacken und auch kostengünstigere Materialien umgesetzt werden. So kann auch eine kostengünstige Trommelbremse sowohl an der Vorderachse als auch an der Hinterachse eingesetzt werden.

Bei einer FDS-Variante A2 kann etwa, um das elektrohydraulische Bremssystem gemäß Figur 6b zu vereinfachen, der Traktionsmotor an der Hinterachse so ausgestaltet werden, dass radindividuell ein Drehmoment erzeugt werden kann, entweder durch einen Traktionsmotor mit einem Torque-Vektoring-Modul oder vorzugsweise durch Aufteilung der Leistung eines 130 kW-Motors in zwei elektrische Traktionsmotoren TM1, TM2 mit jeweils 65 kW. Letztere Ausführungsform mit zwei Motoren ist vorteilhaft, weil dynamische Bremsmomente an beiden Rädern unabhängig voneinander variiert werden können.

Wird zudem, wie oben erläutert, über das Fahrdynamiksystem synchron ein Bremsmoment über den elektrischen Traktionsmotor und das elektrohydraulische Bremsmodul EHB geregelt, wobei insbesondere ein Bremsaggregat ein Grundbremsmoment bereitstellt, während das zweite Bremsaggregat ein zusätzliches geregeltes Bremsmoment bereitstellt (Regelstrategie gemäß Figur 5), so können die Kosten und das Gewicht des Systems weiter signifikant reduziert werden.

Zum einen können die Kosten für das elektrohydraulische Bremsaggregat EHB, insbesondere gemäß Ausführungsform der Figur 6a, durch weniger und kostengünstigere Ventile und nochmals niedrigere Maximaldrücke und Volumen reduziert werden. So kann statt eines Kugel-Gewindetriebs auch eine kostengünstige Trapezspindel eingesetzt werden. Ferner ist es möglich, eine Trommelbremse sowohl an der Vorderachse als auch an der Hinterachse zu verwenden.

Bei einer FDS-Variante A3 kann etwa, in einem dritten Optimierungsschritt, an der Hinterachse nur ein Twin-Traktionsantrieb (TM1, TM2) mit beispielsweise 230 kW Leistung eingesetzt werden. Wird zudem der hier beschrieben RSP-4Q-Inverter gemäß Figur 7b eingesetzt, so kann der Betriebsbereich des regenerativen Bremsens gemäß Motorkennfeld in Figur 7a nochmals signifikant erweitert werden.

Damit kann an der Hinterachse für den gesamten Fahrzeuggeschwindigkeitsbereich bis zur Maximalgeschwindigkeit ausschließlich über den elektrischen Traktionsmotor verzögert werden. Wird zudem die vorliegend beschriebene Regelfunktion über die elektrischen Traktionsmotoren TM1 und TM2 durchgeführt, so kann an der Hinterachse vollständig auf die Fundamentbremse verzichtet werden.

Ergänzend dazu sind dann keine hydraulischen Leitungen zur Hinterachse und auch kein Regelventil erforderlich, sodass das elektrohydraulische Bremsaggregat EHB ausschließlich auf die Vorderachse des Fahrzeugs ausgelegt werden muss (siehe Figur 6c). Dabei kann ebenfalls ein kostengünstiges Trapezgewinde verwendet werden.

### B: AD Stufe 3-4

Wird bei einer Variante B1 des Fahrdynamiksystems mit einem 2-Box-System (beispielweise X-Boost3 und ESP) ein elektrohydraulisches Bremssystem wie in Figur 8 eingesetzt und wie beschrieben in das Fahrdynamiksystem integriert, so können sowohl die Redundanzanforderungen von SAE Level 4 erfüllt werden, als auch das elektrohydraulische Bremsaggregat EHB durch Downsizing kostengünstiger ausgeführt werden.

Ferner kann die Reibbremse durch Bremsunterstützung über elektrische Traktionsmotoren bereits in der Basisbremsfunktion (a) hinsichtlich der Kosten und des Gewichts reduziert werden. Durch den Einsatz insbesondere einer kostengünstigen Scheibenbremse an der Vorderachse und einer Trommelbremse an der Hinterachse können die Kosten noch weiter reduziert werden.

Wird bei einer Variante B2 des Fahrdynamiksystems mit zentraler EHB-Z ein elektrohydraulisches Bremssystem gemäß Figur 6a eingesetzt sowie entsprechend der hier beschriebenen Regelung des Fahrdynamiksystems bei Basisbremse und Regelfunktion die Traktionsmotoren an beiden Achsen zur Unterstützung eingesetzt, dann kann mit den zusätzlich oben beschriebenen Redundanzfunktionen, wie oben mit Bezug zu Figur 6a beschrieben, und mit einer redundanten Ausführung der Druckversorgungseinrichtung ein Funktionsredundanzniveau für AD Level 3-4 erreicht werden. Hier wird zudem davon ausgegangen, dass das hydraulische Bremssystem 4-kreisig ausgeführt ist und bei Ausfall noch 3-kreisig betrieben werden kann.

### C: AD Stufe 5

Für eine Variante C1 des Fahrdynamiksystems mit einem elektromechanischen Bremsaggregat EMB wird die oben erläuterte dritte Ausführungsform zugrunde gelegt, wo für jedes Radmodul eine Steuer-ECU (S-ECU_{Rad1,} S-ECU_{Rad2,} S-ECU_{Rad3,} S-ECU_{Rad4}) vorgesehen ist, die gemeinsam ein Drehmoment des Antriebsmotors und die EMB regelt. Damit sind sowohl bei der Basisbremsfunktion als auch im Regelbetrieb durch gleichzeitige Bremsmomentregelung über das Fahrdynamiksystem diverse Kosten- und Gewichtsreduzierungen möglich.

In einem ersten Schritt kann die EMB deutlich downgesized werden, da geringere Maximaldrehmomente notwendig sind.

Im Vergleich zu einer 2-Box-Lösung ist die hier beschriebene EMB zudem deutlich einfacher zu applizieren und in eine zentrale Steuerung des Fahrdynamiksystems zu integrieren. Ein weiterer Vorteil ist die Unabhängigkeit von einem Bremsenhersteller.

Wird die EMB in Radmodulen gemäß der "Architektur III" des Fahrdynamiksystems eingesetzt, kann ferner optional die elektrische Servolenkung EPS entfallen, weil durch unterschiedliche Motordrehzahlen über die Radmotoren gelenkt werden kann. Auch bei einer FDS-Variante C2 mit EHB-Achsmodulen mit Kolben-Zylinder-Einheit kann die EHB deutlich downgesized werden, da geringere Maximaldrehmomente erreichbar sein müssen. Durch das gemeinsame Bremsen mittels Traktionsmotor und EHB kann die Reibbremse ebenfalls deutlich leichter und kostengünstiger ausgeführt werden. Zwei Drucksteller erreichen damit ein geringeres Kostenniveau und bieten zudem die erforderlichen Redundanzen für SAE Level 5.

Durch den Einsatz einer Trommelbremse wird eine weitere Kostenreduzierung möglich.

Wird im Unterschied zur oben genannten Optimierung 2 eine Variante C3 für die EHB der Hinterachse mit einer einfachen Pumpe (2-Kolbenpumpe, Zahnradpumpe) eingesetzt, kann zwar mit der Pumpe im Allgemeinen nicht die gleiche Regelgüte wie mit einer Kolben-Zylinder-Einheit erreicht werden; dies ist allerdings an der Hinterachse weniger kritisch. Zudem kann mit der Pumpe nur das Grundmoment erzeugt werden, während mit den Traktionsmotor(en) an der Hinterachse das geregelte zusätzliche Bremsmoment erzeugt wird.

Auch hier ermöglicht der Einsatz einer Trommelbremse an der Hinterachse eine weitere Kostenreduzierung.

Bei einer Variante C4 mit zentraler EHB-Z wurde bereits die Eignung für AD Level 3-4 untersucht und sogar die Tauglichkeit für AD Level 5 beschrieben. Es kann daher eine Betätigungseinheit wegfallen.

Der Einsatz einer Trommelbremse an der Hinterachse ermöglicht zusätzliche Kostenreduzierung und Gewichtsreduzierung Vergleich zu einem elektromechanischen Bremsaggregat EMB.

Zusammenfassend wird festgestellt, dass die hier beschriebenen Varianten C2-C4 ein Kostenniveau einer SAE Level 2-Lösung erreichen, jedoch alle
Redundanzanforderungen für SAE Stufe 5 erfüllen. Sie können daher als zielführende Lösungen für autonomes Fahren der höchsten Ausbaustufe eingestuft werden.

Gegenüber den EMB-Varianten haben die Lösungen den großen Vorteil, dass Komponenten, die in großer Stückzahl gefertigt werden, etwa die hydraulische Druckversorgung oder Magnetventile, bereits zur Verfügung stehen und somit auch eine schnelle Serieneinführung ohne hohe Kapitalkosten möglich ist.

### Ergänzend wird ein weiteres Beispiel beschrieben:

Bei dem weiteren Beispiel umfasst ein Fahrdynamiksystem (FDS) oder E-Fahrzeug mit einer zentralen Steuerung mit einem Fahrdynamiksystem (FDS) mit einer der FDS-Architekturen I, II oder III
- mind. 1 Radbremse (RB1-RB4),
- mind. 1 elektrischen Traktionsmotor (TM1, TM2, TM3, TM4), der sowohl zum Antrieb als auch Abbremsen einer Achse oder eines Rades verwendet wird,
- mind. 1 Bremsvorrichtung (EMB, EHB), die zur Erzeugung von Bremsmoment(en) an einem oder mehreren Radbremsen verwendet wird,
- einen Zentralrechner (M-ECU_{Domäne}), mittels dessen sowohl der mind. 1 elektrischer Traktionsmotor (TM1-TM4) als auch mind. eine Bremsvorrichtung (EHB, EMB) bei Bremsvorgängen gemeinsam angesteuert über ein Steuergerät (M-ECU_{Domäne}, S-ECU_{Achse}, S-ECU_{Rad}) und Sollsignale an Steuergeräte von Traktionsmotor(en) (TM1-TM4) und Bremsvorrichtung (EHB, EMB) zur Ausführung sendet,
- einen Zentralrechner mit mindestens einer der Kernfunktionen ABS, ESP, EBV, ASR, ACC, AEB, Reku-Management mit regenerativen Bremsen über elektrische Traktionsmotoren an mehreren Achsen und/oder mindestens einer der Kernfunktionen (A)-(G) über den Zentralrechner geregelt oder gesteuert wird, wobei
- bei Normalbremse eine Bremsung mit dem elektrischen Traktionsmotor (TM1 - TM4) auch bei hohen Geschwindigkeiten (>80 km/h) des Fahrzeuges erfolgt und beim Bremsen über elektrischen Traktionsmotor (TM1-TM4) gleichzeitig ein EBV-Funktion (EBV =elektronische Bremskraftverteilung an Vorderachse und Hinterachse) realisiert wird,
   und/oder
- im Regelbetrieb (z. B. ABS, ESP) ein Bremsmoment mit mindestens einem Traktionsmotor (TM1-TM4) und gleichzeitig mindestens einer EHB oder EMB erzeugt wird und einem Bremsaggregat (EMB, EHB) und/oder elektrischen Traktionsmotor (TM1-TM4) eine Bremsmomentregelung durchgeführt an mindestens 3 Rädern eines Fahrzeuges, derart dass in jedem Fahrzeugstand ein Bremsmoment an drei Rädern eines Fahrzeuges geregelt werden kann.

### Nachfolgend werden weitere Beispiele beschrieben:

Beispiel 1: Fahrdynamiksystem für ein Fahrzeug, umfassend
- zumindest eine Radbremse (RB1, RB2. RB3, RB4) zum dissipativen Abbremsen eines Rades des Fahrzeugs;
- zumindest ein Bremsaggregat (EMB, EHB), das der zumindest einen Radbremse (RB1, RB2, RB3, RB4) zugeordnet und dazu eingerichtet ist, mittels der zumindest einen Radbremse (RB1, RB2, RB3, RB4) ein dissipatives Bremsmoment zu erzeugen;
- zumindest einen elektrischen Traktionsmotor (TM1, TM2, TM3, TM4), der dazu ansteuerbar ist, ein regeneratives Bremsmoment für zumindest ein Rad oder eine Achse des Fahrzeugs zu erzeugen; und
- eine zentrale Steuereinheit (M-ECU_{Domäne}), die dazu eingerichtet ist, das zumindest eine Bremsaggregat (EMB, EHB) und den zumindest einen elektrischen Traktionsmotor (TM1, TM2, TM3, TM4) für eine Bremsfunktion in Kombination miteinander so anzusteuern, dass ein kombiniertes Bremsmoment mittels des zumindest einen Bremsaggregats (EMB, EHB) und des zumindest einen elektrischen Traktionsmotors (TM1, TM2, TM3, TM4) erzeugbar ist; wobei
- die Bremsfunktion einen Regelfall betrifft, bei dem gleichzeitig ein Basisbremsmoment und ein geregeltes zusätzliches Bremsmoment gesteuert und/oder geregelt wird; wobei
- optional das Basisbremsmoment durch das zumindest eine Bremsaggregat (EMB, EHB) erzeugt wird und das geregelte zusätzliche Bremsmoment durch den zumindest einen elektrischen Traktionsmotor (TM1, TM2, TM3, TM4) erzeugt wird;
   oder
- das Basisbremsmoment durch den zumindest einen elektrischen Traktionsmotor (TM1, TM2, TM3, TM4) und das geregelte zusätzliche Bremsmoment durch das zumindest eine Bremsaggregat (EMB, EHB) erzeugt wird;
   oder
- das zumindest eine Bremsaggregat (EMB, EHB) und der zumindest eine elektrische Traktionsmotor (TM1, TM2, TM3, TM4) jeweils gemeinsam das Basisbremsmoment und das geregelte zusätzliche Bremsmoment erzeugen.

Beispiel 2: Fahrdynamiksystem gemäß Beispiel 1, wobei
die Bremsfunktion ausgewählt ist aus einer der folgenden Funktionen:
- automatische Notbremse (Automated Emergency Brake, AEB), insbesondere mit einer EBV-Regelung, insbesondere mit einer EBV-Regelung an einer Hinterachse und einer Vorderachse des Fahrzeugs, wobei ein Gesamtbremsmoment auf die Hinterachse und die Vorderachse verteilt wird;
- Antiblockiersystem (ABS), insbesondere mit einer Basisbremsmomentunterstützung über den zumindest einen Traktionsmotor (TM1, TM2, TM3, TM4);
- elektronisches Stabilitätsprogramm (ESP);
- elektronische Bremskraftverteilung (EBV);
- Antischlupfregelung (ASR);
- Abstandsregelung (Automated Cruise Control, ACC);
- Rekuperations-Management, insbesondere für achs- oder radindividuelle Rekuperation;
- Basisbremse mit Thermomanagement;
- Giermomentreglung bei Ausfall einer Radbremse (RB1, RB2, RB3, RB4);
   und/oder
- Giermomenteingriffsteuerung für Lenkungsunterstützung.

Beispiel 3: Fahrdynamiksystem gemäß einem der vorhergehenden Beispiele, wobei das Bremsaggregat (EMB, EHB) einen elektromotorischen Antrieb (M) umfasst und als elektrohydraulisches Bremsaggregat (EHB) oder als elektromechanisches Bremsaggregat (EMB) ausgebildet ist.

Beispiel 4: Fahrdynamiksystem gemäß einem der vorhergehenden Beispiele, wobei das Bremsaggregat (EHB) als elektrohydraulische Bremsaggregat (EHB) mit einer elektromotorisch betriebenen Druckversorgungseinheit ausgebildet ist;
wobei zwischen der Druckversorgungseinheit und zumindest einer Radbremse (RB1, RB2, RB3, RB4) oder mehreren Radbremen (RB1, RB2, RB3, RB4) einer Achse (HA, VA) eine Ventileinrichtung vorgesehen ist;
wobei die Ventileinrichtung ein zuziehfestes Radventil (MV_{2k,1}, MK_{2k,2}, MV_{2k,3}, MV_{2k,4}) und/oder ein Kreistrennventil (MV_{2k,TV}) umfasst,
wobei bei einer Leckage zumindest einer Radbremse (RB1, RB2, RB3, RB4) die Ventileinrichtung dazu eingerichtet ist, die betroffene Radbremse (RB1, RB2, RB3, RB4) durch Schließen abzutrennen, und die zentrale Steuereinheit (M-ECU_{Domäne}) dazu eingerichtet ist, das zumindest eine Bremsaggregat (EMB, EHB) und/oder den zumindest einen elektrischen Traktionsmotor (TM1, TM2, TM3, TM4) so anzusteuern, dass eine Bremsmomentregelung an den weiteren Rädern des Fahrzeugs, insbesondere an zumindest drei Rädern, erfolgt; wobei
   - insbesondere mittels der Ventileinrichtung die Radbremsen (RB1, RB2) einer Achse (VA) des Fahrzeugs abtrennbar sind, insbesondere die Radbremsen (RB1, RB2) der Vorderachse (VA)

Beispiel 5: Fahrdynamiksystem gemäß einem der vorhergehenden Beispiele, wobei
die zentrale Steuereinheit (M-ECU_{Domäne}) mit zumindest einem Bremsaggregat-Steuergerät (S-ECU_{Achse}, S-ECU_{Rad}) des Bremsaggregats (EMB, EHB) gekoppelt ist.

Beispiel 6: Fahrdynamiksystem gemäß einem der vorhergehenden Beispiele, wobei die zentrale Steuereinheit (M-ECU_{Domäne}) dazu eingerichtet ist, bei der Bremsfunktion Sollsignale an ein Motor-Steuergerät (ECU-TM1, ECU-TM2, ECU-TM3, ECU-TM4) des zumindest einen Traktionsmotors (TM1, TM2, TM3, TM4) und an ein Bremsaggregat-Steuergerät (S-ECU_{Achse}, S-ECU_{Rad}) des zumindest einen Bremsaggregats (EHB, EMB) zu übertragen.

Beispiel 7: Fahrdynamiksystem gemäß einem der vorhergehenden Beispiele, wobei die zentrale Steuereinheit (M-ECU_{Domäne}) ferner dazu eingerichtet ist, bei einer Geschwindigkeit des Fahrzeugs von über 80 km/h für eine Bremsung im Normalbetrieb den zumindest einen elektrischen Traktionsmotor (TM1, TM2, TM3, TM4) zum regenerativen Abbremsen des Fahrzeugs anzusteuern; wobei
bei dem regenerativen Abbremsen gleichzeitig eine elektronische Bremskraftverteilung (EBV-Funktion) an einer Vorderachse und einer Hinterachse des Fahrzeugs realisiert wird;
wobei insbesondere 20-40% eines Gesamtbremsmoments an der Hinterachse und 60-80% des Gesamtdrehmoments an der Vorderachse des Fahrzeugs wirken.

Beispiel 8: Fahrdynamiksystem gemäß einem der vorhergehenden Beispiele, wobei
der Radbremse (RB1, RB2, RB3, RB4) eines Rades (R1, R2, R3, R4) des Fahrzeugs ein eigenes Bremsaggregat (EMB1, EMB2, EMB3, EMB4) zugeordnet ist; wobei
- insbesondere das Bremsaggregat (EMB1, EMB2, EMB3, EMB4) elektromechanisch ausgebildet ist; wobei
- insbesondere für jedes der zwei Räder (R1, R2, R3, R4) das der Radbremse (RB1, RB2, RB3, RB4) zugeordnete Bremsaggregat (EMB1, EMB2, EMB3, EMB4) und ein elektrischer Traktionsmotor (TM1, TM2) in ein Radmodul integriert sind.

Beispiel 9: Fahrdynamiksystem gemäß einem der vorhergehenden Beispiele, wobei
den Radbremsen (RB1, RB2, RB3, RB4) zweier Räder (R1, R2, R3, R4) einer Achse (HA, VA) des Fahrzeugs ein gemeinsames Bremsaggregat (EHB1, EHB2) zugeordnet ist; wobei
- insbesondere das Bremsaggregat (EHB1, EHB2) elektrohydraulisch ausgebildet ist; wobei
- insbesondere den zwei Rädern (R1, R2) einer Hinterachse (HA) ein erstes Bremsaggregat (EHB1) und den zwei Rädern (R3, R4) einer Vorderachse (VA) ein zweites Bremsaggregat (EHB2) zugeordnet ist.

Beispiel 10: Fahrdynamiksystem gemäß einem der vorhergehenden Beispiele, wobei
den Radbremsen (RB1, RB2, RB3, RB4) von vier Rädern (R1, R2, R3, R4) des Fahrzeugs ein zentrales Bremsaggregat (EHB-VA) zugeordnet ist; wobei
- insbesondere das zentrale Bremsaggregat (EHB-VA) elektrohydraulisch ausgebildet ist.

Beispiel 11: Fahrdynamiksystem gemäß einem der vorhergehenden Beispiele, wobei
den Radbremsen (RB1, RB2) zweier Räder (R1, R2) einer ersten Achse (VA), insbesondere einer Vorderachse (VA), des Fahrzeugs ein gemeinsames Bremsaggregat (EHB-VA) zugeordnet ist; wobei
- insbesondere das Bremsaggregat (EHB-VA) elektrohydraulisch ausgebildet ist; wobei
- insbesondere bei den Radbremsen (RB1, RB2) der ersten Achse (VA) radindividuelle dissipative Bremsmomente einstellbar sind, insbesondere mittels Magnetventilen in hydraulischen Leitungen zwischen dem Bremsaggregat (EHB-VA) und den Radbremsen (RB1, RB2), wobei
- insbesondere das Bremsaggregat (EHB-VA) ferner über eine hydraulische Leitung mit den Radbremsen (RB1, RB2) zweier Räder (R1, R2, R3, R4) einer zweiten Achse (HA), insbesondere einer Hinterachse (HA), verbindbar ist; wobei
- insbesondere bei den Radbremsen (RB3, RB4) der zweiten Achse (HA) gemeinsame, nicht radindividuelle dissipative Bremsmomente einstellbar sind.

Beispiel 12: Fahrdynamiksystem gemäß einem der vorhergehenden Beispiele, wobei
einem ersten Paar von zwei Rädern (R1, R2) einer ersten Achse (HA), insbesondere einer Hinterachse (HA) des Fahrzeugs, ein erster elektrischer Traktionsmotor (TM1) zugeordnet ist und einem zweiten Paar von Rädern (R3, R4) einer zweiten Achse (VA), insbesondere einer Vorderachse (VA) des Fahrzeugs, ein zweiter elektrischer Traktionsmotor (TM3) zugeordnet ist.

Beispiel 13: Fahrdynamiksystem gemäß einem der vorhergehenden Beispiele, wobei
einem ersten (R1) und einem zweiten Rad (R2) einer ersten Achse (HA), insbesondere einer Hinterachse (HA) des Fahrzeugs, jeweils ein eigener elektrischer Traktionsmotor (TM1, TM2) zugeordnet ist.

Beispiel 14: Fahrdynamiksystem gemäß Beispiel 14, wobei
dem ersten (R1) und dem zweiten Rad (R2) ferner ein jeweils eigenes Bremsaggregat (EMB1, EMB2) zugeordnet ist; wobei insbesondere die jeweils eigenen Bremsaggregate (EMB1, EMB2) elektromechanisch ausgebildet sind; wobei
- insbesondere für das erste (R1) und zweite Rad (R2) der jeweils zugeordnete elektrische Traktionsmotor (TM1, TM2) und das jeweils zugeordnete Bremsaggregat (EMB1, EMB2) in jeweils ein dem ersten (R1) oder zweiten Rad (R2) zugeordnetes Radmodul integriert sind.

Beispiel 15: Fahrdynamiksystem gemäß Beispiel 14 oder 15, wobei
ferner einem dritten (R3) und einem vierten Rad (R4) einer zweiten Achse (VA), insbesondere einer Vorderachse (VA) des Fahrzeugs, ein dritter elektrischer Traktionsmotor (TM3) gemeinsam zugeordnet ist; wobei
- insbesondere dem dritten (R3) und vierten Rad (R4) ein gemeinsames Bremsaggregat (EHB2) zugeordnet ist; wobei insbesondere das gemeinsame Bremsaggregat (EHB2) elektrohydraulisch ausgebildet ist; wobei insbesondere der dritte elektrische Traktionsmotor (TM3) und das gemeinsame Bremsaggregat (EHB2) in ein der zweiten Achse (VA) zugeordnetes Achsmodul integriert sind; oder wobei
- insbesondere ein zentrales Bremsmodul (EHB-Z) vorgesehen ist, das insbesondere elektrohydraulisch ausgebildet ist, wobei mittels des zentralen Bremsmoduls (EHB-Z) für das erste (R1) und zweite Rad (R2) radindividuelle Bremsmomente erzeugbar sind und für das dritte (R3) und vierte Rad (R4) ein gemeinsames Bremsmoment erzeugbar ist.

Beispiel 16: Fahrdynamiksystem gemäß einem der vorhergehenden Beispiele, wobei
die zentrale Steuereinheit (M-ECU_{Domäne}) dazu eingerichtet ist, das Basisbremsmoment und das geregelte zusätzliche Bremsmoment in Abhängigkeit von der Fahrzeugverzögerung und/oder in Abhängigkeit von einem Reibwert der Fahrbahn auf das zumindest eine Bremsaggregat (EMB, EHB) und den zumindest einen elektrischen Traktionsmotor (TM1, TM2, TM3, TM4) zu verteilen; wobei
- insbesondere bei kleinerer Verzögerung und/oder kleinerem Reibwert, beispielsweise bei einer ABS-Regelung auf Schnee oder Eis oder bei einer Verzögerung in einem ACC-Bremsbetrieb, ein elektromotorisches Bremsaggregat (EMB) und/oder der zumindest eine elektrische Traktionsmotor (TM1, TM2, TM3, TM4) das geregelte zusätzliche Bremsmoment erzeugt; wobei
- insbesondere bei größerer Verzögerung und/oder größerem Reibwert, beispielsweise bei einer Bremsung auf Asphalt, ein elektrohydraulisches Bremsaggregat (EHB) das geregelte zusätzliche Bremsmoment erzeugt; wobei
- insbesondere bei mittlerer Verzögerung und/oder mittlerem Reibwert das Bremsaggregat (EHB, EMB) oder der Traktionsmotor (TM1, TM2, TM3, TM4) das Basisbremsmoment als konstantes Bremsmoment erzeugt und ein weiteres Bremsaggregat (EMB, EHB) oder der Traktionsmotor (TM1, TM2, TM3, TM4) das geregelte zusätzliche Bremsmoment erzeugt.

Beispiel 17: Fahrdynamiksystem gemäß einem der vorhergehenden Beispiele, wobei
die zentrale Steuereinheit (M-ECU_{Domäne}) dazu eingerichtet ist, bei einer automatische Notbremsung (AEB) eine EBV-Regelung auszuführen; wobei
die Bremsmomentgradienten des zumindest einen Bremsaggregats (EMB, EHB) und des zumindest einen elektrischen Traktionsmotors (TM1, TM2, TM3, TM4) so berücksichtigt werden, dass an der Vorderachse (VA) und an der Hinterachse (HA) des Fahrzeugs das maximale Bremsmoment gleichzeitig erreicht wird.

Beispiel 18: Fahrdynamiksystem gemäß einem der vorhergehenden Beispiele, wobei
beim regenerativen Abbremsen, insbesondere bei einem vollem Ladezustand einer Batterie des Fahrzeugs, zumindest eine der folgenden Strategien verwendet wird:
- Rückspeisen der regenerierten Energie in die Batterie bis zur Grenze der Leistungsaufnahme;
- feldorientierte Regelung (Id/Iq-Stromregelung) des elektrischen Traktionsmotors derart, dass die Energie im Motor intern vernichtet wird;
- Vernichten der durch den elektrischen Traktionsmotor (TM1, TM2, TM3, TM4) im generatorischen Betrieb gewonnenen Energie, Bereitstellen der gewonnenen Energie für einen elektrischen Verbraucher des Fahrzeugs und/oder Erwärmen eines Fluidreservoirs zur Nutzung mit einer Wärmepumpe für eine Kühlung oder Heizung; und/oder
- Verwenden eines elektrischen Zwischenspeichers, der für Impulsleistung ausgelegt ist, beispielsweise eines Super-Cap.

Beispiel 19: Fahrdynamiksystem gemäß einem der vorhergehenden Beispiele, wobei
der zumindest eine elektrische Traktionsmotor (TM1, TM2, TM3, TM4) mit einem Inverter zum Schalten von Wicklungen des zumindest einen elektrischen Traktionsmotors (TM1, TM2, TM3, TM4) in Reihenschaltung oder Parallelschaltung von jeweils drei Strängen der Erregerspulen des bürstenlosen Elektromotors betrieben wird; wobei
- insbesondere mittels des Inverters ein 4-Quadrantenbetrieb ermöglicht wird, nämlich mit einem Quadrant 1 mit positiver Drehzahl und positivem Drehmoment des Elektromotors, einem Quadrant 2 mit positiver Drehzahl und negativem Drehmoment des Elektromotors; einem Quadrant 3 mit negativer Drehzahl und positivem Drehmoment des Elektromotors, sowie einem Quadrant 4 mit negativer Drehzahl und negativem Drehmoment des Elektromotors.

Beispiel 20: Fahrdynamiksystem gemäß einem der vorhergehenden Beispiele, wobei
die zentrale Steuereinheit (M-ECU_{Domäne}) dazu eingerichtet ist, die Bremssteuerung anhand eines Kennfeldes durchzuführen; wobei
- insbesondere das Kennfeld eine Druck-Volumen-Kennlinie, einen Zusammenhang zwischen Motorstrom und Bremsdruck und/oder einen Zusammenhang zwischen Bremsdruck und/oder Verzögerung bei Erwärmung der Radbremse abbildet.

Beispiel 21: Fahrdynamiksystem gemäß einem der vorhergehenden Beispiele, wobei
die zentrale Steuereinheit (M-ECU_{Domäne}) dazu eingerichtet ist, im Fahrzeugbetrieb, insbesondere in einem Zustand nach Fahrzeugerstinbetriebnahme, etwa in einem Fahrbetrieb oder bei Stillstand vor oder nach einem Fahrbetrieb, Sensordaten zu erfassen und anhand der erfassten Sensordaten mittels eines Verfahrens der künstlichen Intelligenz, insbesondere Maschinenlernen oder neuronale Netze, die Steuerung der Bremsfunktion anzupassen; wobei
- insbesondere das Verfahren der künstlichen Intelligenz mittels eines Rechners der zentralen Steuereinheit (M-ECU_{Domäne}) ausführbar ist; wobei
- insbesondere das Anpassen in einem sicheren Zustand der Fahrzeugs ausgeführt wird, insbesondere in einem abgestellten Zustand des Fahrzeugs; wobei
- insbesondere anhand der erfassten Sensordaten ein Kennfeld bestimmt wird, das beispielsweise eine Druck-Volumen-Kennlinie, einen Zusammenhang zwischen Motorstrom und Bremsdruck und/oder einen Zusammenhang zwischen Bremsdruck und/oder Verzögerung bei Erwärmung der Radbremse abbildet; wobei
- insbesondere das Kennfeld anhand der Sensordaten und des Verfahrens der künstlichen Intelligenz adaptierbar ist, wenn eines Abweichung von dem aktuellen Kennfeld erkannt wird, etwa wegen Umwelteinflüssen, Luft im System oder wegen einer Erwärmung der Radbremse.

Beispiel 22: Fahrdynamiksystem für ein Fahrzeug, umfassend
- zumindest einen elektrischen Traktionsmotor (TM1, TM2, TM3, TM4), der dazu ansteuerbar ist, ein regeneratives Bremsmoment für zumindest ein Rad oder eine Achse des Fahrzeugs zu erzeugen; und
- eine zentrale Steuereinheit (M-ECU_{Domäne}), die dazu eingerichtet ist, den zumindest einen elektrischen Traktionsmotor (TM1, TM2, TM3, TM4) für eine Bremsfunktion anzusteuern;
die zentrale Steuereinheit (M-ECU_{Domäne}) dazu eingerichtet ist, die Bremsfunktion bei einer Bremsung auf einer Fahrbahn mit einem Niedrigreibwert, insbesondere bei Schnee, Eis und/oder nasser Fahrbahn, mit geringen bis moderaten Verzögerungen, insbesondere von weniger als 0,5 m/s² auszuführen;
- wobei insbesondere die zentrale Steuereinheit (M-ECU_{Domäne}) dazu eingerichtet ist, die Bremsfunktion mittels zumindest eines Traktionsmotors zumindest einer Achse des Fahrzeugs auszuführen, insbesondere mittels zweier Traktionsmotoren der Hinterachse des Fahrzeugs.

Beispiel 23: Fahrzeug mit einem Fahrdynamiksystem gemäß einem der vorhergehenden Beispiele.

Beispiel 24: Verfahren zum Betreiben eines Fahrdynamiksystems mit zumindest einem Bremsaggregat (EMB, EHB) zum Erzeugen eines dissipativen Bremsmoments und zumindest einem elektrischen Traktionsmotor (TM1, TM2, TM3, TM4) zum Erzeugen eines regenerativen Bremsmoments für zumindest ein Rad oder eine Achse des Fahrzeugs, und eine zentrale Steuereinheit (M-ECU_{Domäne}) zum Ansteuern des zumindest einen Bremsaggregats (EMB, EHB) und des zumindest einen elektrischen Traktionsmotors (TM1, TM2, TM3, TM4) für eine Bremsfunktion, wobei bei dem Verfahren:
- ein kombiniertes Bremsmoment mittels des zumindest einen Bremsaggregats (EMB, EHB) und des zumindest einen elektrischen Traktionsmotors (TM1, TM2, TM3, TM4) erzeugt wird; wobei
- die Bremsfunktion einen Regelfall betrifft, bei dem gleichzeitig ein Basisbremsmoment und ein geregeltes zusätzliches Bremsmoment gesteuert und/oder geregelt wird; wobei
- optional das zumindest eine Bremsaggregat (EMB, EHB) dazu angesteuert wird, ein Basisbremsmoment zu erzeugen, und der zumindest eine elektrische Traktionsmotor (TM1, TM2, TM3, TM4) dazu angesteuert wird, das geregelte zusätzliche Bremsmoment zu erzeugen;
   oder
- der zumindest eine elektrische Traktionsmotor (TM1, TM2, TM3, TM4) dazu angesteuert wird, das Basisbremsmoment zu erzeugen, und das zumindest eine Bremsaggregat (EMB, EHB) dazu angesteuert wird, das geregelte zusätzliche Bremsmoment zu erzeugen;
   oder
- das zumindest eine Bremsaggregat (EMB, EHB) und der zumindest eine elektrische Traktionsmotor (TM1, TM2, TM3, TM4) dazu angesteuert werden, jeweils gemeinsam das Basisbremsmoment und das geregelte zusätzliche Bremsmoment zu erzeugen.

## Patentansprüche

1. Fahrdynamiksystem für ein Fahrzeug mit elektrischem Antrieb, umfassend:
- zumindest einen elektrischen Traktionsmotor (TM1-TM4), der zum Antreiben und regenerativen Bremsen eingerichtet ist, insbesondere zwei Traktionsmotoren an unterschiedlichen Achsen oder radindividuelle Traktionsmotoren (TM1-TM4);
- Radbremsen (RB1-RB4) und ein elektrohydraulisches oder elektromechanisches Bremsaggregat (EHB, EMB), das zur radindividuellen Einstellung der Bremsmomente eingerichtet ist; sowie
- eine zentrale Steuereinheit (M-ECU_{Domäne}), die mit einem Motor-Steuergerät (ECU-TM1 - ECU-TM4) des zumindest einen elektrischen Traktionsmotors (TM1-TM4) und mit einem Bremsaggregat-Steuergerät (S-ECU_{Achse}, S-ECU_{Rad}) des Bremsaggregats (EHB, EMB) gekoppelt ist; wobei
die zentrale Steuereinheit (M-ECU_{Domäne}) eingerichtet ist,
- zur Stabilisierung des Fahrzeuges oder ergänzend zu einem Lenkeingriff kombinierte Giermomenteingriffe mittels radindividueller Bremsmomenteingriffe zu regeln, und hierzu
- radindividuelle Soll-Bremsmomente zu bestimmen und an das Motor-Steuergerät (ECU-TM1 - ECU-TM4) und an das Bremsaggregat-Steuergerät (S-ECU_{Achse}, S-ECU_{Rad}) zu übertragen, derart, dass das Bremsmoment des zumindest einen Traktionsmotors (TM1-TM4) und das Bremsmoment des Bremsaggregats (EHB, EMB) synchronisiert geregelt werden.

2. Fahrdynamiksystem gemäß Anspruch 1,
**dadurch gekennzeichnet, dass**
die zentrale Steuereinheit dazu eingerichtet ist, bei Ausfall einer Lenkung, insbesondere einer elektrischen Servolenkung (EPS), ein Giermoment über die unterschiedlich verteilten Bremsmomente des oder der Traktionsmotoren und/oder des Bremsaggregats (EHB, EMB) zu erzeugen.

3. Fahrdynamiksystem gemäß Anspruch 2,
**dadurch gekennzeichnet, dass**
eine redundante Rückfallebene vorgesehen ist, nämlich
(i) ein redundant ausgeführtes Bremsaggregat (EHB, EMB), insbesondere mit redundanten Wicklungen und/oder Elektroniken, zur radindividuellen Bremsmomentverteilung; und/oder
(ii) radindividuelle Traktionsmotoren für die Räder.

4. Fahrdynamiksystem gemäß einem der vorhergehenden Ansprüche,
**dadurch gekennzeichnet, dass**
die zentrale Steuereinheit (M-ECU_{Domäne}) dazu eingerichtet ist, die Kernfunktionen Antiblockiersystem, ABS, Antischlupfregelung, ASR, elektronisches Stabilitätsprogramm, ESP, und elektronische Bremskraftverteilung, EBV, sowie ein rekuperatives Bremsenmanagement umzusetzen; wobei
das Bremsaggregat-Steuergerät (S-ECU_{Achse}, S-ECU_{Rad}) dazu eingerichtet ist, die empfangenen Soll-Bremsmomente lediglich auszuführen und auf die Bremsaggregate des Rades oder der Achse aufzuteilen.

5. Fahrdynamiksystem gemäß einem der vorhergehenden Ansprüche,
**dadurch gekennzeichnet, dass**
das Bremsaggregat als elektrohydraulisches Bremsaggregat (EHB) ausgebildet ist; und
die zentrale Steuereinheit (M-ECU_{Domäne}) dazu eingerichtet ist, das regenerative Bremsmoment des zumindest einen Traktionsmotors (TM1-TM4) und das dissipative Bremsmoment des Bremsaggregats (EHB) derart kombiniert anzusteuern, dass das regenerative Bremsmoment den hydraulischen Druckbedarf des Bremsaggregats (EHB) reduziert, sodass das Bremsaggregat (EHB) auf einen Maximaldruck von höchstens 140 bar, insbesondere von 120 bis 140 bar, ausgelegt ist.

6. Fahrdynamiksystem gemäß einem der vorhergehenden Ansprüche,
**dadurch gekennzeichnet, dass**
das Bremsaggregat als elektrohydraulisches Bremsaggregat (EHB) ausgebildet ist; und
die zentrale Steuereinheit (M-ECU_{Domäne}) dazu eingerichtet ist, im Regelbetrieb mittels des zumindest einen Traktionsmotors (TM1-TM4) ein Basisbremsmoment so zu erzeugen, dass der für die Bremsmomentregelung erforderliche Druck des Bremsaggregats (EHB) verringert ist; wobei
das elektrohydraulische Bremsaggregat (EHB) auf einen Maximaldruck von 120 bis 140 bar ausgelegt ist oder, wenn 50 % des Basisbremsmoments über den Traktionsmotor (TM1-TM4) erzeugt werden, 70 bis 80 bar.

7. Fahrdynamiksystem gemäß einem der Ansprüche 1 bis 4,
**dadurch gekennzeichnet, dass**
das Bremsaggregat als elektromechanisches Bremsaggregat (EMB) ausgebildet ist; und
die zentrale Steuereinheit (M-ECU_{Domäne}) dazu eingerichtet ist, im ABS-Regelbetrieb mittels des zumindest einen Traktionsmotors (TM1-TM4) ein Basisbremsmoment so zu erzeugen, dass die von dem elektromechanischen Bremsaggregat (EMB) erzeugte Verzögerung entsprechend dem Basisbremsmoment reduziert ist; wobei
das elektromechanische Bremsaggregat (EMB) auf das maximale Bremsmoment ohne Erwärmung zuzüglich einer Reserve von 20 bis 40 % ausgelegt ist.

8. Fahrdynamiksystem gemäß einem der vorhergehenden Ansprüche,
**dadurch gekennzeichnet, dass**
die zentrale Steuereinheit (M-ECU_{Domäne}) dazu eingerichtet ist, bei Ausfall einer Radbremse über die Traktionsmotoren ein Giermoment zu regeln.

9. Fahrdynamiksystem gemäß einem der vorhergehenden Ansprüche,
**dadurch gekennzeichnet, dass**
zwei elektrische Traktionsmotoren (TM1, TM2) an einer Hinterachse des Fahrzeugs vorgesehen sind und die zentrale Steuereinheit (M-ECU_{Domäne}) dazu eingerichtet ist,
- bei Ausfall beider Traktionsmotoren (TM1, TM2) der Hinterachse die Bremsmomentregelung achsweise über das Bremsaggregat (EHB, EMB) durchzuführen und Lenkungseingriffe über eine Ansteuerung einer elektrischen Servolenkung (EPS) vorzunehmen, und/oder
- bei Ausfall nur eines der beiden Traktionsmotoren (TM1, TM2) Lenkungseingriffe über den noch aktiven Traktionsmotor vorzunehmen.

10. Fahrdynamiksystem gemäß einem der Ansprüche 1 bis 6, 8 oder 9,
**dadurch gekennzeichnet, dass**
zur Sicherstellung der Lenkbarkeit an der Vorderachse eine 2-Kanal-ABS-Funktion vorgesehen ist; wobei
insbesondere ein Trennventil zwischen Vorderachse und Hinterachse vorgesehen ist und die Druckregelung mit Druckaufbau und Druckabbau über Schaltventile erfolgt; wobei
die Schaltventile insbesondere derart ausgeführt sind, dass der Ventilsitz an die Radbremse angeschlossen ist.

11. Fahrdynamiksystem gemäß einem der vorhergehenden Ansprüche,
**dadurch gekennzeichnet, dass**
die zentrale Steuereinheit (M-ECU_{Domäne}) dazu eingerichtet ist, bei einer Geschwindigkeit des Fahrzeugs von über 80 km/h für eine Bremsung im Normalbetrieb den oder die Traktionsmotoren (TM1-TM4) zum regenerativen Abbremsen anzusteuern, wobei bei dem regenerativen Abbremsen gleichzeitig eine elektronische Bremskraftverteilung an Vorderachse und Hinterachse realisiert wird, insbesondere so dass 20-40 % eines Gesamtbremsmoments an der Hinterachse und 60-80 % des Gesamtbremsmoments an der Vorderachse des Fahrzeugs wirken.

12. Fahrdynamiksystem gemäß einem der vorhergehenden Ansprüche,
**dadurch gekennzeichnet, dass**
je Achse ein gemeinsamer oder je Rad ein eigener elektrischer Traktionsmotor (TM1-TM4) vorgesehen ist, wobei insbesondere Traktionsmotor und Bremse zu einem Achs- oder Radmodul integriert sind.

13. Fahrdynamiksystem gemäß einem der vorhergehenden Ansprüche,
**dadurch gekennzeichnet, dass**
die elektrischen Traktionsmotoren (TM1-TM4) als bürstenlose Elektromotoren mit Invertern in einem 4-Quadranten-Betrieb betreibbar sind.

14. Verfahren zum Betreiben eines Fahrdynamiksystems für ein Fahrzeug mit zumindest einem zum Antreiben und regenerativen Bremsen eingerichteten Traktionsmotor (TM1-TM4), einer Radbremse und einem Bremsaggregat (EHB, EMB) mit radindividueller Bremsmomentregelung und einer zentralen Steuereinheit (M-ECU_{Domäne}); wobei
zur Stabilisierung des Fahrzeuges oder ergänzend zu einem Lenkeingriff kombinierte Giermomenteingriffe mittels radindividueller Bremsmomenteingriffe geregelt werden, wobei
die zentrale Steuereinheit (M-ECU_{Domäne}) radindividuelle Soll-Bremsmomente bestimmt und an ein Motor-Steuergerät (ECU-TM1 - ECU-TM4) des zumindest einen elektrischen Traktionsmotors (TM1-TM4) und an ein Bremsaggregat-Steuergerät (S-ECU_{Achse}, S-ECU_{Rad}) des Bremsaggregats (EHB, EMB) derart überträgt, dass das Bremsmoment des zumindest einen Traktionsmotors (TM1-TM4) und das Bremsmoment des Bremsaggregats (EHB, EMB) synchronisiert geregelt werden.

15. Fahrzeug mit einem Fahrdynamiksystem gemäß einem der Ansprüche 1 bis 13.
